(19) Europäisches Patentamt
European Patent Office
Office européen des brevets

(11) EP 4 521 485 A1

(12) **EUROPEAN PATENT APPLICATION**

(43) Date of publication:
**12.03.2025 Bulletin 2025/11**

(21) Application number: **24197862.6**

(22) Date of filing: **02.09.2024**

(51) International Patent Classification (IPC):
***H01M 4/133*** (2010.01) ***H01M 4/134*** (2010.01)
***H01M 4/587*** (2010.01) ***H01M 10/0525*** (2010.01)
***H01M 10/0562*** (2010.01)

(52) Cooperative Patent Classification (CPC):
**H01M 10/0562; H01M 4/133; H01M 4/134; H01M 4/587; H01M 10/0525;** H01M 2004/021; H01M 2004/027; H01M 2300/0068

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **08.09.2023 KR 20230119616**

(71) Applicant: **SAMSUNG SDI CO., LTD.**
**Yongin-si, Gyeonggi-do 17084 (KR)**

(72) Inventors:
- **KIM, Kyounghwan**
**16678 Suwon-si (KR)**
- **SHIN, Jaeho**
**16678 Suwon-si (KR)**
- **LEE, Yonggun**
**16678 Suwon-si (KR)**

(74) Representative: **Elkington and Fife LLP**
**Prospect House**
**8 Pembroke Road**
**Sevenoaks, Kent TN13 1XR (GB)**

(54) **ANODE-SOLID ELECTROLYTE SUB-ASSEMBLY FOR SOLID SECONDARY BATTERY, SOLID SECONDARY BATTERY INCLUDING THE SAME, AND METHOD OF MANUFACTURING THE SOLID SECONDARY BATTERY**

(57) An anode-solid electrolyte sub-assembly, a solid secondary battery including the same, and a method of manufacturing the solid secondary battery, wherein the anode-solid electrolyte sub-assembly includes an anode and a solid electrolyte, wherein the anode includes an anode current collector, a first anode active material layer disposed adjacent to the solid electrolyte and including a first anode active material, and a carbon-based material-containing layer disposed between the first anode active material layer and the anode current collector and containing a porous carbon structure, a porosity of the carbon-based material-containing layer is greater than a porosity of the first anode active material layer, and an average pore size of the porous carbon structure in the carbon-based material-containing layer is greater than an average pore size of the first anode active material in the first anode active material layer or an average pore size of the carbon-containing layer is greater than an average pore size of the first anode active material layer..

FIG. 1A

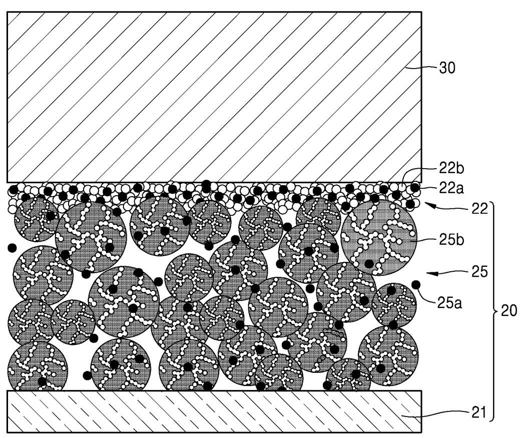


EP 4 521 485 A1

## Description

FIELD OF THE INVENTION

The disclosure relates to an anode-solid electrolyte sub-assembly for a solid secondary battery, a solid secondary battery including the same, and a method of manufacturing the solid secondary battery.

BACKGROUND OF THE INVENTION

Solid secondary batteries with solid electrolytes may provide a safer alternative to lithium ion batteries that use flammable organic electrolytes. For example, flammable organic solvents are generally not used in solid secondary batteries, accordingly when a short circuit occurs, the possibility of fires or explosions may be reduced.

In order to increase the energy density of solid secondary batteries, a precipitated anode has been proposed in which a material that forms an alloy or complex with lithium is disposed between the anode and the solid electrolyte and used as a protective layer for lithium metal. During charging of such solid secondary batteries, as lithium is moved between an anode current collector and a protective layer and precipitated, the thickness of the anode is changed. As a result, stress and strain may occur inside a battery, which may deteriorate battery driving characteristics.

There remains a need to develop a strain-free anode that prevents the thickness or pressure of a battery from changing even when lithium is precipitated during charging.

SUMMARY OF THE INVENTION

An aspect provides an anode-solid electrolyte sub-assembly for a solid secondary battery in which, after charging or discharging, a change in thickness of a battery thickness is suppressed, and a change in internal stress is decreased.

Another aspect provides a solid secondary battery including the anode-solid electrolyte sub-assembly to have improved cell performance, and a method of manufacturing the same.

Additional aspects will be set forth in part in the description which follows and, in part, will be apparent from the description, or may be learned by practice of the presented embodiments of the disclosure.

According to an aspect, there is provided an anode-solid electrolyte sub-assembly including an anode and a solid electrolyte, wherein the anode includes an anode current collector, a first anode active material layer disposed adjacent to the solid electrolyte and including a first anode active material, and a carbon -containing layer disposed between the first anode active material layer and the anode current collector and containing a porous carbon structure, a porosity of the carbon- containing layer is greater than a porosity of the first anode active material layer, and an average pore size of the porous carbon structure in the carbon-based material-containing layer is greater than an average pore size of the first anode active material in the first anode active material layer or an average pore size of the carbon-containing layer is greater than an average pore size of the first anode active material layer..

Proposed is an anode for all-solid-state battery with multilayer structure comprising microsized porous carbon layer and nanosized carbon/metal composite layer.

Proposed concepts may be applied to a battery, among all-solid-state batteries, using a precipitating anode wherein Li is precipitated, for example, to a precipitating all-solid-state battery using a sulfide all-solid-state electrolyte. Proposals may also be applied to devices using batteries as a power source.

In proposed embodiments, as a Li carrier, a micro-sized porous carbon and a nano-sized carbon/metal mixture (AgC) layer may be formed in multilayers, wherein Li is smoothly passed through the first layer portion (AgC) and precipitated in an inner pore and a micro-sized interparticle pore of the second layer portion (porous carbon). A proposed multilayer structured anode wherein a porous carbon layer including the inner pore and the interparticle pore between the current collector and the nanocarbon/metal (AgC) layer exists, Li may pass through the solid electrolyte and Li that has evenly passed through the AgC may be precipitated without an additional increase in pressure.

According to an exemplary aspect, there may be provided an all-solid-state battery including a bipolar current collector, a cathode, a solid electrolyte, a anode, and a anode current collector, wherein the anode includes an anode current collector and a anode active material, and wherein the anode includes multilayers according to a shape of a carbon, wherein a first layer touching the electrolyte is a mixed layer of a carbon particle and AgNP, a second layer below the first layer is a mixed layer of porous carbon, having micro sized particles, and AgNP, and the current collector is below the second layer. The carbon:AgNP mixture ratio of the first layer and the second layer each may vary, such as 0:1, 1:2, 1:3, 1:4, or 1:5. The carbon of the first layer may have a particle size of 10 nm to 200 nm. The carbon of the second layer may have a particle size of 0.5 μm to 10μm and has a pore of 10 nm to 200 nm inside.

The porosity of the carbon-containing layer may be about 1 % to about 81 % and the porosity of the first anode active material layer is about 1 % to about 40 %.

An interparticle porosity of the carbon-containing layer may be about 1 % to about 40 %, and an intraparticle porosity of the carbon-containing layer is about 1 % to about 80 %.

An average particle size of the porous carbon structure in the carbon-containing layer may be greater than an average particle size of the first anode active material in the first anode active material layer.

An average particle size of the porous carbon structure may be about 0.5 micrometer (μm) to about 10 μm, and an average particle size of the first anode active material is about 10 nanometers (nm) to about 200 nm.

An average internal pore size of the porous carbon structure in the carbon-containing layer may be about 10 nm to about 200 nm, and an average interparticle pore size of the porous carbon structure may be about 10 nm to about 1 μm.

The carbon-containing layer may include at least one selected of a first metal anode active material, or a first metalloid anode active material, and the first metal or first metalloid anode active material may include gold, platinum, palladium, silicon, silver, aluminum, bismuth, tin, zinc, or a combination thereof.

A weight ratio of a weight of the porous carbon structure of the carbon-containing layer to a weight of the at least one of the first metal anode active material or the first metalloid anode active material may be about 1:1 to about 5:1.

A thickness ratio of a thickness of the first anode active material layer to a thickness of the carbon-containing layer may be about 1:1 to about 1:20.

The anode-solid electrolyte sub-assembly may include a lithium-precipitation layer disposed between the first anode active material layer and the solid electrolyte, between the anode current collector and the carbon-containing layer, or a combination thereof.

The first anode active material layer may comprise at least one of a carbon-containing anode active material, a second metal anode active material, or a second metalloid anode active material, wherein the carbon-containing anode active material may comprise amorphous carbon, crystalline carbon, porous carbon, or a combination thereof, and the second metal or second metalloid anode active material may comprise gold, platinum, palladium, silicon, silver, aluminum, bismuth, tin, zinc, or a combination thereof.

The porous carbon structure in the carbon-containing layer may comprise amorphous carbon.

The first anode active material layer may comprise a carbon-based anode active material and a metal, and the carbon-containing layer may comprise the porous carbon structure.

A solid secondary battery includes a cathode; and the anode-solid electrolyte sub-assembly, wherein the solid electrolyte of the anode-solid electrolyte sub-assembly may be disposed between the cathode and the anode.

A volume of the battery at a state of charge (SOC) of 100% may be within 10% of a volume of the battery at a SOC of 0%.

The solid electrolyte may comprise a sulfide solid electrolyte, an oxide solid electrolyte, a polymer solid electrolyte, a gel electrolyte, or a combination thereof, and the gel electrolyte may comprise a polymer gel electrolyte.

The cathode may comprise a cathode current collector, at least one of the cathode current collector and the anode current collector may comprise a base film and a metal layer disposed on a surface of the base film, the base film may comprise a polymer, wherein the polymer may comprise polyethylene terephthalate, polyethylene, polypropylene, polybutylene terephthalate, polyimide, or a combination thereof, and the metal layer may comprise indium, copper, magnesium, stainless steel, titanium, iron, cobalt, nickel, zinc, aluminum germanium, lithium, or an alloy thereof.

The porous carbon structure in the carbon- containing layer may include porous carbon, ordered mesoporous carbon (OMC), a hybrid carbon structure, a double porous carbon structure, or a combination thereof.

An electrode density of the anode may be about 0.5 grams per cubic centimeter ($g/cm^3$) to about 1.5 $g/cm^3$.

Lithium, a lithium alloy, or a combination thereof precipitated in pores of the porous carbon may be contained.

According to another embodiment, the carbon- containing layer may comprise hard carbon in the form of secondary particles that are aggregates of primary particles, and have an average particle diameter (D50) of about 500 nm to about 100 μm.

The electrode density of the anode may be about 0.5 $g/cm^3$ to about 1.5 $g/cm^3$, a thickness of the carbon-containing layer may be about 1 μm to about 100 μm, about 1 μm to about 80 μm, about 5 μm to about 50 μm, about 10 μm to about 50 μm, or about 10 μm to about 30 μm, and a thickness of the first anode active material layer may be about 1 μm to about 20 μm, about 1 μm to about 10 μm, about 1 μm to about 9 μm, or about 2 μm to about 8 μm.

The porous carbon structure may have a D10 of about 0.1 μm to about 0.4 μm, a D50 of about 1.3 μm to about 1.8 μm, a D90 of about 4 μm to about 5 μm, a specific surface area of about 83 $cm^2/g$ to about 600 $cm^2/g$, a pore size of about 90 nm to about 130 nm, a pore volume of about 0.25 $cm^2/g$ to about 0.45 $cm^2/g$, and a bulk density of about 0.13 $g/cm^3$ to about 2.3 $g/cm^3$. A conductivity of the porous carbon structure may be greater than 0.1 S/cm.

The carbon- containing layer may include a binder.

The first anode active material layer may include an anode active material and a binder, the anode active material may have a particle form, and an average particle diameter of the anode active material may be 4 μm or less.

According to another aspect, there is provided a solid secondary battery including a cathode and the anode-solid electrolyte sub-assembly, wherein the solid electrolyte of the anode-solid electrolyte sub-assembly is disposed between the cathode and the anode.

A thickness of the carbon- containing layer may be greater than 50 % of a thickness of a cathode active material layer or the solid electrolyte.

According to another aspect, there is provided a method of manufacturing a solid secondary battery, the method including coating an anode current collector with a composition including i) a porous carbon structure or ii) the porous carbon structure and at least one of a first metal anode active material or a first metalloid anode active material to provide a layer on the anode current collector; drying the layer to form a carbon-containing layer including a porous carbon structure and provide a stack including the anode current collector and the carbon- containing layer,

coating the stack with a composition for forming a first anode active material layer, the composition including a carbon-based anode active material and at least one of a second metal anode active material or a second metalloid anode active material to provide a coating on the stack; and drying the coating on the stack to provide the first anode active material layer disposed on the stack,
preparing a solid electrolyte;
preparing a cathode;
disposing the solid electrolyte on the first anode active material layer to provide an anode-solid electrolyte sub-assembly; and disposing the cathode on the solid electrolyte of the anode-solid electrolyte sub-assembly to manufacture the solid secondary battery.

A binder may be added to the composition containing the porous carbon. The composition for forming the first anode active material layer may include a binder.

In the carbon- containing layer, a volume of intraparticle pores (internal pores) of the porous carbon structure may be about 1 vol% to about 30 vol%, and a volume of interparticle pores of the porous carbon structure may be about 1 vol% to about 40 vol%.

The first anode active material layer may include a metal and a carbon-based anode active material, and a mixing weight ratio of the metal to the carbon-based anode active material may be about 1:1 to about 1:5

A method of manufacturing an anode-solid electrolyte sub-assembly includes coating an anode current collector with a composition including a porous carbon structure and optionally a first metal anode active material or a first metalloid anode active material to provide a layer on the anode current collector; drying the layer to form a carbon-containing layer including a porous carbon structure and provide a stack including the anode current collector and the carbon-containing layer; coating the stack with a composition for forming a first anode active material layer, the composition including a carbon-based anode active material and at least one of a second metal anode active material or a second metalloid anode active material to provide a coating on the stack; region, layer, or section from another drying the coating on the stack to provide a first anode active material layer disposed on the stack; preparing a solid electrolyte; and disposing the solid electrolyte on the first anode active material layer to provide an anode-solid electrolyte sub-assembly.

## BRIEF DESCRIPTION OF THE DRAWINGS

The above and other aspects, features, and advantages of certain embodiments will be more apparent from the following description taken in conjunction with the accompanying drawings, in which:

FIG. 1A is a cross-sectional view of an embodiment of an anode-solid electrolyte sub-assembly;
FIG. 1B is a cross-sectional view of an embodiment of an anode-solid electrolyte sub-assembly;
FIG. 2 is a schematic view of charging the anode-solid electrolyte sub-assembly of FIG. 1A;
FIGS. 3A to 3F show the results of scanning electron microscopy energy dispersive X-ray spectroscopy (SEM-EDS) analysis of an anode prepared according to Example 2, and FIG. 3B shows the results of SEM analysis of a first anode active material layer (AgCB) in the anode of FIG. 3A; FIG. 3C shows the results of SEM analysis of a carbon-containing layer (porous carbon) in the anode of FIG. 3A, and FIGS. 3D to 3F show the results of EDS analysis of the anode according to Example 2 and show mapping images of carbon, sulfur (S), and silver (Ag), respectively;
FIG. 3G shows the results of SEM analysis of an anode prepared according to Comparative Example 2;
FIGS. 4A and 4B show the results of SEM analysis of cross-sectional states of an anode before and after charging of a solid secondary battery prepared according to Example 1, respectively;
FIGS. 5A and 5B are graphs illustrating voltage (volts) versus area capacity (milliampere-hours per square centimeter) after a charging or discharging process of the solid secondary batteries of Example 1 and Comparative Example 2, respectively;
FIGS. 6A to 6F are graphs illustrating voltage (volts) and pressure (megapascals) versus time (seconds) after charging or discharging in solid secondary batteries of Example 1, Example 2, and Comparative Examples 1 and 3 to 5, respectively;
FIG. 7 is a graph illustrating the capacity retention ratio (percent) versus number of cycles of the solid secondary batteries of Example 1 and Example 2;

FIGS. 8A, 8B, 9A, 9B, and 10 are schematic diagrams of a structure of a solid secondary battery according to an embodiment;

FIGS. 11A and 11B are SEM images of porous carbon according to an embodiment; and

FIGS. 12A to 12C are schematic diagrams of a structure of a solid secondary battery according to another embodiment.

DETAILED DESCRIPTION

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects of the present description. As used herein, the term "and/or" includes any and all combinations of one or more of the associated listed items. Expressions such as "at least one of," when preceding a list of elements, modify the entire list of elements and do not modify the individual elements of the list.

Unless otherwise defined, all terms (including technical and scientific terms) used in the disclosure have the same meaning as commonly understood by one of ordinary skill in the art to which the disclosure belongs. In addition, it will be further understood that terms, such as those defined in commonly used dictionaries, should be interpreted as having a meaning that is consistent with their meaning in the context of the relevant art and the disclosure, and will not be interpreted in an idealized or overly formal sense unless expressly so defined herein.

Embodiments are described in the disclosure with reference to cross-sectional views which are schematic diagrams of idealized embodiments. As such, variations from the shapes of the illustrations as a result, for example, of manufacturing techniques and/or tolerances, are to be expected. Thus, the embodiments described in the disclosure should not be construed as limited to the particular shapes regions of illustrated in the disclosure but may include deviations in shapes that result, for example, from manufacturing. For example, regions illustrated or described as being flat may be typically rough and/or have nonlinear features. Moreover, sharp-drawn angles may be round. Thus, regions illustrated in the drawings are schematic in nature and their shapes are not intended to illustrate the actual shape of a region and are not intended to limit the scope of the claims.

The disclosure may, however, be embodied in different forms and should not be construed as limited to the embodiments described in the disclosure. These embodiments are provided so that the disclosure will be thorough and complete, and will fully convey the scope of the disclosure to those skilled in the art. Like reference numerals designate like elements.

When it is described that an element is "on" another element, it will be understood that the element may be disposed directly on another element or still another element may be interposed therebetween. On the other hand, when it is described that an element is "directly on" another element, still another element is not interposed therebetween.

It will be understood that, although the terms "first," "second," and "third" may be used in the disclosure to describe various elements, components, regions, layers, and/or sections, these elements, components, regions, layers, and/or sections should not be limited by these terms. These terms are only used to distinguish one element, component, region, layer, or section from another element, component, region, layer, or section. Thus, a first element, component, region, layer, or section described below may be termed a second element, component, region, layer, or section without departing from the teachings of the disclosure.

The term used in the disclosure is intended to describe only a specific embodiment and is not intended to limit the disclosure. As used herein, the singular forms "a," "an," and "the" are intended to include the plural forms, including "at least one," unless the content clearly indicates otherwise. "At least one" should not be construed as being limited to the singular. As used in the disclosure, the term "and/or" includes any and all combinations of one or more of the associated listed items. The terms "includes," "including," "comprises," and/or "comprising," when used in the detailed description, specify a presence of stated features, regions, integers, steps, operations, elements, and/or components, but do not preclude the presence or addition of one or more other features, regions, integers, steps, operations, elements, components, and/or groups thereof.

Spatially relative terms such as "beneath," "below," "lower," "above," and "upper" may be used herein to easily describe one element or feature's relationship to another element or feature. It will be understood that the spatially relative terms are intended to encompass different orientations of a device in use or operation in addition to the orientation illustrated in the drawings. For example, when a device in the drawings is turned over, elements described as "below" or "beneath" other elements or features would then be "above" or "over" the other elements or features. Thus, the example term "below" may encompass both orientations of above and below. The device may be otherwise oriented (rotated 90 degrees or at other orientations), and the spatially relative terms used in the disclosure may be interpreted accordingly.

"Group" refers to a group of the periodic table of the elements according to the International Union of Pure and Applied Chemistry ("IUPAC") Groups 1-18 group classification system.

In the disclosure, the term "particle diameter" refers to an average diameter when particles are spherical and refers to an average major axis length when particles are non-spherical. The average particle diameter and average major axis length represent the average values of the measured particle diameter and the measured major axis length, respectively. A particle diameter may be measured using a particle size analyzer (PSA). A "particle diameter" is, for example, an average particle diameter. An "average particle diameter" refers to, for example, a median particle diameter (D50).

D50 refers to a particle size corresponding to a 50 % cumulative volume when a particle size distribution measured through a laser diffraction method is calculated from particles having a smaller particle size. D90 refers to a particle size corresponding to a 90 % cumulative volume when a particle size distribution measured through a laser diffraction method is calculated from particles having a smaller particle size. D10 is the particle size corresponding to 10% of the cumulative volume calculated from the particle side with the small particle size in the particle size distribution measured by laser diffraction.

According to an embodiment, an average particle diameter and an average major axis length refer to an average value of measured particle diameters and an average value of measured major axis lengths, respectively. An average particle diameter and an average major axis length may be evaluated through image analysis using a scanning electron microscope (SEM) or transmission electron microscope. The average particle diameter may be, for example, an average particle diameter observed by using a SEM and may be calculated as an average value of diameters of about 10 to 30 particles by using a SEM image.

As used herein, a pore size refers to an average pore size. In an embodiment of the disclosure, a pore size may be measured by using a Brunauer-Emmett-Teller (BET) method or a SEM method. According to the SEM method, a pore size may be evaluated by using image analysis.

As used herein, the term "metal" includes all of metals and metalloids such as silicon and germanium in an elemental or ionic state, and the term "alloy refers to a mixture of two or more metals.

The term "electrode active material" as used herein refers to an electrode material that may undergo lithiation and delithiation. As used herein, the term "cathode active material" refers to a cathode material that may undergo lithiation and delithiation, and the term "anode active material" refers to an anode material that may undergo lithiation and delithiation.

As used herein, the terms "lithiation" and "lithiate" refer to a process of adding lithium to an electrode active material, and the terms "delithiattion" and "delithiate" refer to a process of removing lithium from an electrode active material.

As used herein, the terms "charge" and "charging" refer to a process of providing electrochemical energy to a battery, and the terms "discharge" and "discharging" refer to a process of removing electrochemical energy from a battery.

As used herein, the terms "positive electrode" and "cathode" refer to an electrode at which electrochemical reduction and lithiation occur during a discharging process, and the terms "negative electrode" and "anode" as used herein refer to an electrode at which electrochemical oxidation and delithiation occur during a discharging process.

As used herein, the terms "Intra-particle porosity" is defined herein as the ratio of the volume of pores within a particle to the total volume of the particle. Inter-particle porosity is the volume of pores between individual particles and is a function of both the size and shape of the individual particles and the packing density of the particles within a layer.

While specific embodiments have been described, alternatives, modifications, variations, improvements, and substantial equivalents that are or may be presently unforeseen may arise to applicants or others skilled in the art. In some embodiments, the appended claims as filed and as they may be amended are intended to embrace all such alternatives, modifications, variations, improvements, and substantial equivalents.

Hereinafter, an anode-solid electrolyte sub-assembly for a solid secondary battery, a solid secondary battery including the same, and a method of manufacturing the solid secondary battery according to an embodiment will be described in more detail with reference to the accompanying drawings. In the drawings, like reference numerals refer to like elements throughout, and the size, the thickness, or the like of each component in the drawings may be exaggerated for clarity and convenience of description. Meanwhile, embodiments set forth herein are merely examples and various changes may be made therein.

In the case of a precipitated anode in which a first anode active material layer including carbon and silver (Ag) is applied as an interlayer between an anode current collector and a solid electrolyte of a solid secondary battery, lithium may be precipitated between the first anode active material layer and the anode current collector.

Since the precipitation of lithium inevitably causes a change in thickness, a pressure inside a cell may be repeatedly changed, and strain and internal stress may be generated in a battery, which may adversely affect the driving characteristics of the battery. A change in pressure in a battery may cause a contact failure between a solid electrolyte and an active material at an electrode interface, which may cause the deterioration of the battery. Therefore, there is a need for a strain-free anode structure which, even when lithium accumulates during charging, prevents a change in thickness or pressure of a battery and of which internal stress is not generated.

Accordingly, in order to solve such a problem, the present inventors have formed a carbon- containing layer having a micro-sized porous carbon structure as a lithium support on an anode current collector and have positioned a first anode active material layer containing a nano-sized first anode active material on the carbon- containing layer to form an anode, wherein the first anode active material may contain, for example, a carbon-based anode active material.

An anode-solid electrolyte sub-assembly according to an embodiment may be an anode-solid electrolyte sub-assembly including an anode and a solid electrolyte, wherein the anode includes an anode current collector, a first anode active material layer disposed adjacent to the solid electrolyte and including a first anode active material, and a carbon-containing layer disposed between the first anode active material layer and the anode current collector and containing a porous carbon structure, a porosity of the carbon-containing layer is greater than a porosity of the first anode active material layer, and a pore size of the porous carbon structure in the carbon- containing layer is greater than a pore size of the first anode active material in the first anode active material layer or an average pore size of the carbon-containing layer is greater than an average pore size of the first anode active material layer..

As used herein, the term "pore size" refers to an average diameter when pores are spherical and refers to an average major axis length when pores are non-spherical. The average diameter and the average major axis length refer to an average value of measured diameters and an average value of measured major axis lengths, respectively. The average diameter and the average major axis length may be evaluated through image analysis using a SEM or transmission electron microscope. The average diameter may be, for example, an average particle diameter observed by using a SEM and may be calculated as an average value of diameters of about 10 to 30 pores by using a SEM image.

The porosity and pore size may undergo a pressing process in a process of manufacturing a solid secondary battery by using an anode-solid electrolyte sub-assembly and may maintain such ranges.

The anode-solid electrolyte sub-assembly according to an embodiment may include a structural anode capable of supporting precipitated lithium. Lithium may be stored in intraparticle pores (internal pores) or interparticle pores of the porous carbon structure, and the first anode active material layer containing the nano-sized carbon-based anode active material may assist lithium in uniformly moving, thereby suppressing the growth of lithium dendrites. In the anode-solid electrolyte sub-assembly according to an embodiment, the anode may be a strain-free anode, and such an anode may be used to manufacture a solid secondary battery that may be driven without a change in internal stress and has improved high-rate characteristics.

FIGS. 1A and 1B are cross-sectional views of an embodiment of an anode-solid electrolyte sub-assembly.

The anode-solid electrolyte sub-assembly may have a structure in which a solid electrolyte 30 is disposed on an anode 20 as shown in FIG. 1A.

The anode 20 may include a carbon- containing layer 25 containing at least one element 25a of a first metal anode active material or a first metalloid anode active material and a porous carbon structure 25b on an anode current collector 21, and a first anode active material layer 22 positioned on the carbon- containing layer 25.

The first anode active material layer 22 may include at least one element 22a of a second metal anode active material or a second metalloid anode active material and a carbon-based anode active material 22b.

The anode-solid electrolyte sub-assembly of FIG. 1B may be the same as the anode-solid electrolyte sub-assembly of FIG. 1A, except that the anode-solid electrolyte sub-assembly of FIG. 1B includes a carbon- containing layer 25 containing only a porous carbon structure 25b without at least one element 25a of the first metal anode active material or the first metalloid anode active material.

A porosity of the carbon- containing layer 25 may be about 1 % to about 81 %, about 1 % to about 75 %,, about 1 % to about 70 %, about 1 % to about 60 %, about 2 % to about 55 %, about 3 % to about 55 %, about 5 % to about 55 %, about 10 % to about 55 %, about 30 % to about 55%, about 40 % to about 55 %, about 45 % to about 55 %, or about 50 % to about 55 %, and a porosity of the first anode active material layer 22 may be about 1 % to about 40 %, about 3 % to about 40 %, about 5 % to about 40 %, about 10 % to about 40 %, about 20 % to about 40 %, about 30 % to about 40 %, about 32 % to about 40 %, about 33 % to about 40 %, or about 35 % to about 40 %.

In addition, the total porosity of the carbon- containing layer 25 and the first anode active material layer 22 may be about 1 % to about 55 %, about 1 % to about 50 %, about 10 % to about 50 %, about 15 % to about 50 %, about 20 % to about 50 %, about 30 % to about 50 %, about 40 % to about 50 %, about 45 % to about 50 %, or about 45 % to about 48 %. A unit of porosity may be, for example, vol%.

When the porosity of the carbon- containing layer 25, the porosity of the first anode active material layer 22, and the total porosity including the porosity of the carbon-containing layer and the porosity of the first anode active material layer are in such ranges, lithium may be stored in pores of the porous carbon structure 25b of the carbon-containing layer 25, during charging, a change in volume may be decreased, internal stress may be unchanged, and also the first anode active material layer 22 may be positioned between the carbon-containing layer 25 and a solid electrolyte to assist lithium in uniformly moving at an electrolyte/anode interface and suppress the growth of lithium dendrites, thereby manufacturing a solid secondary battery having improved high-rate, energy density, and lifespan characteristics.

An interparticle porosity of the carbon- containing layer 25 may be about 1 % to about 40 %, and an intraparticle porosity of the carbon- containing layer 25 may be selected in a range in which a framework of the porous carbon structure 25b is maintained and may be about 1 % to about 80 %, about 1 % to about 70 %, about 3 % to about 70 %, about 5 % to about 70 %, about 10 % to about 70 %, or about 10 % to about 56 %. According to another embodiment, an intraparticle porosity of the carbon-containing layer 25 may be selected in a range in which a framework of the porous carbon structure 25b is maintained and may be about 1 % to about 50 %. Here, % may refer to vol%. The intraparticle porosity of the carbon-containing layer 25 may be interpreted the same as the intraparticle porosity of the porous carbon structure 25b contained in the carbon-containing layer 25. When the above-described porosity is in such a range, lithium may be efficiently stored in intraparticle pores and interparticle pores of the porous carbon structure 25b during charging.

In the disclosure, porosity may be evaluated from a pore volume or a pore area through image analysis using SEM analysis or may be determined by Equation 1 below.

Equation 1

$$\text{porosity} = [1-(D/T)]\times 100\%$$

In Equation 1, D may denote a density of a layer to be measured, and a true density (T) may be the sum of true densities of all components constituting the layer to be measured.

In another embodiment, for example, porosity may be calculated from a pore volume.

In the carbon- containing layer 25 according to an embodiment, a volume of the intraparticle pores (internal pores) of the porous carbon structure 25b may be about 1 volume percent (vol%) to about 80 vol%, about 1 vol% to about 70 vol%, about 5 vol% to about 50 vol%, or about 5 vol% to about 30 vol%, and a volume of the interparticle pores of the porous carbon structure 25b may be about 1 vol% to about 40 vol%, about 5 vol% to about 30 vol%, or about 10 vol% to about 25 vol%. When the volume of the internal pores and the volume of the interparticle pores of the porous carbon structure 25b are in such ranges, the lithium storage ability of the carbon- containing layer 25 may be improved so that a change in volume during charging may be reduced and a change in internal stress may be reduced.

The volume of the interparticle pores may be evaluated through SEM image analysis and may also be evaluated according to Equation 2 below.

volume of interparticle pores (vol%) = porosity (vol%)-volume of intraparticle pores (vol%) equation 2

A particle size of the porous carbon structure 25b in the carbon- containing layer 25 may be greater than a particle size of a first anode active material in the first anode active material layer 22. The particle size of the porous carbon structure 25b may be about 0.5 micrometers (μm) to about 10 μm, about 1 μm to about 10 μm, about 2 μm to about 8 μm, or about 3 μm to about 6 μm, and the particle size of the first anode active material may be about 10 nanometers (nm) to about 200 nm, about 20 nm to about 180 nm, or about 30 nm to about 150 nm. When the particle size of the porous carbon structure 25b is smaller than the particle size of the first anode active material, it becomes difficult to sufficiently perform a lithium host function. As used herein, the term "particle size" refers to an average particle diameter when particles are spherical and refers to an average major axis length when particles are non-spherical.

A particle size of the porous carbon structure 25b may be 10 μm or less or about 0.5 μm to about 10 μm, about 1 μm to about 10 μm, about 2 μm to about 9 μm, about 2 μm to about 8 μm, about 3 μm to about 7 μm, or about 3 μm to about 5 μm, and the particle size of the first anode active material may be about 10 nm to about 200 nm, about 20 nm to about 200 nm, about 20 nm to about 180 nm, about 25 nm to about 170 nm, about 30 nm to about 160 nm, or about 30 nm to about 150 nm.

In the carbon- containing layer 25, the porous carbon structure 25b may include a plurality of pores in a structure, a size of the intraparticle pores (internal pores) of the porous carbon structure 25b may be about 10 nm to about 200 nm, about 30 nm to about 150 nm, or about 90 nm to about 130 nm, and a size of the interparticle pores of the porous carbon structure 25b may be about 10 nm to about 1um, 50 nm to about 1um, for example about 100 nm to about 500 nm. Here, a pore size refers to an average pore size. When the sizes of the intraparticle pores and interparticle pores are in such ranges, a lithium storage ability may be improved, thereby reducing a change in volume during charging and reducing a change in internal stress.

An average pore size of the carbon- containing layer 25 may be about 50 nm to about 200 nm, about 50 nm to about 180 nm, about 55 nm to about 150 nm, about 60 nm to about 150 nm, about 60 nm to about 100 nm, or about 70 nm to about 90 nm. A pore size of the carbon- -containing layer 25 may be about 5 nm to about 2 μm, about 8 nm to about 1.9 μm, about 10 nm to about 1.8 μm, about 10 nm to about 1.6 μm, about 10 μm to about 1.5 μm, or about 10 nm to about 1.0 μm. When the pore size of the carbon-containing layer 25 is in such a range, a lithium storage ability may be improved, thereby reducing a change in volume during charging and reducing a change in internal stress.

An average pore size of the first anode active material layer 22 may be about 30 nm to about 200 nm, about 35 nm to about 200 nm, about 40 nm to about 200 nm, about 45 nm to about 200 nm, about 45 nm to about 100 nm, about 48 nm to about 100 nm, or about 50 nm to about 90 nm. A pore size of the first anode active material layer 22 may be about 5 nm to about 1 μm, about 8 nm to about 1 μm, about 10 nm to about 1 μm, or about 10 nm to about 500 nm. When the pore size of the first anode active material layer 22 is in such a range, the growth of lithium dendrites may be suppressed by assisting in uniform movement of lithium.

As shown in FIGS. 1A, 1B, and 2, the porous carbon structure 25b may be a particle having pores therein. In the drawings, the porous carbon structure 25b is illustrated as having a spherical shape, but one or more embodiments are not limited to such a shape.

At least one of a first metal anode active material and a first metalloid anode active material may include tin (Sn), indium (In), silicon (Si), gallium (Ga), aluminum (Al), titanium (Ti), zirconium (Zr), niobium (Nb), germanium (Ge), antimony (Sb), bismuth (Bi), zinc (Zn), gold (Au), platinum (Pt), palladium (Pd), nickel (Ni), iron (Fe), cobalt (Co), chromium (Cr), magnesium (Mg), cesium (Cs), cerium (Ce), molybdenum (Mo), silver (Ag), sodium (Na), potassium (K), calcium (Ca), yttrium (Y), bismuth (Bi), tantalum (Ta), hafnium (Hf), barium (Ba), vanadium (V), strontium (Sr), tellurium (Te), lanthanum (La), or a combination thereof. For example, the at least one of a first metal anode active material or a first metalloid anode active material may include gold (Au), platinum (Pt), palladium (Pd), silicon (Si), silver (Ag), aluminum (Al), bismuth (Bi), tin (Sn), zinc (Zn), or a combination thereof.

A mixing weight ratio of the porous carbon structure 25b to at least one of the first metal anode active material or the first metalloid anode active material may be about 1:1 to about 5:1, about 1:1 to about 4:1, or about 1:1 to about 3:1. During charging and/or discharging of a battery, lithium may be moved and/or precipitated in the intraparticle pores and interparticle pores of the porous carbon structure 25b.

FIG. 2 illustrates that, when charging is performed in the anode-solid electrolyte sub-assembly of FIG. 1A, lithium 40 is precipitated and stored in intraparticle pores and interparticle pores of the carbon- containing layer 25 containing a porous carbon nanostructure. In addition to lithium, a lithium alloy may be present. In this way, lithium may be stored in the intraparticle internal pores and the interparticle internal pores of the carbon- containing layer 25 to reduce a change in internal stress, and lithium may be smoothly moved through the first anode active material layer (e.g., a AgC layer) to improve high-rate characteristics.

The total density of the carbon- containing layer 25 and the first anode active material layer 22 of the anode 20 may be about 0.5 grams per cubic centimeter (g/cm$^3$) to about 1.5 g/cm$^3$, about 0.8 g/cm$^3$ to about 1.3 g/cm$^3$, about 0.9 g/cm$^3$to about 1.2 g/cm$^3$, or about 1.0 g/cm$^3$to about 1.1 g/cm$^3$. When the anode 20 has such an electrode density, a solid secondary battery having improved high-rate, energy density, and lifespan characteristics may be manufactured.

A density of the first anode active material layer 22 may be controlled to be greater than a density of the carbon-containing layer 25.

The density of the first anode active material layer 22 may be about 1 g/cm$^3$ to about 2 g/cm$^3$, about 1 g/cm$^3$ to about 1.8 g/cm$^3$, about 1 g/cm$^3$ to about 1.5 g/cm$^3$, or about 1.1 g/cm$^3$ to about 1.5 g/cm$^3$, and the density of the carbon-containing layer 25 may be about 0.3 g/cm$^3$ to about 1.5 g/cm$^3$, about 0.3 g/cm$^3$ to about 1.2 g/cm$^3$, or about 0.4 g/cm$^3$ to about 1.1 g/cm$^3$. The total density of the first anode active material layer 22 and the carbon- containing layer 25 may be about 0.5 g/cm$^3$to about 1.5 g/cm$^3$, about 0.6 g/cm$^3$ to about 1.4 g/cm$^3$, about 0.7 g/cm$^3$ to about 1.4 g/cm$^3$, about 0.8 g/cm$^3$ to about 1.3 g/cm$^3$, or about 0.8 g/cm$^3$ to about 1.2 g/cm$^3$. When the densities of the first anode active material layer 22 and the carbon- containing layer 25 are in such ranges, lithium may be stored in the pores of the porous carbon structure 25b of the carbon- containing layer 25 to reduce a change in volume during charging, prevent a change in internal stress, and suppress the growth of lithium dendrites, thereby manufacturing a solid secondary battery having improved high-rate, energy density, and lifespan characteristics.

The carbon- containing layer 25 may include amorphous carbon, crystalline carbon, porous carbon, non-porous carbon, or a combination thereof. For example, the carbon- containing layer 25 may include carbon black (CB), acetylene black (AB), furnace black (FB), Ketjen black (KB), graphene, graphene oxide, reduced graphene oxide, a carbon fiber, carbon nanotubes (CNTs), carbon nanobelts, carbon paper, a carbon sheet, carbon foam, or a combination thereof.

The carbon- containing layer 25 may include, for example, carbon fiber cloth, a carbonized metal-organic framework (MOF), a carbonized porous MOF, graphene foam, carbon nanofibers (CNFs), hollow carbon nanocubes, a carbon core/shell array, a porous carbon flake, a carbon rod array, three-dimensional (3D) nanoporous graphene, crumpled graphene balls, metal oxide particle-containing graphene balls, carbon granules, a carbon fiber framework, a carbon matrix, or a combination thereof.

The porous carbon structure 25b in the carbon- containing layer 25 may be, for example, hard carbon among amorphous carbon. Hard carbon may contain more micropores and defects than crystalline graphite and amorphous soft carbon. As described above, the hard carbon may have many micropores and defects and thus may have an excellent lithium storage ability.

The carbon- containing layer 25 may include porous carbon, ordered mesoporous carbon (OMC), a hybrid structure, a double porous carbon structure, a mesoporous carbon structure, or a combination thereof.

The carbon- containing layer 25 may include, for example, a particle structure, a sheet structure, a paper structure, a non-woven fabric structure, a woven fabric structure, a foam structure, a mesh structure, or a combination thereof. For example, carbon paper including a plurality of carbon fibers may include second pores disposed between the plurality of carbon fibers constituting the carbon paper. For example, a carbon sheet including a plurality of hollow carbon fibers may include all of first pores disposed in the hollow carbon fibers and second pores disposed between the plurality of hollow carbon fibers.

A volume of pores in the carbon- containing layer 25 may be in a range of about 1 vol% to about 81 vol%, about 1 vol% to about 80 vol%, about 1 vol% to about 70 vol%, about 1 vol% to about 60 vol%,about 5 vol% to about 60 vol%, about 10 vol% to about 60 vol%, about 20 vol% to about 60 vol%, or about 30 vol% to about 60 vol% of the total volume of the carbon-containing layer 25. The volume of the carbon- containing layer 25 may be calculated from the product of a thickness and an area of the carbon- containing layer 25.

A thickness ratio of a thickness of the first anode active material layer 22 to a thickness of the carbon- containing layer 25 may be about 1:1 to about 1:20, about 1:1 to about 1:18, about 1:1 to about 1:15, about 1:1 to about 1:12, about 1:1 to about 1:10, about 1:1 to about 1:9, about 1:1 to about 1:8, about 1:1 to about 1:7, about 1:1 to about 1:6, about 1:1 to about 1:5, about 1:1 to about 1:4, or about 1:1 to about 1:3. When the first anode active material layer 22 and the carbon-containing layer 25 have such a thickness ratio, a solid secondary battery having excellent rate and lifespan characteristics may be manufactured. As used herein, the term "thickness" refers to an average thickness.

The first anode active material layer 22 may include a metal and a carbon-based anode active material, and a mixing weight ratio of the metal to the carbon-based anode active material may be about 1:1 to about 1:5, about 1:1 to about 1:4.5, about 1:1 to about 1:4, about 1:1 to about 1:3.5, or about 1:1 to about 1:3. In addition, the first anode active material layer 22 may include a carbon-based anode active material and a metal, and the carbon- containing layer 25 may contain the porous carbon structure 25a.

The porous carbon structure according to an embodiment may have at least one of the following characteristics.

The porous carbon structure 25b may have a pore diameter of about 10 nm to about 10,000 nm and a total pore specific volume of about 0.4 cubic centimeters per gram ($cm^3/g$) to about 2.8 $cm^3/g$. The porous carbon structure 25b may have a pore specific volume of about 0.65 $cm^3/g$ to about 2 $cm^3/g$, about 0.68 $cm^3/g$ to about 1.8 $cm^3/g$, for example, about 0.7 $cm^3/g$ to about 1.75 $cm^3/g$.

A specific surface area of the porous carbon structure 25b may be about 10 square meters per gram ($m^2/g$) to about 1,000 $m^2/g$, about 20 $m^2/g$ to about 1,000 $m^2/g$, for example, about 20 $m^2/g$ to about 900 $m^2/g$, or for example, about 25 $m^2/g$ to about 800 $m^2/g$.

A bulk density of the porous carbon structure 25b may be about 0.13 $g/cm^3$to about 2.3 $g/cm^3$, about 0.13 $g/cm^3$to about 2.25 $g/cm^3$, or about 0.13 $g/cm^3$ to about 2.2 $g/cm^3$, about 0.13 $g/cm^3$to about 1 $g/cm^3$,.or about 0.13 $g/cm^3$ to about 0.18 $g/cm^3$.

The porous carbon structure 25b may have a conductivity of greater than 0.1 siemens per centimeter (S/cm) and a pore diameter distribution of about 50 nm to about 280 nm, about 60 nm to about 270 nm, about 70 nm to about 260 nm, about 80 nm to about 250 nm, or about 90 nm to about 200 nm.

When the pore diameter, the total pore volume, the pore volume, the specific surface area, the bulk density, the conductivity, and the pore diameter distribution of the porous carbon structure 25b are in such ranges, a lithium storage ability may be improved, thereby reducing a change in volume during charging and reducing a change in internal stress.

The carbon- containing layer 25 may contain amorphous carbon. The carbon-containing layer 25 may contain, for example, hard carbon and may have the form of secondary particles that are aggregates of primary particles, and porous carbon in the form of such secondary particles may be seen from SEM images of FIGS. 11A and 11B. Referring to FIGS. 11A and 11B, it can be seen that the secondary particle has the form of an aggregate of a plurality of primary particles, and pores are present therein. A primary particle diameter (D50) may be about 500 nm to about 100 μm. The primary particle diameter (D50) may be about 300 nm to about 100 μm, about 400 nm to about 100 μm, or about 500 nm to about 100 μm.

The porous carbon structure 25b may include a porous carbon material having a particle size (D50) of about 10 μm to about 250 μm, about 20 μm to about 220 μm, about 25 μm to about 200 μm, about 40 μm to about 160 μm, about 60 μm to about 130 μm, or about 70 μm to about 110 μm. In an embodiment, the porous carbon structure 25b may have a particle size (D50) of greater than 10 μm, greater than 20 μm, greater than 25 μm, greater than 40 μm, greater than 50 μm, or greater than 60 μm.

In a specific example, the porous carbon structure 25b may have a particle size (D50) of less than 250 μm, less than 220 μm, less than 200 μm, less than 160 μm, less than 130 μm, or less than 110 μm. In some cases, the particle size (D50) may be up to about 280 μm.

An electrode density of the anode 20 may be about 0.5 $g/cm^3$ to about 1.5 $g/cm^3$, a thickness of the first anode active material layer 22 may be about 1 μm to about 20 μm, about 1 μm to about 10 μm, about 1 μm to about 9 μm, or about 2 μm to about 8 μm, and a thickness of the carbon- containing layer 25 may be about 1 μm to about 100 μm, about 1 μm to about 80 μm, about 5 μm to about 50 μm, about 10 μm to about 50 μm, or about 10 μm to about 30 μm. As used herein, the term "thickness" refers to an average thickness. When the thickness of the first anode active material layer 22 is in such a range, since the first anode active material layer 22 may have an excellent effect of suppressing lithium dendrites and may not serve as a resistance film, thereby manufacturing a solid secondary battery having excellent high-rate characteristics.

The porous carbon structure 25b according to an embodiment may have a D10 of about 0.1 μm to about 0.4 μm, a D50 of about 1.0 μm to about 1.8 μm, and a D90 of about 3.0 μm to about 5 μm. A specific surface area of the porous carbon structure 25b may be about 83 $m^2/g$ to about 600 $m^2/g$. A pore size of the porous carbon structure 25b may be about 90 nm to about 130 nm, about 90 nm to about 120 nm, or about 100 nm to about 120 nm, or for example, about 110 nm. A pore volume of the porous carbon structure 25b may be about 0.25 $cm^3/g$ to about 0.45 $cm^3/g$, about 0.28 $cm^3/g$ to about 0.42 $cm^3/g$, or about 0.3$cm^3/g$ to about 0.4 $cm^3/g$, or about 0.35 $cm^3/g$. A tap density of the porous carbon structure 25b may be about 0.2 $g/cm^3$ to about 0.22 $g/cm^3$.

As the porous carbon structure 25b according to an embodiment, porous carbon disclosed in Korean Patent Nos. 10-2510548 and 10-2484569 may be used. The above references are incorporated by reference herein.

Although not shown in FIGS. 1A, 1B, and 2, a second anode active material layer may be further disposed between the first anode active material layer 22 and the solid electrolyte 30. A thickness of the second anode active material layer may be, for example, of about 0.1 nm to about 100 nm. When the second anode active material layer having such a thickness is formed, the charging or discharging characteristics of a solid secondary battery may be further improved.

The second anode active material layer may be, for example, a lithium thin film, a lithium alloy thin film, or a combination thereof.

The second anode active material layer may be further formed as a precipitation layer in an operation of charging a solid secondary battery, an operation of arranging an anode current collector on a first anode active material layer (for example, a contacting or bonding operation), or both the operations.

The thicknesses of the carbon- containing layer 25, the first anode active material layer 22, and the anode 20 including the carbon- containing layer 25 and the first anode active material layer 22 may vary according to the thickness and capacity of a cathode active material layer.

The thickness of the carbon- containing layer 25 may be, for example, 10 % or more, 30 % or more, 40 % or more, 50 % or more, 60 % or more, 70 % or more, 80 % or more, or 90 % or more of the thickness of the cathode active material layer. A thickness of a lithium host layer may be, for example, 100 % or less, 99 % or less, 98 % or less, or 97 % or less of the thickness of the cathode active material layer. The thickness of the carbon- containing layer 25 may be, for example, of about 10 % to about 100 %, about 30 % to about 100 %, about 40 % to about 100 %, about 50 % to about 100 %, about 60 % to about 99 %, about 70 % to about 98 %, or about 80 % to about 97 % of the thickness of the cathode active material layer. Since the lithium host layer has a thickness in such a range, the cycle characteristics of a solid secondary battery may be further improved. The thickness of the carbon- containing layer 25 may be, for example, 10 % or more, 30 % or more, 40 % or more, 50 % or more, 60 % or more, 70 % or more, or 90 % or more of the thickness of the solid electrolyte. The thickness of the carbon- containing layer 25 may be, for example, 100 % or less, 99 % or less, 98 % or less, or 97 % or less of the thickness of the solid electrolyte 30. The thickness of the carbon- containing layer 25 may be, for example, of about 10 % to about 100 %, about 30 % to about 100 %, about 40 % to about 100 %, about 50 % to about 100 %, about 60 % to about 99 %, about 70 % to about 98 %, or about 80 % to about 97 % of the thickness of the solid electrolyte 30. Since the carbon-containing layer 25 has a thickness in such a range, the cycle characteristics of a solid secondary battery may be further improved. When the carbon- containing layer 25 is too thin, a content of lithium metal contained in the carbon- containing layer 25 may be too reduced, thereby undesirably reducing the capacity of a solid secondary battery. When the thickness of the carbon- containing layer 25 increases excessively, the energy density of a solid secondary battery 1 may decrease. An assembled solid secondary battery 1 or a partially or fully discharged solid secondary battery 1 may include, for example, pores in the carbon- containing layer 25. The fully charged solid secondary battery 1 may not include, for example, pores in the carbon- containing layer 25.

The carbon- containing layer 25 may include a binder.

A lithium-precipitation layer may be further included between the first anode active material layer 22 and the solid electrolyte 30, between the anode current collector 21 and the carbon- containing layer 25, or a combination thereof.

After a solid secondary battery is charged, a lithium metal or a lithium alloy may be disposed in some or all of the pores of the carbon- containing layer 25. Since the lithium metal or lithium alloy may be accommodated in the pores included in the carbon-containing layer 25, a change in volume of the anode 20 may be suppressed during charging or discharging process of a solid secondary battery. Therefore, since a change in volume of the anode 20, for example, a change in thickness of the anode 20, may be suppressed during a charging or discharging process of a solid secondary battery, the structural stability of the solid secondary battery may be improved, thereby more effectively suppressing the deterioration of the solid secondary battery.

In addition, the first anode active material layer 22 may contain lithium or a material that alloys with lithium or forms a compound together with lithium. For example, the capacity density (capacity per unit mass) of lithium metal is about 10 times that of graphite which is commonly used as an anode active material. Therefore, by using lithium as an anode active material, solid secondary batteries may be thinned, and also the capacity thereof may be increased. Lithium precipitation formation stress may be controlled by using a material that is a first anode material layer-forming material and has ionic and electronic conductivity.

According to an embodiment, the first anode active material layer 22 may include a first anode active material layer material containing a carbon-based anode active material; a mixture of i) a carbon-based anode active material and at least one of a second metal or a second metalloid; a composite of i) a carbon-based anode active material and ii) at least one of a second metal or a second metalloid; or a combination thereof. The first anode active material layer 22 may include, for example, a carbon-based anode active material; and a second metal, a second metalloid, or a combination thereof.

At least one selected of the second metal or the second metalloid may include tin (Sn), indium (In), silicon (Si), gallium (Ga), aluminum (Al), titanium (Ti), zirconium (Zr), niobium (Nb), germanium (Ge), antimony (Sb), bismuth (Bi), zinc (Zn), gold (Au), platinum (Pt), palladium (Pd), nickel (Ni), iron (Fe), cobalt (Co), chromium (Cr), magnesium (Mg), cesium (Cs), cerium (Ce), molybdenum (Mo), silver (Ag), sodium (Na), potassium (K), calcium (Ca), yttrium (Y), bismuth (Bi), tantalum (Ta), hafnium (Hf), barium (Ba), vanadium (V), strontium (Sr), tellurium (Te), lanthanum (La), or a combination thereof.

A binder may be added to the first anode active material layer 22. The binder may include, for example, styrene butadiene rubber (SBR), polytetrafluoroethylene, polyvinylidene fluoride (PVDF), polyethylene (PE), or the like, but one or more embodiments are not limited thereto. Any material may be used as long as the material may be used as a binder in the art. A content of the binder may be about 0.1 weight percent (wt%) to about 10 wt%, about 0.1 wt% to about 5 wt%, about 0.1 wt% to about 3 wt%, about 0.1 wt% to about 1 wt%, about 0.1 wt% to about 0.5 wt%, or about 0.1 wt% to about 0.3 wt% with respect to the total weight of the first anode active material layer 22.

As shown in FIG. 8A, a solid secondary battery 1 according to an embodiment may have a structure in which a cathode 10 including a cathode active material layer 12 and a cathode current collector 11 is stacked on a solid electrolyte 30 of the anode-solid electrolyte sub-assembly of FIG. 1A.

After charging, pores in a carbon-containing layer 25 may contain a first metal material, and the first metal material may be lithium, a lithium-first metal (M1) alloy, or a combination thereof. Here, an average size of the first metal material may be about 0.1 nm to about 200 nm.

The first metal (M1) material may be, for example, the first metal (M1), a lithium-first metal (M1) alloy, or a combination thereof, and the first metal (M1) may be a metal. The metal may include, for example, tin (Sn), indium (In), silicon (Si), gallium (Ga), aluminum (Al), titanium (Ti), zirconium (Zr), niobium (Nb), germanium (Ge), antimony (Sb), bismuth (Bi), zinc (Zn), gold (Au), platinum (Pt), palladium (Pd), nickel (Ni), iron (Fe), cobalt (Co), chromium (Cr), magnesium (Mg), cesium (Ce), silver (Ag), sodium (Na), potassium (K), calcium (Ca), yttrium (Y), tantalum (Ta), hafnium (Hf), barium (Ba), vanadium (V), strontium (Sr), tellium (Te), lanthanum (La), or a combination thereof. The first metal material may include Au, Pt, Pd, Si, Ag, Al, Bi, Sn, Zn, or a combination thereof.

The first metal material may include a Li-Ag alloy, a Li-Au alloy, a Li-Al alloy, a Li-Sn alloy, a Li-In alloy, a Li-Zn alloy, a Li-Ge alloy, a Li-Si alloy, a Li-Sb alloy, a Li-Bi alloy, a Li-Ga alloy, a Li-Na alloy, a Li-K alloy, a Li-Te alloy, a Li-Mg alloy, a Li-Mo alloy, a Li-Sn-Bi alloy, a Li-Sn-Ag alloy, a Li-Sn-Na alloy, a Li-Sn-K alloy, a Li-Sn-Ca alloy, a Li-Te-Ag alloy, a Li-Sb-Ag alloy, a Li-Sn-Sb alloy, a Li-Sn-V alloy, a Li -Sn-Ni alloy, a Li-Sn-Cu alloy, a Li-Sn-Zn alloy, a Li-Sn-Ga alloy, a Li-Sn-Ge alloy, a Li-Sn-Sr alloy, a Li-Sn-Y alloy, a Li- Sn-Ba alloy, a Li-Sn-Au alloy, a Li-Sn-La alloy, a Li-Al-Ga alloy, a Li-Mg-Sn alloy, a Li-Mg-Al alloy, a Li-Mg-Si alloy, a Li-Mg -Zn alloy, a Li-Mg-Ga alloy, a Li-Mg-Ag alloy, or a combination thereof.

A first anode active material layer 22 may serve as a protective layer which, even when lithium exceeds the support capacity of the carbon- containing layer 25 due to overcharge, prevents a lithium metal from coming into direct contact with a solid electrolyte. Lithium precipitated after passing through the first anode active material layer 22 may be guided to be precipitated into the carbon- containing layer 25, thereby effectively preventing deterioration due to a change in cell thickness or generation of internal pressure.

In the solid secondary battery 1, a volume change ratio in a state of charge (SOC) of 100% may be about 10 % or less or about 5 % or less or about 0.1 % to about 5 % with respect to a volume change ratio of an SOC of 0%.

A cell thickness change ratio of the solid secondary battery 1 may be 20 % or less or about 5 % to about 20 %. The cell thickness change ratio of the solid secondary battery 1 may be 10 % or less or about 5 % to about 10 %. An amount of change in internal stress of the solid secondary battery 1 may be 0.1 megapascals (MPa) or less or about 0.001 MPa to about 0.1 MPa. Here, the thickness change ratio refers to the thickness change ratio of the solid second battery in a state of charge (SOC) of 100% with respect to a thickness of an SOC of 0%.

Referring to FIG. 8B, after charging, a lithium-precipitation layer 26 may be disposed between the anode current collector 21 and the carbon- containing layer 25.

The first anode active material layer 22 may include a carbon-based anode active material capable of reacting with lithium; lithium; a mixture of i) a carbon-based anode active material and ii) at least one of a second metal or a second metalloid; a composite of i) a carbon-based compound and ii) at least one of a second metal or a second metalloid; or a combination thereof.

The carbon-based compound may serve as a buffer layer, which may alleviate volume expansion due to lithium precipitation and delithiation during charging or discharging, and may include, for example, amorphous carbon. Examples of the amorphous carbon may include carbon black (CB), acetylene black (AB), furnace black (FB), KETJEN black (KB), graphene, carbon nanotubes (CNTs), carbon nanofibers (CNFs), and the like, but one or more embodiments are not necessarily limited thereto. Any material may be used as long as the material may be classified as amorphous carbon in the art.

At least one of the second metal or the second metalloid may include tin (Sn), indium (In), silicon (Si), gallium (Ga), aluminum (Al), titanium (Ti), zirconium (Zr), niobium (Nb), germanium (Ge), antimony (Sb), bismuth (Bi), zinc (Zn), gold (Au), platinum (Pt), palladium (Pd), nickel (Ni), iron (Fe), cobalt (Co), chromium (Cr), magnesium (Mg), cesium (Cs), cerium (Ce), molybdenum (Mo), silver (Ag), sodium (Na), potassium (K), calcium (Ca), yttrium (Y), bismuth (Bi), tantalum (Ta), hafnium (Hf), barium (Ba), vanadium (V), strontium (Sr), tellium (Te), lanthanum (La), or a combination thereof, but one or more embodiments are not necessarily limited thereto. Any material may be used as long as the material may be used as a metal anode active material that forms an alloy or compound together with lithium in the art.

The first anode active material layer 22 may include one type of anode active material of a carbon-based anode active material and a second metal or second metalloid anode active material or may include a mixture of a plurality of different anode active materials. For example, the first anode active material layer 22 may include only amorphous carbon or may include at least one second metal or second metalloid of tin (Sn), indium (In), silicon (Si), gallium (Ga), aluminum (Al), titanium (Ti), zirconium (Zr), niobium (Nb), germanium (Ge), antimony (Sb), bismuth (Bi), zinc (Zn), gold (Au), platinum (Pt), palladium (Pd), nickel (Ni), iron (Fe), cobalt (Co), chromium (Cr), magnesium (Mg), cesium (Cs), cerium (Ce), molybdenum (Mo), silver (Ag), sodium (Na), potassium (K), calcium (Ca), yttrium (Y), tantalum (Ta), hafnium (Hf), barium (Ba), vanadium (V), strontium (Sr), tellium (Te), or lanthanum (La). Alternatively, the first anode active material layer 22 may include a composite of amorphous carbon and at least one second metal or second metalloid anode active material of tin (Sn), indium (In), silicon (Si), gallium (Ga), aluminum (Al), titanium (Ti), zirconium (Zr), niobium (Nb), germanium (Ge), antimony (Sb), bismuth (Bi), zinc (Zn), gold (Au), platinum (Pt), palladium (Pd), nickel (Ni), iron (Fe), cobalt (Co), chromium (Cr), magnesium (Mg), cesium (Cs), cerium (Ce), molybdenum (Mo), silver (Ag), sodium (Na), potassium (K), calcium (Ca), yttrium (Y), tantalum (Ta), hafnium (Hf), barium (Ba), vanadium (V), strontium (Sr), tellium (Te), or lanthanum (La). A composite ratio of a composite of amorphous carbon and the at least one second metal or second metalloid anode active material may be a weight ratio and may be, for example, about 10:1 to about 1:2, about 5:1 to about 1:1, or about 4:1 to about 2:1, but one or more embodiments are not necessarily limited to such a range. The composite ratio may be selected according to the specific characteristics of a solid secondary battery. When the first anode active material layer 22 has such a composition, the cycle characteristics of a solid secondary battery may be further improved.

The first anode active material layer 22 may include, for example, a mixture of first particles including amorphous carbon and second particles including a second metal or a second metalloid. The mixture may be a simple resultant mixture of the first particles and the second particles or a resultant mixture in which the first particles and the second particles are physically bound by a binder. The second metal or the second metalloid may include at least one of tin (Sn), indium (In), silicon (Si), gallium (Ga), aluminum (Al), titanium (Ti), zirconium (Zr), niobium (Nb), germanium (Ge), antimony (Sb), bismuth (Bi), zinc (Zn), gold (Au), platinum (Pt), palladium (Pd), nickel (Ni), iron (Fe), cobalt (Co), chromium (Cr), magnesium (Mg), cesium (Cs), cerium (Ce), molybdenum (Mo), silver (Ag), sodium (Na), potassium (K), calcium (Ca), yttrium (Y), tantalum (Ta), hafnium (Hf), barium (Ba), vanadium (V), strontium (Sr), tellium (Te), or lanthanum (La). Alternatively, the secondary metalloid may be a semiconductor. A content of the second particles may be about 8 wt% to about 60 wt%, about 10 wt% to about 50 wt%, about 15 wt% to about 40 wt%, or 20 wt% to about 30 wt% with respect to the total weight of the mixture. The second particles may have a content in such a range, and thus, for example, the cycle characteristics of the solid secondary battery 1 may be further improved.

The first anode active material layer22 may include i) a composite of first particles including amorphous carbon and second particles including a second metal or metalloid, or ii) a mixture of first particles including amorphous carbon and second particles including a second metal or a second metalloid. A content of the second particles may be about 1 wt% to about 60 wt% with respect to the total weight of the composite.

The first anode active material layer 22 may contain, for example, a mixture of a carbon-based anode active material and silver (Ag) or a composite of a carbon-based anode active material and silver (Ag).

The first anode active material layer 22 may include a carbon-based anode active material, graphite, gold, silver, nickel, platinum, molybdenum, tungsten, stainless steel, lithium-Ag, carbon-Ag, or a combination thereof.

When the sub-assembly according to an embodiment is used, a buffering agent is not required, which can facilitate an increase in the energy density of a solid secondary battery. Pressure issues caused by precipitation of lithium formed in a cell and a battery may be resolved. In addition, due lithium precipitation due to the rapid movement of lithium ions by a solid electrolyte according to an embodiment, high-rate characteristics may be improved. Finally, due to a stress-free anode, that is, zero stress, an inactive member may be used in an auxiliary pressure control method, and the inactive member having a thin thickness may be used or may not be used, thereby increasing an energy density.

When a thickness of each layer is not uniform, the thickness may be defined as an average thickness obtained by calculating an average value.

For example, the first anode active material layer 22 may contain a lithium-free composite during battery assembly, but the lithium-free composite may be converted into a lithium-containing composite after pressing and/or battery charging.

By removing a change in thickness due to electrodeposition/desorption of lithium during charging or discharging, a solid secondary battery according to an embodiment may have improved lifespan characteristics, optimized total battery thickness, and high energy density without the need to apply a buffer layer (gasket) according to a related art. In addition, the movement of lithium ions through a first anode active material layer may be maximized, thereby improving high-rate characteristics. As a result, the excellent energy density characteristics of the solid secondary battery according to an embodiment may be implemented.

According to another embodiment, in some cases, an anode current collector, a first anode active material layer, and a region therebetween may be a Li metal-free region not including a lithium (Li) metal in an initial state of the battery assembly of the solid secondary battery or in a fully discharged state.

Cathode

A cathode 10 may include a cathode current collector 11 and a cathode active material layer 12.

The cathode current collector 11 may be provided as a plate, foil, or the like including, for example, indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof.

The cathode current collector 11 may include, for example, a base film and a metal layer disposed on one surface or two surfaces of the base film. The base film may include, for example, a polymer. The polymer may include, for example, polyethylene terephthalate (PET), polyethylene (PE), polypropylene (PP), polybutylene terephthalate (PBT), polyimide (PI), or a combination thereof. The base film may be, for example, an insulator. The base film may include an insulating thermoplastic polymer, and thus when a short circuit occurs, the base film may soften or liquefy to interrupt the operation of a battery, thereby suppressing a rapid increase in current. The metal layer may include, for example, indium (In), copper (Cu), magnesium (Mg), stainless steel, titanium (Ti), iron (Fe), cobalt (Co), nickel (Ni), zinc (Zn), aluminum ( Al), germanium (Ge), lithium (Li), or an alloy thereof. The metal layer may serve as an electrochemical fuse to be cut when an overcurrent occurs, thereby performing a short circuit prevention function. A thickness of the metal layer may be adjusted to adjust a limit current and a maximum current. The metal layer may be plated or deposited on the base film. When the thickness of the metal layer is decreased, a limit current and/or a maximum current of the cathode current collector 11 may be decreased, and thus the stability of a solid secondary battery during a short circuit may be improved. A lead tab may be added onto the metal layer for external connection. The lead tab may be welded to the metal layer or a metal layer/base film stack through ultrasonic welding, laser welding, spot welding, or the like. While the base film and/or the metal layer is melted during welding, the metal layer may be electrically connected to the lead tab. In order to more strongly weld the metal layer and the lead tab, a metal chip may be added between the metal layer and the lead tab. The metal chip may be a flake including the same material as a metal of the metal layer. The metal chip may be, for example, metal foil or a metal mesh. The metal chip may be, for example, aluminum foil, copper foil, or stainless steel (SUS) foil. The metal chip may be disposed on the metal layer and then welded to the lead tab, and thus the lead tab may be welded to a metal chip/metal layer stack or a metal chip/metal layer/base film stack. During welding, while the base film, the metal layer, and/or the metal chip are melted, the metal layer or a metal layer/metal chip stack may be electrically connected to the lead tab. A metal chip and/or a lead tab may be added onto a portion of the metal layer. A thickness of the base film may be, for example, about 1 μm to 50 μm, about 1.5 μm to about 50 μm, about 1.5 μm to about 40 μm, or about 1 μm to about 30 μm. The base film may have a thickness in such a range, and thus a weight of an electrode assembly may be more effectively reduced. A melting point of the base film may be, for example, about 100 °C to about 300 °C, about 100 °C to about 250 °C, or about 100 °C to about 200 °C. The base film may have a melting point in such a range, and thus the base film may be melted and easily coupled to the lead tab in a process of welding the lead tab. In order to improve adhesive strength between the base film and the metal layer, surface treatment such as corona treatment may be performed on the base film. A thickness of the metal layer may be, for example, about 0.01 μm to about 3 μm, about 0.1 μm to about 3 μm, about 0.1 μm to about 2 μm, or about 0.1 μm to about 1 μm. The metal layer may have a thickness in such a range, and thus the stability of an electrode assembly may be secured while conductivity is maintained. A thickness of the metal chip may be, for example, about 2 μm to about 10 μm, about 2 μm to about 7 μm, or about 4 μm to about 6 μm. The metal chip may have a thickness in such a range, and thus the metal layer and the lead tab may be more easily connected. The cathode current collector 11 may have such a structure, a weight of an electrode may be reduced, thereby improving the energy density of a solid secondary battery.

The cathode active material layer 12 may include, for example, a cathode active material.

The cathode active material may be a cathode active material that may reversibly intercalate and deintercalate lithium ions. Examples of the cathode active material may include a lithium transition metal oxide such as lithium cobalt oxide (LCO), lithium nickel oxide, lithium nickel cobalt oxide, lithium nickel cobalt aluminum oxide (NCA), lithium nickel cobalt manganate (NCM), lithium manganate, or lithium iron phosphate oxide, nickel sulfide, copper sulfide, lithium sulfide, iron oxide, vanadium oxide, lithium sulfide ($Li_2S$), a lithium sulfide composite, or the like, but one or more embodiments are not necessarily limited thereto. Any material may be used as long as the material may be used as a cathode active material in the art. Each of cathode active materials may be used alone, or a mixture of two or more types thereof may be used.

For example, the cathode active material may include a compound represented by any one of formulas of $Li_aA_{1-}$

$_bB'_bD'_2$, wherein $0.90 \leq a \leq 1$ and $0 \leq b \leq 0.5$; $Li_aE_{1-b}B'_bO_{2-c}D'_c$, wherein $0.90 \leq a \leq 1$, $0 \leq b \leq 0.5$, and $0 \leq c \leq 0.05$; $LiE_{2-b}B'_bO_{4-c}D'_c$; wherein $0 \leq b \leq 0.5$ and $0 \leq c \leq 0.05$; $Li_aNi_{1-b-c}Co_bB_cD'_\alpha$, wherein $0.90 \leq a \leq 1$, $0 \leq b \leq 0.5$, $0 \leq c \leq 0.05$, and $0 < \alpha \leq 2$; $Li_aNi_{1-b-c}Co_bB'_cO_{2-\alpha}F'_\alpha$, wherein $0.90 \leq a \leq 1$, $0 \leq b \leq 0.5$, $0 \leq c \leq 0.05$, and $0 < \alpha < 2$; $Li_aNi_{1-b-c}Co_bB'_cO_{2-\alpha}F'_2$, wherein $0.90 \leq a \leq 1$, $0 \leq b \leq 0.5$, $0 \leq c \leq 0.05$, and $0 < \alpha < 2$; $Li_aNi_{1-b-c}Mn_bB'_cD'_\alpha$, wherein $0.90 \leq a \leq 1$, $0 \leq b \leq 0.5$, $0 \leq c \leq 0.05$, and $0 < \alpha \leq 2$; $Li_aNi_{1-b-c}Mn_bB'_cO_{2-\alpha}F'_\alpha$, wherein $0.90 \leq a \leq 1$, $0 \leq b \leq 0.5$, $0 \leq c \leq 0.05$, and $0 < \alpha < 2$; $Li_aNi_{1-b-c}M_bB'_cO_{2-\alpha}F'_2$, wherein $0.90 \leq a \leq 1$, $0 \leq b \leq 0.5$, $0 \leq c \leq 0.05$, and $0 < \alpha < 2$; $Li_aNi_bE_cG_dO_2$, wherein $0.90 \leq a \leq 1$, $0 \leq b \leq 0.9$, and $0 \leq c \leq 0.5$, and $0.001 \leq d \leq 0.1$; $Li_aNi_bCo_cMn_dG_eO_2$, wherein $0.90 \leq a \leq 1$, $0 \leq b \leq 0.9$, $0 \leq c \leq 0.5$, $0 \leq d \leq 0.5$, and $0.001 \leq e \leq 0.1$; $Li_aNiG_bO_2$, wherein $0.90 \leq a \leq 1$ and $0.001 \leq b \leq 0.1$; $Li_aCoG_bO_2$, wherein $0.90 \leq a \leq 1$ and $0.001 \leq b \leq 0.1$; $Li_aMnG_bO_2$, wherein $0.90 \leq a \leq 1$ and $0.001 \leq b \leq 0.1$; $Li_aMn_2G_bO_4$, wherein $0.90 \leq a \leq 1$ and $0.001 \leq b \leq 0.1$; $QO_2$; $QS_2$; $LiQS_2$; $V_2O_5$; $LiV_2O_5$; $LiI'O_2$; $LiNiVO_4$; $Li_{(3-f)}J_2(PO_4)_3$, wherein $0 \leq f \leq 2$, $Li_{(3-f)}Fe_2(PO_4)_3$, wherein $0 \leq f \leq 2$, and $LiFePO_4$. In such compounds, A may be Ni, Co, Mn, or a combination thereof, B' may be Al, Ni, Co, Mn, Cr, Fe, Mg, Sr, V, a rare earth element, or a combination thereof, D' may be O, F, S, P, or a combination thereof, E may be Co, Mn, or a combination thereof, F' may be F, S, P, or a combination thereof, G may be Al, Cr, Mn, Fe, Mg, La, Ce, Sr, V, or a combination thereof, Q may be Ti, Mo, Mn, or a combination thereof, I' may be Cr, V, Fe, Sc, Y, or a combination thereof, and J may be V, Cr, Mn, Co, Ni, Cu, or a combination thereof. A compound in which a coating layer is added to a surface of such a compound may also be used, and a mixture of the above compound and a compound in which a coating layer is added may also be used. The coating layer added to the surface of such a compound includes, for example, a coating element compound of an oxide, hydroxide, oxyhydroxide of the coating element, oxycarbonate of the coating element, or hydroxycarbonate of the coating element. A compound constituting the coating layer may be amorphous or crystalline. The coating element included in the coating layer may include Mg, Al, Co, K, Na, Ca, Si, Ti, V, Sn, Ge, Ga, B, As, Zr, or a mixture thereof. A method of forming a coating layer may be selected within a range that does not adversely affect the physical properties of a cathode active material. A coating method may include, for example, spray coating, dipping, or the like. A specific coating method may be well understood by those skilled in the art, and thus a detailed description thereof will be omitted.

The cathode active material may include, for example, a lithium transition metal oxide having a layered rock salt type structure among the above-described lithium transition metal oxides. The "layered rock salt type structure" may be, for example, a structure in which oxygen layers and metal atom layers are alternatively arrayed regularly in a direction of a [111] axis of a cubic rock salt type structure, thereby the respective atom layers form a two-dimensional plane. The "cubic rock salt type structure" refers to a NaCl type structure that is a type of a crystal structure, specifically a structure in which face-centered cubic (fcc) lattices respectively formed by cations and anions are shifted by half a ridge of each unit lattice. The lithium transition metal oxide having the layered rock salt structure may include, for example, a ternary lithium transition metal oxide such as $LiNi_xCo_yAl_zO_2$ (NCA) or $LiNi_xCo_yMn_zO_2$ (NCM), wherein $0<x<1$, $0<y<1$, $0<z<1$, and $x+y+z=1$. When the cathode active material includes the ternary lithium transition metal oxide having a layered rock salt type structure, the energy density and thermal stability of a solid secondary battery may be further improved.

The cathode active material may be covered with the coating layer as described above. As the coating layer, any layer may be used as long as the layer is known as a coating layer for a cathode active material of a solid secondary battery. The coating layer may include, for example, $Li_2O-ZrO_2$ or the like.

When the cathode active material contains, for example, nickel (Ni) in a ternary lithium transition metal oxide such as NCA or NCM, the capacity density of a solid secondary battery may be increased, thereby reducing metal elution from the cathode active material in a charged state. As a result, the cycle characteristics of a solid secondary battery may be improved.

A shape of the cathode active material is, for example, a particle shape such as a spherical shape or an elliptical spherical shape. A particle diameter of the cathode active material is not particularly limited and is within a range applicable to a cathode active material of a solid secondary battery according to a related art. A content of the cathode active material of the cathode 10 is also not particularly limited and is within a range applicable to the cathode 10 of a solid secondary battery according to a related art.

In addition to the above-described cathode active material, the cathode 10 may further include additives such as a conductive agent, a binder, a filler, a dispersant, and an ion-conductive adjuvant. Such a conductive agent may include, for example, graphite, CB, AB, KB, a carbon fiber, a metal powder, or the like. The binder may include, for example, SBR, polytetrafluoroethylene, PVDF, PE, or the like. As a filler, a dispersant, an ion-conductive adjuvant, and the like that may be mixed into the cathode 10, known materials generally used in electrodes of a solid secondary battery may be used.

The cathode 10 may further include a solid electrolyte. The solid electrolyte included in the cathode 10 may be similar to or different from a solid electrolyte included in the solid electrolyte 30. The solid electrolyte may be as defined in a part of the solid electrolyte 30.

Alternatively, the cathode 10 may be impregnated, for example, with a liquid electrolyte. The liquid electrolyte may include a lithium salt and at least one of an ionic liquid and a polymer ionic liquid. The liquid electrolyte may be non-volatile. The ionic liquid may refer to a salt in a liquid state at room temperature or a room-temperature molten salt that has a melting point at room temperature or less and consists of only ions. The ionic liquid may include one of compounds including a) at least one cation of an ammonium-based cation, a pyrrolidinium-based cation, a pyridinium-based cation, a pyrimidinium-based cation, an imidazolium-based cation, a piperidinium-based cation, a pyrazolium-based cation, an oxazolium-based cation, a pyridazinium-base cation, a phosphonium-based cation, a sulfonium-based cation, a triazolium-based cation, or a mixture thereof, and b) at least one anion of $BF_4^-$, $PF_6^-$, $AsF_6^-$, $SbF_6^-$, $AiCl_4^-$, $HSO_4^-$ , $ClO_4^-$ , $CH_3SO_3^-$, $CF_3CO_2^-$, $Cl^-$, Br, $I^-$, $SO_4^-$, $CF_3SO_3^-$, $(FSO_2)_2N$-, $(C_2F_5SO_2)2N$-, $(C_2F_5SO_2)(CF_3SO_2)N$-, or $(CF_3SO_2)_2N$-. The ionic liquid may include, for example, at least one of N-methyl-N-propylpyrrolidinium bis(trifluoromethanesulfonyl)imide, N-butyl-N-methylpyrrolidium bis(3-trifluoromethylsulfonyl)imide, 1-butyl-3-methylimidazolium bis(trifluoromethylsulfonyl)imide, or 1-ethyl-3-methylimidazolium bis(trifluoromethylsulfonyl)imide. The polymer ionic liquid may include a repeating unit including a) at least one cation of an ammonium-based cation, a pyrrolidinium-based cation, a pyridinium-based cation, a pyrimidinium-based cation, an imidazolium-based cation, a piperidinium-based cation, a pyrazolium-based cation, an oxazolium-based cation, a pyridazinium-base cation, a phosphonium-based cation, a sulfonium-based cation, a triazolium-based cation, or a mixture thereof; and b) at least one anion of $BF_4^-$, $PF_6^-$, $ASF_6^-$, $SbF_6^-$, $AlCl_4^-$, $HSO_4^-$, $ClO_4^-$, $CH_3SO_3^-$, $CF_3CO_2^-$, $(CF_3SO_2)_2N^-$, $(FSO_2)_2N^-$, $Cl^-$, Br, $I^-$, $SO_4^-$, $CF_3SO_3^-$, $(C_2F_5SO_2)_2N$-, $(C_2F_5SO_2)(CF_3SO_2)N$-, $NO_3^-$, $Al_2Cl_7^-$, $(CF_3SO_2)_3C^-$, $(CF_3)_2PF_4^-$, $(CF_3)_3PF_3^-$, $(CF_3)4PF_2^-$, $(CF_3)_5PF^-$, $(CF_3)_6P^-$, $SF_5CF_2SO_3^-$, $SF_5CHFCF_2SO_3^-$, $CF_3CF_2(CF_3)_2CO^-$, $(CF_3SO_2)_2CH^-$, $(SF_5)_3C^-$, or $(O(CF_3)_2C_2(CF_3)_2O)_2PO^-$. As the lithium salt, any material may be used as long as the material may be used as a lithium salt in the art. The lithium salt may include, for example, $LiPF_6$, $LiBF_4$, $LiSbF_6$, $LiAsF_6$, $LiClO_4$, $LiCF_3SO_3$, $Li(CF_3SO_2)_2N$, $Li(FSO_2)_2N$, $LiC_4F_9SO_3$, $LiAlO_2$, $LiAlCl_4$, LiN, $LiN(C_xF_{2x+1}SO_2)(C_yF_{2y+1}SO_2)$, wherein x and y are each a natural number), LiCl, LiI, or a mixture thereof. A concentration of the lithium salt included in the liquid electrolyte may be about 0.1 moles per liter (M) to about 5 M. A content of the liquid electrolyte impregnated into the cathode 10 may be about 0 parts by weight to about 100 parts by weight, about 0 parts by weight to about 50 parts by weight, about 0 parts by weight to about 30 parts by weight, about 0 parts by weight to about 20 parts by weight, about 0 parts by weight to about 10 parts by weight, or about 0 parts by weight to about 5 parts by weight with respect to 100 parts by weight of the cathode active material layer 12 that does not include a liquid electrolyte.

Anode-solid electrolyte sub-assembly

An anode-solid electrolyte sub-assembly may include an anode current collector 21, a carbon- containing layer 25, a first anode active material layer 22, and a solid electrolyte 30.

The solid electrolyte 30 may be disposed to face a cathode 10.

The solid electrolyte 30 may include, for example, a solid electrolyte, a gel electrolyte, or a combination thereof.

The solid electrolyte may be an oxide solid electrolyte, a sulfide solid electrolyte, a polymer solid electrolyte, or a combination thereof.

The oxide solid electrolyte may include $Li_{1+x+y}Al_xTi_{2-x}Si_yP_{3-y}O_{12}$, wherein $0<x<2$ and $0\leq y<3$, $BaTiO_3$, $Pb(Zr,Ti)O_3$(PZT), $Pb_{1-x}La_xZr_{1-y}Ti_yO_3$ (PLZT), wherein $0\leq x<1$ and $0\leq y<1$, $Pb(Mg_{1/3}Nb_{2/3})O_3$-$PbTiO_3$(PMN-PT), $HfO_2$, $SrTiO_3$, $SnO_2$, $CeO_2$, $Na_2O$, MgO, NiO, CaO, BaO, ZnO, $ZrO_2$, $Y_2O_3$, $Al_2O_3$, $TiO_2$, $SiO_2$, $Li_3PO_4$, $Li_xTi_y(PO_4)_3$, wherein $0<x<2$ and $0<y<3$, $Li_xAl_yTi_z(PO_4)_3$, wherein $0<x<2$, $0<y<1$, and $0<z<3$, $Li_{1+x+y}(Al, Ga)_x(Ti, Ge)_{2-x}Si_yP_{3-y}O_{12}$, wherein $0\leq x\leq 1$ and $0\leq y\leq 1$, $Li_xLa_yTiO_3$, wherein $0<x<2$ and $0<y<3$, $Li_2O$, LiOH, $Li_2CO_3$, $LiAlO_2$, $Li_2O$-$Al_2O_3$-$SiO_2$-$P_2O_5$-$TiO_2$-$GeO_2$, $Li_{3+x}La_3M_2O_{12}$, wherein M=Te, Nb, or Zr and $0\leq x\leq 10$, or a combination thereof. The oxide solid electrolyte may be prepared, for example, through sintering or the like.

The oxide solid electrolyte may be, for example, a garnet-type solid electrolyte of $Li_7La_3Zr_2O_{12}$ (LLZO) or $Li_{3+x}La_3Zr_{2-a}M_aO_{12}$ (LLZO doped with M), wherein M=Ga, W, Nb, Ta, or Al, $0<a<2$, and $0\leq x\leq 10$.

A non-limiting example of the garnet-type solid electrolyte may include an oxide represented by Formula 1

Formula 1 $$(Li_xM1_y)(M2)_{3-б}(M3)_{2-\omega}O_{12-z}X_z$$

in Formula 1, $6\leq x\leq 8$, $0\leq y<2$, $-0.2\leq\delta\leq 0.2$, $-0.2\leq\omega\leq 0.2$, $0\leq z\leq 2$, M1 may be a monovalent cation, a divalent cation, a trivalent cation, or a combination thereof, M2 may be a monovalent cation, a divalent cation, a trivalent cation, or a combination thereof, M3 may be a monovalent cation, a divalent cation, a trivalent cation, a tetravalent cation, a

pentavalent cation, a hexavalent cation, or a combination thereof, and X may be a monovalent anion, a divalent anion, a trivalent anion, or a combination thereof.

In Formula 1, examples of the monovalent cation may include Na, K, Rb, Cs, H, Fr, and the like, and examples of the divalent cation may include Mg, Ca, Ba, Sr, and the like. Examples of the trivalent cation may include In, Sc, Cr, Au, B, Al, Ga, and the like, and examples of the tetravalent cation may include Sn, Ti, Mn, Ir, Ru, Pd, Mo, Hf, Ge, V, Si, and the like. Examples of the pentavalent cation may include Nb, Ta, Sb, V, P, and the like.

M1 may be, for example, hydrogen (H), iron (Fe), gallium (Ga), aluminum (Al), boron (B), beryllium (Be), or a combination thereof. M2 may be lanthanum (La), barium (Ba), calcium (Ca), strontium (Sr), yttrium (Y), bismuth (Bi), praseodymium (Pr), neodymium (Nd), actinium (Ac), samarium (Sm), gadolinium (Gd), or a combination thereof, and M3 may be zirconium (Zr), hafnium (Hf), tin (Sn), niobium (Nb), titanium (Ti), vanadium ( V), chromium (Cr), manganese (Mn), cobalt (Co), nickel (Ni), copper (Cu), molybdenum (Mo), tungsten (W), tantalum (Ta), magnesium (Mg), technetium (Tc), ruthenium (Ru), palladium (Pd), iridium (Ir), scandium (Sc), cadmium (Cd), indium (In), antimony (Sb), tellurium (Te), thallium (Tl), platinum (Pt), silicon (Si), aluminum (Al), or a combination thereof.

In Formula 1, a monovalent anion used as X may be a halogen atom, a pseudohalogen, or a combination thereof, a divalent anion used as X may be $S^{2-}$ or $Se^{2-}$, and a trivalent anion used as may be, for example, $N^{3-}$.

In Formula 1, $6.6 \leq x \leq 8$, $6.7 \leq x \leq 7.5$, or $6.8 \leq x \leq 7.1$.

A non-limiting example of the garnet-type solid electrolyte may include an oxide represented by Formula 2

Formula 2 $$(Li_xM1_y)(La_{a1}M2_{a2})_{3-\delta}(Zr_{b1}M3_{b2})_{2-\omega}O_{12-z}X_z$$

in Formula 2, M1 may be hydrogen (H), iron (Fe), gallium (Ga), aluminum (Al), boron (B), beryllium (Be), or a combination thereof, M2 may be barium (Ba), calcium (Ca), strontium (Sr), yttrium (Y), bismuth (Bi), praseodymium (Pr), neodymium (Nd), actinium (Ac), samarium (Sm), gadolinium (Gd), or a combination thereof, M3 may be hafnium (Hf), tin (Sn), niobium (Nb), titanium (Ti), vanadium (V), chromium (Cr), manganese (Mn), cobalt (Co), and nickel (Ni). ), copper (Cu), molybdenum (Mo), tungsten (W), tantalum (Ta), magnesium (Mg), technetium (Tc), ruthenium (Ru), palladium (Pd), iridium (Ir), scandium (Sc), cadmium (Cd), indium (In), antimony (Sb), tellurium (Te), thallium (Tl), platinum (Pt), silicon (Si), aluminum (Al), or a combination thereof, $6 \leq x \leq 8$, $0 \leq y < 2$, $-0.2 \leq \delta \leq 0.2$, $-0.2 \leq \omega \leq 0.2$, $0 \leq z \leq 2$, $a1+a2=1$, $0 < a1 \leq 1$, $0 \leq a2 < 1$, $b1+b2=1$, $0 < b1 \leq 1$, $0 \leq b2 < 1$, and X may be a monovalent anion, a divalent anion, a trivalent anion, or a combination thereof.

In Formula 2, a monovalent anion used as X may be a halogen atom, a pseudohalogen, or a combination thereof, a divalent anion used as X may be $S^{2-}$ or $Se^{2-}$, and a trivalent anion used as may be, for example, $N^{3-}$.

In Formula 2, $6.6 \leq x \leq 8$, $6.7 \leq x \leq 7.5$, or $6.8 \leq x \leq 7.1$.

A "pseudohalogen" may be a molecule including two or more electronegative atoms similar to a halogen in a free state and may generate anions similar to halide ions. Examples of the pseudohalogen include cyanide, cyanate, thiocyanate, azide, or a combination thereof.

The halogen atom may include, for example, iodine (I), chlorine (Cl), bromine (Br), fluorine (F), or a combination thereof, and the pseudohalogen may include, for example, cyanide, cyanate, thiocyanate, azide, or a combination thereof.

The trivalent anion may be, for example, $N^{3-}$.

According to another embodiment, the garnet-type solid electrolyte may be an oxide represented by Formula 3 below

Formula 3 $$Li_{3+x}La_3Zr_{2-a}M_aO_{12}$$

in Formula 3, M may be Al, Ga, In, Si, Ge, Sn, Sb, Bi, Sc, Y, Ti, Hf, V, Nb, Ta, W, or a combination thereof, x may be a number from 1 to 10, and $0 \leq a < 2$.

Examples of the garnet-type solid electrolyte may include $Li_7La_3Zr_2O_{12}$, $Li_{6.5}La_3Zr_{1.5}Ta_{0.5}O_{12}$, and the like.

When an oxide solid electrolyte is used, an additional lithium metal layer may be further formed for prelithiation at an anode. Here, the lithium metal layer may have a ring shape to surround the anode.

Alternatively, the solid electrolyte may be, for example, a sulfide solid electrolyte. The sulfide solid electrolyte may include, for example, at least one of $Li_2S-P_2S_5$, $Li_2S-P_2S_5-LiX$, wherein X is a halogen element, $Li_2S-P_2S_5-Li_2O$, $Li_2S-P_2S_5-Li_2O-LiI$, $Li_2S-SiS_2$, $Li_2S-SiS_2-LiI$, $Li_2S-SiS_2-LiBr$, $Li_2S-SiS_2-LiCl$, $Li_2S-SiS_2-B_2S_3-LiI$, $Li_2S-SiS_2-P_2S_5-LiI$, $Li_2S-B_2S_3$, $Li_2S-P_2S_5-Z_mS_n$, wherein m and n are each a positive number and Z is one of Ge, Zn, and Ga, $Li_2S-GeS_2$, $Li_2S-SiS_2-Li_3PO_4$, $Li_2S-SiS_2-Li_pMO_q$, wherein p and q are each a positive number and M is one of P, Si, Ge, B, Al, Ga, and In, $Li_{7-x}PS_{6-x}Cl_x$, wherein $0<x<2$, $Li_{7-x}PS_{6-x}Br_x$, wherein $0<x<2$, or $Li_{7-x}PS_{6-x}I_x$, wherein $0 \leq x \leq 2$. The sulfide solid electrolyte may be prepared by treating a starting material such as $Li_2S$ or $P_2S_5$ through melting quenching, mechanical milling, or the like. In some embodiments, after such treating, heat treatment may be performed. The sulfide solid electrolyte may be in an amorphous state, a crystalline state, or a mixture state thereof.

In addition, the sulfide solid electrolyte may be, for example, a material that includes at least sulfur (S), phosphorus (P), and lithium (Li) as constituent elements among materials of the above-described sulfide solid electrolyte. For example, the sulfide solid electrolyte may be a material including $Li_2S-P_2S_5$. When the material including $Li_2S-P_2S_5$ is used as a sulfide solid electrolyte material, a mixing molar ratio of $Li_2S$ to $P_2S_5$, for example, $Li_2S:P_2S_5$ may be about 50:50 to about 90:10.

The sulfide solid electrolyte may include a compound represented by Formula 4

Formula 4 $$Li_aM1_xPS_yM2_zM3_w$$

in Formula 4, M1 may be at least one metal element of Groups 1 to 15 of the periodic table of the elements other than Li, M2 may be at least one element of Group 17 of the periodic table of the elements, M3 may be $SO_n$, $4 \leq a \leq 8$, $0 \leq x < 1$, $3 \leq y \leq 7$, $0 < z \leq 5$, $0 \leq w < 2$, and $1.5 \leq n \leq 5$.

In Formula 4, $0 < z \leq 5$, $0 < z \leq 4$, $0 < z \leq 3$, $0 < z \leq 2$, $0.2 \leq z \leq 1.8$, $0.5 \leq z \leq 1.8$, $1.0 \leq z \leq 1.8$, or $1.0 \leq z \leq 1.5$.

In Formula 4, $5 \leq a \leq 8$, $0 \leq x \leq 0.7$, $4 \leq y \leq 7$, $0 < z \leq 2$, and $0 \leq w \leq 0.5$; for example, $5 \leq a \leq 7$, $0 \leq x \leq 0.5$, $4 \leq y \leq 6$, $0 < z \leq 2$, and $0 \leq w \leq 0.2$; for example, $5.5 \leq a \leq 7$, $0 \leq x \leq 0.3$, $4.5 \leq y \leq 6$, $0.2 \leq z \leq 1.8$, and $0 \leq w \leq 0.1$; and $5.5 \leq a \leq 6$, $0 \leq x \leq 0.05$, $4.5 \leq y \leq 5$, $1.0 \leq z \leq 1.5$, and $0 \leq w \leq 0.1$.

In the compound represented by Formula 4, for example, M1 may include Na, K, Mg, Ag, Cu, Hf, In, Ti, Pb, Sb, Fe, Zr, Zn, Cr, B, Sn, Ge, Si, Zr, Ta, Nb, V, Ga, Al, As, or a combination thereof. M1 may be, for example, a monovalent cation or a divalent cation.

For example, in the compound represented by Formula 4, M2 may include F, Cl, Br, I, or a combination thereof. M2 may be, for example, a monovalent anion.

In the compound represented by Formula 4, for example, $SO_n$ of M3 may be SaOs, $S_3O_6$, $S_2O_3$, $S_2O_4$, $S_2O_5$, $S_2O_6$, $S_2O_7$, $S_2O_8$, $SO_4$, $SO_5$, or a combination thereof. $SO_n$ may be, for example, a divalent anion. $SO_n^{2-}$ may be, for example, $S_4O_6^{2-}$, $S_3O_6^{2-}$, $S_3O_3^{2-}$, $S_2O_4^{2}$ , $S_2O_5^{2-}$ , $S_2O_6^{2-}$, $S_2O_7^{2}$ , $S_2O_8^{2-}$ , $SO_4^{2-}$ , $SO_5^{2-}$ , or a combination thereof.

The compound represented by Formula 4 may be, for example, a compound of represented by Formula 4-1

Formula 4-1 $Li_aPS_yM2_z$

in Formula 4-1, M2 may be at least one element of Group 17 of the periodic table of the elements, $4 \leq a \leq 8$, $3 \leq y \leq 7$, and $0 < z \leq 5$.

The compound represented by Formula 4 may be, for example, a compound represented by Formula 4a or Formula 4b.

Formula 4a $Li_aPS_yM2_zM3_w$

in Formula 4a, M2 may be at least one element of Group 17 of the periodic table of the elements, M3 may be $SO_n$, $4 \leq a \leq 8$, $3 \leq y \leq 7$, $0 < z \leq 5$, $0 < w < 2$, and $1.5 \leq n \leq 5$.

The compound represented by Formula 4a may not contain M1 and may be a compound containing M2 and M3 in Formula 4.

Formula 4b $Li_aM1_xPS_yM2_zM3_w$

in Formula 4b, M1 may be at least one metal element of Groups 1 to 15 of the periodic table of the elements other than Li, M2 may be at least one element of Group 17 of the periodic table of the elements, M3 may be $SO_n$, $4 \leq a \leq 8$, $0 < x < 1$, $3 \leq y \leq 7$, $0 < z \leq 5$, $0 < w < 2$, and $1.5 \leq n \leq 5$.

The compound represented by Formula 4b may be a compound containing all of M1, M2, and M3.

In Formula 4a and Formula 4b, $0 < z \leq 5$, $0 < z \leq 4$, $0 < z \leq 3$, $0 < z \leq 2$, $0.2 \leq z \leq 1.8$, $0.5 \leq z \leq 1.8$, $1.0 \leq z \leq 1.8$, or $1.0 \leq z \leq 1.5$.

In Formula 4a and Formula 4b, for example, $5 \leq a \leq 8$, $4 \leq y \leq 7$, $0 < z \leq 2$, and $0 \leq w \leq 0.5$; $5.5 \leq a \leq 7$, $4.5 \leq y \leq 6$, $0.2 \leq z \leq 1.8$, and $0 \leq w \leq 0.1$, $0.5 \leq z \leq 1.8$, or $1.0 \leq z \leq 1.8$.

The compound represented by Formula 4 may be, for example, a compound represented by Formula 5 below

Formula 5 $Li_{7-m \times v-z}M4_vPS_{6-z}M5_{z1}M6_{z2}$

in Formula 5, M4 may be Na, K, Mg, Ag, Cu, Hf, In, Ti, Pb, Sb, Fe, Zr, Zn, Cr, B, Sn, Ge, Si, Zr, Ta, Nb, V, Ga, Al, As, or a combination thereof, m may be an oxidation number of M4, M5 and M6 may each independently be F, Cl, Br, or I, $0 < v < 0.7$, $0 < z1 < 2$, $0 \leq z2 < 1$, $0 < z < 2$, $z = z1 + z2$, and $1 \leq m \leq 2$.

For example, in Formula 5, $0 < v \leq 0.7$, $0 < z1 < 2$, $0 \leq z2 \leq 0.5$, $0 < z < 2$, and $z = z1 + z2$. For example, in Formula 5, $0 < v \leq 0.5$, $0 < z1 < 2$, $0 \leq z2 \leq 0.5$, $0 < z < 2$, and $z = z1 + z2$. For example, in Formula 5, $0 < v \leq 0.3$, $0 < z1 \leq 1.5$, $0 \leq z2 \leq 0.5$, $0.2 \leq z \leq 1.8$, and $z = z1 + z2$. For example, $0 < v \leq 0.1$, $0 < z1 \leq 1.5$, $0 \leq z2 \leq 0.5$, $0.5 \leq z \leq 1.8$, and $z = z1 + z2$. For example, in Formula 5, $0 < v \leq 0.05$, $0 < z1 \leq 1.5$, $0 \leq z2 \leq 0.2$, $1.0 \leq z \leq 1.8$, and $z = z1 + z2$. In Formula 5, M4 may be, for example, one type of metal element or two types of metal elements.

The compound represented by Formula 5 may include, for example, one type of halogen element or two types of halogen elements.

The compound represented by Formula 4 may be, for example, a solid ion conductor compound represented by one of Formulas 5a to 5g:

Formula 5a $Li_{7-z}PS_{6-z}M5_{z1}$ $M6_{z2}$,

Formula 5b $Li_{7-v-z}Na_vPS_{6-z}M5_{z1}M6_{z2}$,

Formula 5c $Li_{7-v-z}K_vPS_{6-z}M5_{z1}$ $M6_{z2}$,

Formula 5d $Li_{7-v-z}Cu_vPS_{6-z}M5_{z1}M6_{z2}$,

Formula 5e $Li_{7-v-z}Mg_vPS_{6-z}M5_{z1}M6_{z2}$,

Formula 5f $Li_{7-v-z}Ag_vPS_{6-z}M5_{z1}M6_{z2}$

, , and

Formula 5g $Li_{7-2v-z}Cu_vPS_{6-z}M5_{z1}M6_{z2}$

, in Formulas 5a to 5g, M5 and M6 may each independently be F, Cl, Br, or I, 0<v<0.7, 0<z1<2, 0≤z2<1, 0<z<2, and z=z1+z2.

In Formulas 5a to 5f, independently of each other, for example 0<v≤0.7, 0<z1<2, 0≤z2≤0.5, 0<z<2, and z=z1+z2; 0<v≤0.5, 0<z1<2, 0≤z2≤0.5, 0<z<2, and z=z1+z2; 0<v≤0.3, 0<z1≤1.5, 0≤z2≤0.5, 0.2≤z≤1.8, and z=z1+z2; 0<v≤0.05, 0<z1≤1.5, 0≤z2≤0.2, 1.0≤z≤1.8, and z=z1+z2; and for example, 0<v≤0.05, 0<z1≤1.5, 0≤z2≤0.2, 1.0≤z≤1.5, and z=z1+z2. In Formula 5, v=0.

The compound represented by Formula 4 may be, for example, a compound represented by the following formulas:

$Li_{7-z}PS_{6-z}F_{z1}$, $Li_{7-z}PS_{6-z}Cl_{z1}$, $Li_{7-z}PS_{6-z}Br_{z1}$, $Li_{7-z}PS_{6-z}I_{z1}$, $Li_{7-z}PS_{6-z}F_{z1}Cl_{z2}$, $Li_{7-z}PS_{6-z}F_{z1}Br_{z2}$, $Li_{7-z}PS_{6-z}F_{z1}I_{z2}$, $Li_{7-z}PS_{6-z}Cl_{z1}Br_{z2}$, $Li_{7-z}PS_{6-z}Cl_{z1}I_{z2}$, $Li_{7-z}PS_{6-z}Cl_{z1}F_{z2}$, $Li_{7-z}PS_{6-z}Br_{z1}I_{z2}$, $Li_{7-z}PS_{6-z}Br_{z1}F_{z2}$, $Li_{7-z}PS_{6-z}Br_{z1}Cl_{z2}$, $Li_{7-z}PS_{6-z}I_{z1}F_{z2}$, $Li_{7-z}PS_{6-z}I_{z1}Cl_{z2}$, $Li_{7-z}PS_{6-z}I_{z1}Br_{z2}$,$Li_{7-v-z}Na_vPS_{6-z}F_{z1}$, $Li_{7-v-z}Na_vPS_{6-z}Cl_{z1}$, $Li_{7-v-z}Na_vPS_{6-z}Br_{z1}$, $Li_{7-v-z}Na_vPS_{6-z}I_{z1}$, $Li_{7-v-z}Na_vPS_{6-z}F_{z1}Cl_{z2}$, $Li_{7-v-z}Na_vPS_{6-z}F_{z1}Br_{z2}$, $Li_{7-v-z}Na_vPS_{6-z}F_{z1}I_{z2}$, $Li_{7-v-z}Na_vPS_{6-z}Cl_{z1}Br_{z2}$, $Li_{7-v-z}Na_vPS_{6-z}Cl_{z1}I_{z2}$, $Li_{7-v-z}Na_vPS_{6-z}Cl_{z1}F_{z2}$, $Li_{7-v-z}Na_vPS_{6-z}Br_{z1}I_{z2}$, $Li_{7-v-z}Na_vPS_{6-z}Br_{z1}F_{z2}$, $Li_{7-v-z}Na_vPS_{6-z}Br_{z1}Cl_{z2}$, $Li_{7-v-z}Na_vPS_{6-z}I_{z1}F_{z2}$, $Li_{7-v-z}Na_vPS_{6-z1}I_{z1}Cl_{z2}$, $Li_{7-v-z}Na_vPS_{6-z}I_{z1}Br_{z2}$,$Li_{7-v-z}K_vPS_{6-z}F_{z1}$, $Li_{7-v-z}K_vPS_{6-z}Cl_{z1}$, $Li_{7-v-z}K_vPS_{6-z}Br_{z1}$, $Li_{7-v-z}K_vPS_{6-z}I_{z1}$,

$Li_{7-v-z}K_vPS_{6-z}F_{z1}Cl_{z2}$, $Li_{7-v-z}K_vPS_{6-z}F_{z1}Br_{z2}$, $Li_{7-v-z}K_vPS_{6-z}F_{z1}I_{z2}$, $Li_{7-v-z}K_vPS_{6-z}Cl_{z1}Br_{z2}$, $Li_{7-v-z}K_vPS_{6-z}Cl_{z1}I_{z2}$, $Li_{7-v-z}K_vPS_{6-z}Cl_{z1}F_{z2}$, $Li_{7-v-z}K_vPS_{6-z}Br_{z1}I_{z2}$, $Li_{7-v-z}K_vPS_{6-z}Br_{z1}F_{z2}$, $Li_{7-v-z}K_vPS_{6-z}Br_{z1}Cl_{z2}$, $Li_{7-v-z}K_vPS_{6-z}I_{z1}F_{z2}$, $Li_{7-v-z}K_vPS_{6-z}I_{z1}Cl_{z2}$, $Li_{7-v-z}K_vPS_{6-z}I_{z1}Br_{Z2}$,

$Li_{7-v-z}Cu_vPS_{6-z}F_{z1}$, $Li_{7-v-z}Cu_vPS_{6-z}Cl_{z1}$, $Li_{7-v-z}Cu_vPS_{6-z}Br_{z1}$, $Li_{7-v-z}Cu_vPS_{6-z}I_{z1}$, $Li_{7-v-z}Cu_vPS_{6-z}F_{z1}Cl_{z2}$, $Li_{7-v-z}Cu_vPS_{6-z}F_{z1}Br_{z2}$, $Li_{7-v-z}Cu_vPS_{6-z}F_{z1}I_{z2}$, $Li_{7-v-z}Cu_vPS_{6-z}Cl_{z1}Br_{z2}$, $Li_{7-v-z}Cu_vPS_{6-z}Cl_{z1}I_{z2}$, $Li_{7-v-z}Cu_vPS_{6-z}Cl_{z1}F_{z2}$, $Li_{7-v-z}Cu_vPS_{6-z}Br_{z1}I_{z2}$, $Li_{7-v-z}Cu_vPS_{6-z}Br_{z1}F_{z2}$, $Li_{7-v-z}Cu_vPS_{6-z}Br_{z1}Cl_{z2}$, $Li_{7-v-z}Cu_vPS_{6-z}I_{z1}F_{z2}$, $Li_{7-v-z}Cu_vPS_{6-z}I_{z1}Cl_{z2}$, $Li_{7-v-z}Cu_vPS_{6-z}I_{z1}Br_{z2}$,

$Li_{7-2v-z}Cu_vPS_{6-z}F_{z1}$, $Li_{7-2v-z}Cu_vPS_{6-z}Cl_{z1}$, $Li_{7-2v-z}Cu_vPS_{6-z}Br_{z1}$, $Li_{7-2v-z}Cu_vPS_{6-z}I_{z1}$, $Li_{7-2v-z}Cu_vPS_{6-z}F_{z1}Cl_{z2}$, $Li_{7-2v-z}Cu_vPS_{6-z}F_{z1}Br_{z2}$, $Li_{7-2v-z}Cu_vPS_{6-z}F_{z1}I_{z2}$, $Li_{7-2v-z}Cu_vPS_{6-z}Cl_{z1}Br_{z2}$, $Li_{7-2v-z}Cu_vPS_{6-z}Cl_{z1}I_{z2}$, $Li_{7-2v-z}Cu_vPS_{6-z}Cl_{z1}$ $F_{z2}$, $Li_{7-2v-z}Cu_vPS_{6-z}Br_{z1}I_{z2}$, $Li_{7-2v-z}Cu_vPS_{6-z}Br_{z1}F_{z2}$, $Li_{7-2v-z}Cu_vPS_{6-z}Br_{z1}Cl_{z2}$, $Li_{7-2v-z}Cu_vPS_{6-z}I_{z1}F_{z2}$, $Li_{7-2v-z}Cu_vPS_{6-z}I_{z1}Cl_{z2}$, $Li_{7-2v-z}Cu_vPS_{6-z}I_{z1}Br_{z2}$,

$Li_{7-2v-z}Mg_vPS_{6-z}F_{z1}$, $Li_{7-2v-z}Mg_vPS_{6-z}Cl_{z1}$, $Li_{7-2v-z}Mg_vPS_{6-z}Br_{z1}$, $Li_{7-2v-z}Mg_vPS_{6-z}I_{z1}$,

$Li_{7-2v-z}Mg_vPS_{6-z}F_{z1}Cl_{z2}$, $Li_{7-2v-z}Mg_vPS_{6-z}F_{z1}$ $Br_{z2}$, $Li_{7-2v-z}Mg_vPS_{6-z}F_{z1}I_{z2}$, $Li_{7-2v-z}Mg_vPS_{6-z}Cl_{z1}Br_{z2}$, $Li_{7-2v-z}Mg_vPS_{6-z}Cl_{z1}I_{z2}$, $Li_{7-2v-z}Mg_vPS_{6-z}Cl_{z1}F_{z2}$, $Li_{7-2v-z}Mg_vPS_{6-z}Br_{z1}I_{z2}$, $Li_{7-2v-z}Mg_vPS_{6-z}Br_{z1}F_{z2}$, $Li_{7-2v-z}Mg_vPS_{6-z}Br_z$,$Cl_{z2}$, $Li_{7-2v-z}Mg_vPS_{6-z}I_{z1}F_{z2}$, $Li_{7-2v-z}Mg_vPS_{6-z}I_{zl}Cl_{z2}$, $Li_{7-2v-z}Mg_vPS_{6-z}I_{z1}Br_{z2}$,

$Li_{7-v-z}Ag_vPS_{6-z}F_{z1}$, $Li_{7-v-z}Ag_vPS_{6-z}Cl_{z1}$, $Li_{7-v-z}Ag_vPS_{6-z}Br_{z1}$, $Li_{7-v-z}Ag_vPS_{6-z}I_{z1}$, $Li_{7-v-z}Ag_vPS_{6-z}F_{z1}$ $Cl_{z2}$, $Li_{7-v-z}Ag_vPS_{6-z}F_{z1}Br_{z2}$, $Li_{7-v-z}Ag_vPS_{6-z}F_{z1}I_{z2}$, $Li_{7-v-z}Ag_vPS_{6-z}Cl_{z1}Br_{z2}$, $Li_{7-v-z}Ag_vPS_{6-z}Cl_{z1}I_{z2}$, $Li_{7-v-z}Ag_vPS_{6-z}Cl_{z1}F_{z2}$, $Li_{7-v-z}Ag_vPS_{6-z}Br_{z1}I_{z2}$, $Li_{7-v-z}Ag_vPS_{6-z}Br_{z1}F_{z2}$, $Li_{7-v-z}Ag_vPS_{6-z}Br_{z1}Cl_{z2}$, $Li_{7-v-z}Ag_vPS_{6-z}I_{z1}F_{z2}$, $Li_{7-v-z}Ag_vPS_{6-z}I_{z1}Cl_{z2}$, and $Li_{7-v-z}Ag_vPS_{6-z}I_{z1}Br_{z2}$.

In the above formulas, independently of each other, 0<v<0.7, 0<z1<2, 0<z2<1, 0<z<2, and z=z1+z2; for example, 0<v≤0.7, 0<z1<2, 0<z2≤0.5, 0<z<2, and z=z1+z2; 0<v≤0.3, 0<z1≤1.5, 0<z2≤0.5, 0.2≤z≤1.8, and z=z1+z2' 0<v≤0.05, 0<z1≤1.5, 0<z2≤0.2, 1.0≤z≤1.8, and z=z1+z2; or 0<v≤0.05, 0<z1≤1.5, 0<z2≤0.2, 1.0≤z≤1.5, and z=z1+z2. When v, z1, or z2 is not present in in the above formulas, v=0, z1 =0, or z2=0. For example, when z1=0, z=z2. For example, when z2=0, z=z1.

The compound represented by Formula 4 may, for example, belong to a cubic crystal system and, more specifically, to a F-43m space group. In addition, as described above, the compound represented by Formula 4 may be an argyrodite-type sulfide having an argyrodite-type crystal structure. The compound represented by Formula 4 may include, for example, at least one of monovalent cation elements and divalent cation elements, which are substituted in some of lithium sites in the argyrodite-type crystal structure, may include different types of halogen elements, or may include $SO_n$ anions substituted in halogen sites, thereby additionally improving lithium ion conductivity and additionally improving electrochemical stability to lithium metals.

The compound represented by Formula 4 may be, for example, $Li_6PS_5Cl$.

In the specification, the sulfide solid electrolyte may be an argyrodite-type compound including at least one of $Li_{7-x}PS_{6-x}Cl_x$, wherein $0 \le x \le 2$, $Li_{7-x}PS_{6-x}Br_x$, wherein $0 \le x \le 2$, or $Li_{7-x}PS_{6-x}I_x$, wherein $0 \le x \le 2$. In particular, the sulfide solid electrolyte may be an argyrodite-type compound including at least one of $Li_6PS_5Cl$, $Li_6PS_5Br$, or $Li_6PS_5I$.

The sulfide solid electrolyte may be in the form of powder or molded product. A solid electrolyte in the form of a molded product may be in the form of, for example, a pellet, sheet, or thin film, but one or more embodiments are not necessarily limited thereto. The solid electrolyte may have various forms according to the purpose of use.

For example, the polymer solid electrolyte may include a mixture of a lithium salt and a polymer or may include a polymer having an ion-conductive functional group. The polymer solid electrolyte may be, for example, a polymer electrolyte that is in a solid state at a temperature of about 25 °C and a pressure of about 1 atmosphere (atm). The polymer solid electrolyte may not include, for example, a liquid. The polymer solid electrolyte may include a polymer, and the polymer may include, for example, polyethylene oxide (PEO), polyvinylidene fluoride (PVDF), polyvinylidene fluoride-hexafluoropropylene (PVDF-HFP), a poly(styrene-b-ethylene oxide) (PS-PEO) block copolymer, poly(styrene-butadiene), poly(styrene-isoprene-styrene), a poly(styrene-b-divinylbenzene) block copolymer, a poly(styrene-ethylene oxide-styrene) block copolymer, polystyrene sulfonate (PSS), polyvinyl fluoride (PVF), poly(methylmethacrylate) (PMMA), polyethylene glycol (PEG), polyacrylonitrile (PAN), polytetrafluoroethylene (PTFE), polyethylenedioxythiophene (PEDOT), polypyrrole (PPY), polyaniline, poly acetylene, NAFION™, AQUIVION®, FLEMION®, GORE™, ACIPLEX™, MORGANE®-ADP, sulfonated poly(ether ether ketone) (SPEEK), sulfonated poly(arylene ether ketone ketone sulfone) (SPAEKKS), sulfonated poly(aryl ether ketone (SPAEK), poly[bis(benzimidazobenzisoquinolinones)] (SPBIBI), poly(styrene sulfonate) (PSS), lithium 9,10-diphenylanthracene-2-sulfonate ($DPASLi^+$), or a combination thereof, but one or more embodiments are not limited thereto. Any material may be used as long as the material may be used in a polymer electrolyte in the art. As the lithium salt, any material may be used as long as the material is usable as a lithium salt in the art. The lithium salt may include, for example, $LiPF_6$, $LiBF_4$, $LiSbF_6$, $LiAsF_6$, $LiClO_4$, $LiCF_3SO_3$, $Li(CF_3SO_2)_2N$, $LiC_4F_9SO_3$, $LiAlO_2$, $LiAlCl_4$, $LiN(C_xF_{2x+1}SO_2)(C_yF_{2y+1}SO_2)$, wherein x and y are each a natural number from 1 to 20, LiCl, LiI, or a mixture thereof. The polymer included in the polymer solid electrolyte may be, for example, a compound including 10 or more, 20 or more, 50 or more, or 100 or more repeating units. A weight average molecular weight of the polymer included in the polymer solid electrolyte may be, for example, 1,000 Dalton or more, 10,000 Dalton or more, 100,000 Dalton or more, or 1,000,000 Dalton or more.

The gel electrolyte may be, for example, a polymer gel electrolyte. The gel electrolyte may have a gel state without including, for example, a polymer.

The polymer gel electrolyte may include, for example, a liquid electrolyte and a polymer or may include an organic solvent and a polymer having an ion-conductive functional group. The polymer gel electrolyte may be, for example, a polymer electrolyte that is in a gel state at a temperature of about 25 °C and a pressure of about 1 atm. The polymer gel electrolyte may have, for example, a gel state without including a liquid. The liquid electrolyte used in the polymer gel electrolyte may include, for example, a mixture of an ionic liquid, a lithium salt, and an organic solvent, a mixture of a lithium salt and an organic solvent, a mixture of an ionic liquid and an organic solvent, or a mixture of a lithium salt and an ionic liquid. The polymer used in the polymer gel electrolyte may be selected from polymers used in a solid polymer electrolyte. The organic solvent may be selected from organic solvents used in a liquid electrolyte. The lithium salt may be selected from lithium salts used in a polymer solid electrolyte. The polymer solid electrolyte may be impregnated, for example, in a liquid electrolyte in a secondary battery to form a polymer gel electrolyte. The polymer gel electrolyte may further include inorganic particles. The polymer included in the polymer gel electrolyte may be, for example, a compound including 10 or more, 20 or more, 50 or more, or 100 or more repeating units. A weight average molecular weight of the polymer included in the polymer gel electrolyte may be, for example, 500 Dalton or more, 1,000 Dalton or more, 10,000 Dalton or more, 100,000 Dalton or more, or 1,000,000 Dalton or more.

The solid electrolyte 30 may further include, for example, a binder. The binder included in the solid electrolyte 30 may include, for example, SBR, polytetrafluoroethylene, PVDF, PE, or the like, but one or more embodiments are not limited thereto. Any material may be used as long as the material may be used as a binder in the art. The binder of the solid electrolyte 30 may be the same as or different from binders of the cathode active material layer 12 and an anode active material layer 23.

In the anode-solid electrolyte sub-assembly 25, the anode current collector 21 may include, for example, a material that does not react with lithium, that is, a material that does not form both an alloy and a compound together with lithium. A material constituting the anode current collector 21 may include, for example, copper (Cu), stainless steel, titanium (Ti), iron (Fe), cobalt (Co), and nickel (Ni), but one or more embodiments are not necessarily limited thereto. Any material may be used as long as the material may be used as an electrode current collector in the art. The anode current collector 21 may include one type among the above-described metals or an alloy or coating material of two or more types of metals. The anode current collector 21 may be, for example, in the form of a plate or foil.

For example, although not shown in the drawings, a solid secondary battery 1 may further include a thin film, which includes an element capable of forming an alloy together with lithium, on one surface of the anode current collector 21. The thin film may be disposed between the anode current collector 21 and the first anode active material layer 22. The thin film may include, for example, the element capable of forming an alloy together with lithium. Examples of the element capable of forming an alloy together with lithium may include gold, silver, zinc, tin, indium, silicon, aluminum, bismuth, and the like, but one or more embodiments are not necessarily limited thereto. Any material may be used as long as the material may form an alloy together with lithium in the art. The thin film may include one type of such metals or an alloy of various types of metals. The thin film may be disposed on one surface of the anode current collector 21 so that, for example, a precipitated form of a second anode active material layer precipitated between the thin film and the first anode active material layer 22 may be further planarized, and the cycle characteristics of the solid secondary battery 1 may be further improved.

A thickness of the thin film may be, for example, about 1 nm to about 800 nm, about 10 nm to about 700 nm, about 50 nm to about 600 nm, or about 100 nm to about 500 nm. When the thickness of the thin film is less than 1 nm, it may be difficult for the thin film to function. When the thin film is greater than 800 nm, the thin film itself may adsorb lithium, and thus an amount of lithium precipitated at an anode may decrease, resulting in a decrease in energy density of the solid secondary battery 1 and a decrease in cycle characteristics of the solid secondary battery 1. The thin film may be disposed on the anode current collector 21 through, for example, vacuum deposition, sputtering, plating, or the like, but one or more embodiments are not necessarily limited to such a method. Any method capable of forming a thin film in the art may be used.

Although not shown in the drawing, the anode current collector 21 may include, for example, a base film and a metal layer disposed on one surface or two surfaces of the base film. The base film may include, for example, a polymer. The polymer may be, for example, a thermoplastic polymer. The polymer may include, for example, PET, PE, PP, PBT, PI, or a combination thereof. The polymer may be an insulating polymer. The base film may include an insulating thermoplastic polymer, and thus when a short circuit occurs, the base film may soften or liquefy to interrupt the operation of a battery, thereby suppressing a rapid increase in current. The metal layer may include, for example, copper (Cu), stainless steel, titanium (Ti), iron (Fe), cobalt (Co), nickel (Ni), or an alloy thereof. The anode current collector 21 may additionally include a metal chip and/or a lead tab. The base film, metal layer, metal chip, and lead tab of the anode current collector21 may be defined as for the above-described cathode current collector 11. The anode current collector 21 may have such a structure, a weight of an anode may be reduced, thereby improving the energy density of a solid secondary battery.

Referring to FIG. 9A, a cathode 10 may include a cathode current collector 11 and a cathode active material layer 12 disposed on one surface of the cathode current collector 11.

An first inactive member 40 is disposed on one surface of the cathode 10. Referring to FIG. 9A, the first inactive member 40 may be disposed on one surface of each of the cathode active material layer 12 and the cathode current collector 11. Referring to FIG. 9B, the first inactive member 40 may be disposed on one surface of the cathode active material layer 12 and may be disposed between a solid electrolyte 30 and the cathode current collector 11 opposite to the solid electrolyte 30. The first inactive member 40 may not be disposed on side surface of the cathode current collector 11.

The first inactive member 40 may be included to prevent cracking of the solid electrolyte 30 during manufacturing and/or charging/discharging of a solid secondary battery 1, thereby improving the cycle characteristics of the solid secondary battery 1. In the solid secondary battery 1 that does not include the first inactive member 40, nonuniform pressure may be applied to the solid electrolyte 30 in contact with the cathode 10 during manufacturing and/or charging/discharging of the solid secondary battery 1 causing cracks in the solid electrolyte 30, and a lithium metal may grow through the cracks to increase a possibility of the occurrence of a short circuit.

The first inactive member 40 may surround the side surface of the cathode 10 and may be in contact with the solid electrolyte 30. The first inactive member 40 may surround the side surface of the cathode 10 and may be in contact with the solid electrolyte 30, thereby effectively suppressing cracking of the solid electrolyte 30, which can form in a portion of the solid electrolyte 30that is not in contact with the cathode 10, by a pressure difference during a pressing process. The first inactive member 40 may surround the side surface of the cathode 10 and may be separated from an anode 20, for example, a first anode active material layer 22. The first inactive member 40 may surround the side surface of the cathode 10, may be in contact with the solid electrolyte 30, and may be separated from the anode 20. Therefore, a possibility of a short circuit occurring due to physical contact between the cathode 10 and the first anode active material layer 22 or a possibility of a short circuit occurring due to the overcharging of lithium may be suppressed. For example, the first inactive member 40 may be disposed on one side surface of the cathode active material layer 12 and simultaneously may be disposed on one side surface of the cathode current collector 11, thereby more effectively suppressing a possibility of a short circuit occurring due to contact between the cathode current collector 11 and the anode 20.

Referring to FIG. 9B, the inactive ember 40 may extend from one side surface of the cathode active material layer 12 to an end portion of the solid electrolyte 30. The first inactive member 40 may extend to the end portion of the solid electrolyte 30 so that cracks occurring at the end portion of the solid electrolyte 30 may be suppressed. The end portion of the solid electrolyte 30 may be the outermost portion of a side surface of the solid electrolyte 30. The first inactive member 40 may extend to the outermost portion in contact with the side surface of the solid electrolyte 30. The first inactive member 40 may be separated from the anode 20, for example, the first anode active material layer 22. The first inactive member 40 may extend to the end portion of the solid electrolyte 30 but may not in contact with the anode 20. For example, the first inactive member 40 may fill a space extending from one surface of the cathode 10 to the end portion of the solid electrolyte 30.

As described herein, "equal" area, length, width, thickness, and/or shape may include all cases of having "substantially equal" area, length, width, thickness, and/or shape, excluding a case in which areas, lengths, widths, thicknesses, and/or shapes are intentionally different from each other. "Equal" area, length, width, and/or thickness includes a range in which the unintended difference in area, length, width, and/or thickness between compared objects is, for example, less than 3 %, less than 2 %, less than 1 %, less than 0.5 %, or less than 0.1 %.

A thickness of the first active member 40 may be, for example, greater than a thickness of the first anode active material layer 22. The thickness of the first anode active material layer 22 may be, for example, 50 % or less, 40 % or less, 30 % or less, 20 % or less, or 10 % or less of the thickness of the first inactive member 40. The thickness of the first anode active material layer 22 may be, for example, about 1 % to about 50 %, about 1 % to about 40 %, about 1 % to about 30 %, about 1 % to about 20 %, or about 1 % to about 10 % of the thickness of the first inactive member 40.

The first inactive member 40 may be a gasket. By using the gasket as the first inactive member 40, cracking of the solid electrolyte 30 caused by a pressure difference during a pressing process may be effectively suppressed.

The first inactive member 40 may have, for example, a single-layer structure. Alternatively, although not shown in the drawings, the first inactive member 40 may have a multi-layer structure. In the first inactive member 40 having the multi-layer structure, respective layers may have different compositions. The first inactive member 40 having the multi-layer structure may have, for example, a two-layer structure, a three-layer structure, a four-layer structure, or a five-layer structure. The first inactive member 40 having the multi-layer structure may include, for example, one or more adhesive layers and one or more support layers. For example, the adhesive layer may effectively prevent separation between the cathode 10 and the solid electrolyte 30 due to a change in volume of the cathode 10 that occurs during a charging/discharging process of the solid secondary battery 1 and may provide a binding force between the inactive members 40 and other layers to improve the film strength of the first inactive member 40. The support layer may provide a supporting force to the first inactive member 40, may prevent the nonuniformity of pressure applied to the solid electrolyte 30 during a pressing process or a charging/discharging process, and may prevent the shape deformation of the solid secondary battery 1 to be manufactured.

Referring to FIG. 10, an anode 20 may include an anode current collector 21, a carbon- containing layer 25 which is a lithium host layer disposed on one surface of the anode current collector 21, and a first anode active material layer 22. A second inactive member 41 may be disposed on one side surface of the anode 20.

The second inactive member 41 may be disposed on one side surface of each of the carbon- containing layer 25 and the first anode active material layer 22 and may be disposed between a solid electrolyte 30 and the anode current collector 21 opposite to the solid electrolyte 30. The second inactive member 41 may be disposed on one side surface of the carbon- containing layer 25, the first anode active material layer 22, and the anode current collector 21. The second inactive member 41 may be included to more effectively prevent a short circuit between a lithium metal precipitated in the carbon-containing layer 25 and a cathode 10 during charging/discharging of a solid secondary battery 1, thereby improving the cycle characteristics of the solid secondary battery 1. The second inactive member 41 may be included to prevent cracking of the solid electrolyte 30 during manufacturing and/or charging/discharging of the solid secondary battery 1, thereby improving the cycle characteristics of the solid secondary battery 1. In the solid secondary battery 1 that does not include the second inactive member 41, nonuniform pressure may be applied to the solid electrolyte 30 in contact with the anode 20 during manufacturing and/or charging/discharging of the solid secondary battery 1 to causing cracks in the solid electrolyte 30, and a lithium metal may grow through the cracks to increase a possibility of the occurrence of a short circuit.

The solid secondary battery 1 of FIG. 10 may include only the second inactive member 41 without a first inactive member 40.

Referring to FIG. 12A, a first inactive member 40 may be disposed on a cathode current collector 11. A second inactive member 41 may be positioned on an anode current collector 21 as shown in FIG. 12B.

In addition, as shown in FIG. 12C, a solid secondary battery according to another embodiment may have a structure in which a first inactive member 40 is disposed on a cathode current collector 11, and a second inactive member 41 is disposed on an anode current collector 21.

Hereinafter, a method of manufacturing a solid secondary battery according to an embodiment will be described below.

A solid secondary battery may be manufactured through the method of manufacturing a solid secondary battery, the method includes coating an anode current collector with a composition containing a porous carbon structure to provide a layer on the anode current collector and then drying the resultant layer to provide a carbon-containing layer containing a porous carbon structure and provide a stack of the anode current collector and the carbon- containing layer, coating the stack with a composition for forming a first anode active material layer containing a carbon-based anode active material and at least one of a second metal or a second metalloid anode active material to provide a coating on the stack and drying the resultant coating to provide the first anode active material layer disposed on the stack and thus provide an anode, preparing a solid electrolyte, and preparing a cathode.

A solid electrolyte may be disposed on the first anode active material layer of the anode to prepare an anode-solid electrolyte sub-assembly, and the cathode may be disposed on the solid electrolyte.

At least one of a first metal anode active material or a first metalloid anode active material and a binder are added to the composition containing porous carbon structure, and the composition for forming the first anode active material layer may include a binder.

As the solid electrolyte, for example, a sulfide solid electrolyte may be used.

The first anode active material layer may include a carbon-based anode active material and, a second metal anode active material, a second metalloid anode active material, or a combination thereof.

For example, the first anode active material layer may be formed by coating a carbon- containing layer with the composition for forming the first anode active material layer containing i) a carbon-based anode active material or ii) the carbon-based anode active material and, a second metal (M2) anode active material, a second metalloid anode active material, or a combination thereof and then drying the resultant layer.

According to another embodiment, the first anode active material layer may be prepared by coating a first substrate other than an anode current collector with the composition for forming the first anode active material layer and then drying the resultant layer to provide the first anode active material layer disposed on the first substrate, disposing the first anode active material layer disposed on the first substrate on the carbon-containing layer, and separating the first substrate from the first anode active material layer and the carbon-containing layer.

The first substrate may include a material that does not react with lithium, that is, a material that does not form both an alloy and a compound together with lithium. A material constituting the first substrate may include, for example, copper (Cu), stainless steel, titanium (Ti), iron (Fe), cobalt (Co), and nickel (Ni), but one or more embodiments are not necessarily limited thereto. Any suitable material may be used as long as the material may be used as an electrode current collector in the art. The first substrate may include one type of the above-described metals or an alloy or coating material of two or more types of metals. The first substrate may be, for example, in the form of a plate or foil. The first substrate may be, for example, a stainless steel substrate.

The method may further include providing a metal thin film between the first anode active material layer and the solid electrolyte.

A thickness of the thin film may be, for example, about 1 nm to about 800 nm, about 10 nm to about 700 nm, about 50 nm to about 600 nm, or about 100 nm to about 500 nm. When the thickness of the thin film is less than 1 nm, it may be difficult for the thin film to function. When the thin film is greater than 800 nm, the thin film itself may adsorb lithium, and thus an amount of lithium precipitated at the anode may decrease, resulting in a decrease in energy density of a solid secondary battery and a decrease in cycle characteristics of the solid secondary battery. The thin film may be disposed on the first anode active material layer through, for example, vacuum deposition, sputtering, plating, or the like, but one or more embodiments are not necessarily limited to such a method. Any method capable of forming a thin film in the art may be used.

When the solid secondary battery is manufactured, the arranging (for example, bonding) may be performed through a press-compressing process. During a pressing process, some lithium may be injected into the first anode active material layer. Accordingly, the first anode active material layer may include a composite including a carbon-based active material and lithium or a lithium-second metal (M2) alloy.

According to another embodiment, a lithium metal or a lithium metal alloy may be precipitated in pores of the porous carbon structure contained in the carbon- containing layer during charging, or arranging, or both the charging and the arranging of the solid secondary battery.

A pressure applied during pressing or compressing may be, for example, 150 MPa or more. The pressure applied during the pressing may be, for example, 250 MPa or more. The pressure applied during the pressing or compressing may be, for example, 1,000 MPa or less, or for example, about 150 MPa to about 10,000 MPa, about 300 MPa to about 5,000 MPa, or about 500 MPa to about 2,000 MPa.

A time for which the pressure is applied may be less than 10 minutes. For example, the time for which the pressure is applied may be about 5 milliseconds (ms) to about 10 minutes (min). For example, the time for which the pressure is applied may be about 2 minutes to about 7 minutes.

The pressing may be performed, for example, at room temperature (25 °C). For example, the pressing may be performed at a temperature of about 15 °C to about 25 °C. However, a pressing temperature is not necessarily limited thereto and may be about 25 °C to about 90 °C or may be a high temperature of 100 °C or more, for example, about 100 °C to about 500 °C.

The pressing may be, for example, roll pressing, uni-axial pressing, flat pressing, warm isotactic pressing (WIP), cold isotactic pressing (CIP), or the like, but one or more embodiments are not necessarily limited to such methods. Any pressing may be used as long as the pressing may be used in the art.

In the charging, the arranging, or both the charging and the arranging of the solid secondary battery, the second metal may form an alloy together with lithium in the first anode active material layer.

Preparation of cathode

A slurry may be prepared by adding a cathode active material, a binder, and the like, which are materials constituting a cathode active material layer 12, to a non-polar solvent. The prepared slurry may be applied onto a cathode current collector 11 and dried. An obtained stack may be pressed to prepare a cathode 10. The pressing may be, for example, roll pressing, flat pressing, pressing using hydrostatic pressure, or the like, but one or more embodiments are not necessarily limited to such methods. Any pressing may be used as long as the pressing may be used in the art. A pressing process may be omitted. A mixture of materials constituting the cathode active material layer 12 may be compressed into the form of a pellet or stretched (molded) in the form of sheet to prepare the cathode 10. When the cathode 10 is prepared in such a manner, the cathode current collector 11 may be omitted. Alternatively, the cathode 10 may be used by being impregnated with an electrolyte solution.

Preparation of solid electrolyte

A solid electrolyte 30 including an oxide solid electrolyte may be prepared, for example, by heat-treating a precursor of an oxide solid electrolyte material.

The oxide solid electrolyte may be prepared by bringing precursors into contact with each other in stoichiometric amounts, forming a mixture, and then heat-treating the mixture. The contact may be performed, for example, through milling such as ball milling or pulverizing. The mixture of the precursors mixed in a stoichiometric composition may be primarily heat-treated in an oxidative atmosphere to prepare a primary heat-treatment resultant. The primary heat-treatment may be performed at a temperature of 1,000 °C or less for about 1 hour to about 36 hours. The primary heat-treatment resultant may be pulverized. The pulverizing of the primary heat-treatment resultant may be performed in a wet or dry manner. For example, wet pulverizing may be performed by mixing a solvent such as methanol with the primary heat-treatment resultant, and milling the resultant mixture for about 0.5 hours to about 10 hours by using a ball mill. Dry pulverizing may be performed by milling the primary heat-treatment resultant by using a ball mill without a solvent. A particle diameter of the primary heat-treatment resultant may be about 0.1 μm to about 10 μm or about 0.1 μm to about 5 μm. The pulverized primary heat-treatment resultant may be dried. The pulverized primary heat-treatment resultant may be mixed with a binder solution and molded in the form of a pellet or may be simply pressed at a pressure of about 1 ton to about 10 tons and molded in the form of a pellet.

A molded product may be subjected to secondary heat-treatment at a temperature less than about 1,000 °C for about 1 hour to about 36 hours. The solid electrolyte 30, which is a sintered product, may be obtained through the secondary heat-treatment. The secondary heat-treatment may be performed at a temperature of, for example, about 550 °C to about 1,000 °C. The secondary heat-treatment may be performed for about 1 hour to about 36 hours. In order to obtain the sintered product, a temperature of the secondary heat-treatment may be greater than a temperature of the primary heat-treatment. For example, the temperature of the secondary heat-treatment may be about 10 °C or greater, about 20 °C or greater, about 30 °C or greater, or about 50 °C or greater than the temperature of the primary heat-treatment. The molded product may be subjected to the secondary heat-treatment in an oxidative atmosphere, a reductive atmosphere, or a combination thereof.

Manufacturing of solid secondary battery

The anode-solid electrolyte assembly and the cathode 10 prepared through such a method may be stacked and then pressed to manufacture a solid secondary battery.

The pressing may be, for example, roll pressing, uni-axial pressing, flat pressing, WIP, CIP, or the like, but one or more embodiments are not necessarily limited to such methods. Any pressing may be used as long as the pressing may be used in the art. A pressure applied during the pressing may be, for example, about 50 MPa to about 750 MPa. A time for which the pressure is applied may be about 5 ms to about 5 min. The pressing may be performed at a temperature, for example, about room temperature to about 90 °C, or about 20 °C to about 90 °C. Alternatively, the pressing may be performed at a high temperature of 100 °C or more.

Next, the cathode 10 may be disposed on the other surface of the solid electrolyte 30 to which the anode 20 is bonded and pressed at a certain pressure to arrange, for example, bond the cathode 10 on the other surface of the solid electrolyte 30. Alternatively, in the case of the cathode 10 impregnated with a liquid electrolyte, a battery may be manufactured through stacking without pressing.

According to another embodiment, there may be provided a battery that is a battery including a cathode and an anode-solid electrolyte sub-assembly disposed on the cathode, wherein the solid electrolyte of the anode-solid electrolyte sub-assembly is disposed between the cathode and an anode.

The cathode may contain a liquid electrolyte.

The anode-solid electrolyte sub-assembly may be the same as the above-described anode-solid electrolyte sub-assembly for a solid battery, except that the cathode contains the liquid electrolyte.

The disclosure will be described in more detail through the following Examples and Comparative Examples. However, Examples are for illustrative purposes only, and the scope of the disclosure is not limited by Examples.

Manufacturing of anode-solid electrolyte sub-assembly and solid secondary battery

Example 1: Anode current collector/carbon- containing layer (porous carbon/AgNP)/AgC layer/solid electrolyte/cathode

Preparation of anode-solid electrolyte sub-assembly

Three grams of Porous carbon (Porocarb L1104 manufactured by Heraeus Battery Technology) and 1 g of silver (Ag) nanoparticles (average particle diameter: 60 nm (0.06 μm)) were mixed, and a mixture, which was obtained by mixing 2.692 g of a PVA-PAA binder solution (Solef® 5130 manufactured by Solvay Specialty Polymers) with 7 g of N-Methyl-2-pyrrolidone (NMP), was added thereto, and the resultant mixture was stirred at a speed of 1,000 rpm for 30 minutes to prepare a slurry.

The porous carbon has a modal pore size of about 110 nm, a pore volume of 0.35 $cm^3$/g, a bulk density of about 150 g/$dm^3$, a specific surface area of 600 $m^2$/g, a D10 of 0.3 μm, a D90 of 3.0 μm, and a D50 of 1.0 μm. As used herein, a pore size refers to an average pore diameter.

The slurry was applied onto a SUS current collector (thickness: 10 μm), dried at room temperature (25 °C) for 1 hour, and then vacuum-dried at a temperature of 120 °C for 2 hours to prepare a carbon- containing layer, which contained a porous carbon structure, to have a thickness of about 22 μm, thereby providing an anode current collector/carbon-containing layer stack.

Three grams of CB (furnace black (FB-B) particles) with an average particle diameter of about 38 nm as a carbon-based material and 1 g of silver (Ag) particles with an average particle diameter of about 60 nm (0.06 μm) were mixed, and a mixture, which was obtained by mixing 2.692 g of a PVA-PAA binder solution (Solef® 5130 manufactured by Solvay Specialty Polymers) with 7 g of NMP, was added thereto, and the resultant mixture was stirred at a speed of 1,000 rpm for 30 minutes to prepare a slurry. The slurry was applied onto a carbon- containing layer of an anode current collector/carbon-containing layer stack, dried at room temperature (25 °C) for 1 hour, and then vacuum-dried at a temperature of 80 °C for 30 minutes to provide a first anode active material layer to have a thickness of 7.5 μm, thereby forming an anode.

A 600 μm-thick pellet including a $Li_6PS_5Cl$ sulfide solid electrolyte was used as a solid electrolyte.

The solid electrolyte was disposed on the first anode active material layer to form an anode-solid electrolyte sub-assembly. A volume of pores in the anode-solid electrolyte sub-assembly was controlled according to a cathode capacity.

In Example 1, the capacity of the cathode is 3.5 mAh/cm2, and cathode capacity corresponds to the areal capacity. Depending on the capacity of the cathode, the volume of pores in the anode-solid electrolyte sub-assembly can be controlled by changing the material constituting the anode (e.g., changing to a material with a different porosity) or by controlling the density of the anode by adjusting the pressing conditions.

Preparation of cathode

$LiNi_{0.7}Co_{0.15}Al_{0.15}O_2$ (NCA) (D50=12 μm) as a cathode active material, CNFs as a conductive material, and $Li_6PS_5Cl$ (D50=5 μm) as a solid electrolyte were mixed, and then xylene was added thereto to provide a cathode slurry. The cathode slurry was molded into the form of a sheet to provide a cathode sheet. A mixing weight ratio of cathode active material conductive material:sulfide solid electrolyte was 85:1:14. The cathode sheet having a thickness of 80 μm was used as a cathode.

Manufacturing of solid secondary battery

The solid electrolyte of the anode-solid electrolyte sub-assembly was disposed on the cathode and pressed at a temperature of 80 °C and a pressure of 500 MPa for 30 minutes by using WIP to manufacture a solid secondary battery.

Example 2: Anode current collector/carbon- containing layer (porous carbon alone)/AgC layer/solid electrolyte/cathode

An anode-solid electrolyte sub-assembly and a solid secondary battery were manufactured in the same manner as in Example 1, except that, when a slurry for forming a carbon- containing layer was prepared, a mixture, which was obtained by mixing 2.692 g of a PVA-PAA binder solution (Solef® 5130 manufactured by Solvay Specialty Polymers) with 7 g of NMP, was added to 4g of porous carbon (Porocarb L1104 manufactured by Heraeus Battery Technology), and the resultant mixture was stirred at a speed of 1,000 rpm for 30 minutes to obtain the slurry. In Example 2, the capacity of the cathode is 3.5 mAh/cm$^2$.Example 3

An anode-solid electrolyte sub-assembly and a solid secondary battery were manufactured in the same manner as in Example 1, except that, when a slurry for forming a carbon- containing layer was prepared, porous carbon (Porocarb L1804 manufactured by Heraeus Battery Technology) was used instead of porous carbon (Porocarb L1104 manufactured by Heraeus Battery Technology) when a slurry for forming a carbon-containing layer was prepared.

The porous carbon had a modal pore size of 110 nm, a pore volume of 0.35 cm$^3$/g, a bulk density of about 150 grams per cubic decimeter (g/dm$^3$), a tap density of 200 g/dm$^3$, a specific surface area of 83 m$^2$/g, a D10 of 0.3 μm, a D90 of 4.5 μm, a D50 of 4.5 μm, an ash content of less than 0.1 %, an iron content of less than 15 parts per million (ppm), a nickel content of less than 10 ppm, and a zinc content of less than 5 ppm. In Example 3, the capacity of the cathode is 3.5 mAh/cm$^2$.

Example 4

An anode-solid electrolyte sub-assembly and a solid secondary battery were manufactured in the same manner as in Example 2, except that, when a slurry for forming a carbon- containing layer was prepared, a mixing weight ratio of porous carbon to silver was 2:1.

Example 5

An anode-solid electrolyte sub-assembly and a solid secondary battery were manufactured in the same manner as in Example 1, except that, when a slurry for forming a carbon- containing layer was prepared, a mixing weight ratio of porous carbon to silver was 5:1.

Example 6

An anode-solid electrolyte sub-assembly and a solid secondary battery were manufactured in the same manner as in Example 1, except that an average particle diameter (D50) of porous carbon was 3 μm and the porous carbon was manufactured by Heraeus Battery Technology.

Example 7

An anode-solid electrolyte sub-assembly and a solid secondary battery were manufactured in the same manner as in Example 1, except that an average particle diameter (D50) of porous carbon was 10 μm and the porous carbon was manufactured by Heraeus Battery Technology.

Comparative Example 1: Anode current collector/AgC layer/solid electrolyte/cathode

An anode-solid electrolyte sub-assembly and a solid secondary battery were manufactured in the same manner as in Example 1, except that a carbon- containing layer was not formed on an anode current collector.

For Comparative Example 1, a change in volume due to lithium precipitation was larger than the inventive examples, and thus internal stress increased. As a result, cell pressing was required, and degradation occurred.

Comparative Example 2: Anode current collector/carbon- containing layer (porous carbon/AgNP)/solid electrolyte /cathode

An anode-solid electrolyte sub-assembly and a solid secondary battery were manufactured in the same manner as in Example 1, except that the first anode active material layer was not formed on a carbon- containing layer.

For Comparative Example 2, high-rate characteristics can deteriorate due to nonuniform lithium movement, and there is a high possibility of the growth of dendrites due to current concentration on a nonuniform electrode surface.

Comparative Example 3: Anode current collector/anode active material layer (nanosized carbon thick film)/solid electrolyte/cathode

An anode-solid electrolyte sub-assembly and a solid secondary battery were manufactured in the same manner as in Example 1, except that only an anode active material layer was formed on an anode current collector according to the following process, and a carbon- containing layer was not formed.

A mixture, which was obtained by mixing 2.692 g of a PVA-PAA binder solution (Solef® 5130 manufactured by Solvay Specialty Polymers) with 7 g of NMP, was added to 3 g of carbon black (furnace black (FB-B) particles) having an average particle diameter of 38 nm as a carbon-based material, and primarily stirred at a speed of 1,000 rpm for 30 minutes to obtain a slurry. The slurry was applied onto an anode current collector, dried at room temperature (25 °C) for 1 hour, and then vacuum-dried at a temperature of 80 °C for 30 minutes to form an anode active material layer in a thick film state with a thickness of 35 μm.

Comparative Example 4: Nanosized carbon+AgC

An anode-solid electrolyte sub-assembly and a solid secondary battery were manufactured in the same manner as in Example 1, except that an anode was formed according to the following process.

A mixture, which was obtained by mixing 2.692 g of a PVA-PAA binder solution (Solef® 5130 manufactured by Solvay Specialty Polymers) with 7 g of NMP, was added to 4 g of CB (furnace black (FB-B) particles) with an average particle diameter of 38 nm as a carbon-based material, and the resultant mixture was stirred at a speed of 1,000 rpm for 30 minutes to obtain a slurry.

The slurry was applied onto a SUS current collector (thickness: 10 μm), dried at room temperature (25 °C) for 1 hour, and then vacuum-dried at a temperature of 120 °C for 2 hours to prepare a nanosized carbon layer with a thickness of about 25 μm, thereby providing an anode current collector/ a carbon-based material-containing layer stack.

Three grams of CB (furnace black (FB-B) particles) with an average particle diameter of 38 nm as a carbon-based material and 1 g of silver (Ag) particles with an average particle diameter of about 60 nm (0.06 μm) were mixed, and a mixture, which was obtained by mixing 2.692 g of a PVA-PAA binder solution (Solef® 5130 manufactured by Solvay Specialty Polymers) with 7 g of NMP, was added thereto, and the resultant mixture was stirred at a speed of 1,000 rpm for 30 minutes to prepare a slurry. The slurry was applied onto the carbon-based material-containing layer of an anode current collector/carbon- containing layer stack, dried at room temperature (25 °C) for 1 hour, and then vacuum-dried at a temperature of 80 °C for 30 minutes to provide an anode active material layer with a thickness of 10 μm, thereby forming an anode.

Comparative Example 5: AgC thick film

An anode-solid electrolyte sub-assembly and a solid secondary battery were manufactured in the same manner as in Example 1, except that an anode was formed according to the following process.

Three grams of CB (furnace black (FB-B) particles) with an average particle diameter of 38 nm as a carbon-based material and 1 g of silver (Ag) particles with an average particle diameter of about 60 nm (0.06 μm) were mixed, and a mixture, which was obtained by mixing 2.692 g of a PVA-PAA binder solution (Solef® 5130 manufactured by Solvay Specialty Polymers) with 7 g of NMP, was added thereto, and the resultant mixture was stirred at a speed of 1,000 rpm for 30 minutes to prepare a slurry. The slurry was applied onto an anode current collector, dried at room temperature (25 °C) for 1 hour, and then vacuum-dried at a temperature of 80 °C for 30 minutes to form an anode active material layer (AgC layer) in a thick film state with a thickness of 25 μm.

Comparative Example 6: Anode current collector/anode active material layer ((porous carbon/AgNP) and AgC mixture)/solid electrolyte/cathode

A solid secondary battery was manufactured in the same manner as in Comparative Example 1, except that the anode-solid electrolyte sub-assembly was manufactured according to the following process.

Three grams of Porous carbon (Porocarb L1104 manufactured by Heraeus Battery Technology) and 1 g of silver (Ag) nanoparticles (average particle diameter: 60 nm (0.06 μm)) were mixed, and a mixture, which was obtained by mixing 2.692 g of a PVA-PAA binder solution (Solef® 5130 manufactured by Solvay Specialty Polymers) with 7 g of NMP, was added thereto, and the resultant mixture was stirred at a speed of 1,000 rpm for 30 minutes to prepare slurry 1.

The porous carbon had a modal pore size of 110 μm, a pore volume of 0.35 $cm^3$/g, a bulk density of about 150 g/$dm^3$, a tap density of 220 g/$dm^3$, a specific surface area of 600 $m^2$/g, a D10 of 0.3 μm, a D90 of 3.0 μm, a D50 of 1.0 μm, an ash content of less than 0.1 %, an iron content of less than 15 ppm, a nickel content of less than 10 ppm, and a zinc content of less than 5 ppm.

Three grams of CB (furnace black (FB-B) particles) with a particle diameter of about 38 nm as a carbon-based material and 1 g of silver (Ag) particles with an average particle diameter of about 100 nm (0.1 μm) were mixed, and a mixture, which was obtained by mixing 2.692 g of a PVA-PAA binder solution (Solef® 5130 manufactured by Solvay Specialty Polymers) with 7 g of NMP, was added thereto, and the resultant mixture was stirred at a speed of 1,000 rpm for 30 minutes to prepare slurry 2. Slurry 1 and slurry 2 were mixed, applied onto a SUS current collector (thickness: 10 μm),

dried at room temperature (25 °C) for 1 hour, and then vacuum-dried at a temperature of 120 °C for 2 hours to provide an anode active material layer, thereby providing an anode current collector/anode active material layer stack.

A 600 μm-thick pellet including a $Li_6PS_5Cl$ sulfide solid electrolyte was used as a solid electrolyte.

The solid electrolyte was disposed on the anode active material layer to form an anode-solid electrolyte sub-assembly. A volume of pores in the anode-solid electrolyte sub-assembly was controlled according to a cathode capacity. In Comparative Example 6, the capacity of the cathode is 3.5 mAh/cm$^2$.

For Comparative Example 6, the tap density of the anode active material layer was excessively high, and thus its function for supporting precipitated lithium was not sufficient, which led to an increase in the pressure change ratio after charging and discharging.

Comparative Example 7: Anode current collector/AgC layer/carbon- containing layer (porous carbon/AgNP)/solid electrolyte/cathode

An anode-solid electrolyte sub-assembly and a solid secondary battery were manufactured in the same manner as in Example 1, except that a stacking order of a first anode active material layer (AgC layer) and a carbon- containing layer (porous carbon/AgNP) was reversed.

For Comparative Example 7, the effect of suppressing lithium dendrites was insignificant.

Evaluation Example 1: SEM-EDS analysis

SEM-energy dispersive X-ray spectroscopy (EDS) analysis of the anode according to Example 2 was performed. Analysis results are shown in FIGS. 3A to 3F. Results of SEM analysis of the anode of Comparative Example 2 are shown in FIG. 3G.

As shown in FIG. 3A, it could be seen that the carbon- containing layer (porous carbon) and the anode active material layer (AgCB) were formed on the anode current collector, and as shown in FIG. 3C, it could be seen that, in the carbon- containing layer, porous carbon interparticle pores were present, and porous carbon intraparticle pores were present. As shown in FIG. 3B, the number of pores in the anode active material layer was greatly reduced compared to the carbon-containing layer, and it was found that there were almost no pores.

It could be seen that the carbon- containing layer, the AgC layer, which was the first anode active material layer, and the solid electrolyte formed a uniform interface.

In addition, referring to FIGS. 3D to 3F, a composition of the carbon- containing layer and the first anode active material layer could be confirmed through mapping images of carbon, sulfur, and silver.

In contrast, the anode of Comparative Example 2 had a single layer containing porous carbon and silver nanoparticles, and as shown in FIG. 3G, it could be seen that an interface between the single layer and the solid electrolyte was in a non-uniform state.

Evaluation example 2

The solid secondary battery battery of Example 1 was subjected to a formation cycle under the following conditions.

The solid secondary battery was charged at a constant current of 0.1C until the battery voltage reached 4.3V. Then, the solid secondary battery battery was discharged at a constant current of 0.1C until the battery voltage reached 2.5V.

The solid secondary battery subjected to a formation cycle of the solid secondary battery of Example 1 was charged at a constant current rate of 0.1 C at a temperature of 25 °C until a voltage reached 4.3 volts (V) (vs. Li). Subsequently, the solid secondary battery was discharged at a constant current rate of 0.1 C until the voltage reached 2.5 V (vs. Li) during discharging.

Cross-sectional states of the anode before and after charging were analyzed by SEM. Analysis results are shown in FIGS. 4A and 4B, respectively. FIG. 4A shows a state of the anode before charging, and FIG. 4B shows a state of the anode after charging.

Referring to FIGs. 4A and 4B, as a result of checking cross-sectional images of the anode before and after charging, it could be confirmed that a Li layer was not observed for an SOC of 100% and that lithium was precipitated in pores of the carbon- containing layer during charging. It was confirmed that lithium was not precipitated between the current collector and the carbon- containing layer.

Evaluation Example 3: Charge/discharge characteristics

The solid secondary batteries of Example 1 and Comparative Example 2 were evaluated according to the following method to investigate charge/discharge profile characteristics. The solid secondary battery batteries were subjected to a formation cycle under the following conditions.

The solid secondary battery were charged at a constant current of 0.1C until the battery voltage reached 4.3V. Then, the solid secondary battery battery were discharged at a constant current of 0.1C until the battery voltage reached 2.5V.

The solid secondary batteries subjected to a formation cycle were charged at a constant current rate of 0.1 C at a temperature of 25 °C until a voltage reached 4.3 V (vs. Li). Subsequently, the solid secondary batteries were discharged at a constant current rate of 1.0 C until the voltage reached 2.5 V (vs. Li) during discharging.

A change in voltage according to area capacity after a charging or discharging process of each of the solid secondary batteries of Example 1 and Comparative Example 2 was evaluated. Evaluation results are shown in FIGS. 5A and 5B, respectively.

The solid secondary battery of Example 1 had a uniform interface between the anode and the solid electrolyte, and thus, as shown in FIG. 5A, the charge/discharge characteristics thereof were improved in comparison to the solid secondary battery of Comparative Example 2.

As shown in FIG. 5B, for the solid secondary battery of Comparative Example 2 using only the carbon-containing layer containing porous carbon and AgNP without a AgC layer which was the first anode active material layer, an interface between the anode and the solid electrolyte was nonuniform, and thus the discharge characteristics thereof were decreased in comparison to Example 1.

In addition, the charge/discharge characteristics of the solid secondary batteries of Examples 3 to 8 were evaluated in the same manner as the charge/discharge characteristics of the solid secondary battery of Example 1 described above. The solid secondary batteries of Examples 3 to 8 were charged or discharged normally.

Evaluation Example 4: Change in pressure

The solid secondary batteries of Example 1, Example 2, Comparative Example 1, and Comparative Examples 3 to 5 were charged to an end-of-charge voltage of 4.25 V at a charging current of 0.1 C at a temperature of 25 °C and discharged with a discharging current of 1.0 C under a condition of a cutoff voltage of 2.5 V. Then, a change in pressure was investigated and shown in FIGS. 6A to 6F.

FIG. 6C illustrates a change in internal pressure of the solid secondary battery of Comparative Example 1 due to charging or discharging of a precipitation anode including a single layer of AgC. When a cell was driven under a pressure of 1 MPa, pressure changed up to 0.7 MPa. During discharging, external pressure was required to push lithium, and deterioration of the solid secondary battery occurred due to internal strain in the cell.

When the solid secondary batteries of Comparative Examples 2, 4, and 5 were driven under a pressure of 1 MPa, pressures changed up to 0.68 MPa, 0.3 MPa, and 0.56 MPa, respectively.

On the other hand, for the solid secondary battery of Example 1, as shown in FIG. 6A, an amount of change in internal stress was less than 0.1 MPa. In this way, since lithium was precipitated in the carbon- containing layer containing porous carbon structure during charging or discharging, a change in internal stress was reduced, and the battery could be driven without the occurrence of stress. As a result, a change in internal stress could be minimized, thereby improving cell lifespan characteristics and securing low-pressure driving characteristics. The reason for such results was that Li passing through a AgC layer was precipitated between AgC layer and a current collector in Comparative Examples so that pressure changed according to a change in volume, but in the solid secondary battery of Example 1, Li was precipitated in a porous carbon structure so that a change in pressure was minimized to enable low-pressure driving and prevent cell deterioration due to internal strain. As shown in FIG. 6B, it could be seen that, in the solid secondary battery of Example 2, a change in pressure was less than 0.1 MPa leading to a reduction in strain. While not wanting to be bound by theory, it is understood that the results were obtained because, Li passing through the AgC layer was precipitated between AgC layer and the current collector in Comparative Examples, and the pressure changed due to a change in volume, but for the inventive Examples, because lithium was precipitated in the porous carbon structure, the pressure was unchanged.

Evaluation Example 5: Lifespan characteristics

The solid secondary batteries of Example 1 and Example 2 were evaluated according to the following method to investigate lifespan characteristics.

The solid secondary batteries subjected to a formation cycle were charged at a constant current rate of 0.1 C at a temperature of 25 °C until a voltage reached 4.3 V (vs. Li). Subsequently, the solid secondary batteries were discharged at a constant current rate of 0.1 C until the voltage reached 2.5 V (vs. Li) during discharging. Such a charge/discharge cycle was repeated 195 times. ($6^{th}$ to $200^{th}$ cycles)

The solid secondary batteries subjected to a $5^{th}$ cycle were charged at a constant current rate of 0.1 C at a temperature of 25 °C until a voltage reached 4.3 V (vs. Li). Subsequently, the solid secondary batteries were discharged at a constant current rate of 0.2 C until the voltage reached 2.5 V (vs. Li) during discharging. Such a charge/discharge cycle was repeated 5 times. (3rd to 15th cycles)

A capacity retention ratio of the solid secondary batteries of Example 1 and Example 2 was evaluated after a charging/discharging process. Evaluation results are shown in FIG. 7.

As shown in FIG. 7, the solid secondary batteries of Example 1 and Example 2 was normally charged and discharged 200 times or more and exhibited excellent lifespan characteristics.

Evaluation Example 6: High-rate characteristics

For the solid secondary batteries of Example 1 and Comparative Example 2, high-rate characteristics were evaluated according to the following method.

Each solid secondary battery was charged at a constant current of 0.1 C at a temperature of 45 °C until a battery voltage reached 4.2 V and was charge at a constant voltage of 4.2 V until a cut-of current of 0.05 C. Next, the solid secondary battery was discharged at a constant current of 0.1 C until the battery voltage reached 2.5 V.

Subsequently, the solid secondary battery was charged at a constant current of 0.1 C until the battery voltage reached 4.2 V and was charge at a constant voltage of 4.2 V until a cut-of current of 0.05 C, and then discharged at a constant current of 0.33 C or 1 C until the battery voltage reached 2.5V. After the charging/discharging, the high-rate characteristics were evaluated according to Equation 3 below and shown in Table 1 below.

high-rate characteristics (%) = (discharge capacity at 1 C or 0.33 C/discharge capacity at 0.1 C)×100.  Equation 3

Table 1

| Classification | High-rate characteristics (0.33 C/0.1 C) [%] | High-rate characteristics (1 C/0.1 C) [%] |
|---|---|---|
| Example 1 | 82 | 57 |
| Comparative Example 2 | 72 | 16 |

As shown in Table 1, the solid secondary battery of Example 1 had improved high-rate characteristics in comparison to the solid secondary battery of Comparative Example 2. While not wanting to be bond by theory, it is understood that the improvement in high-rate characteristics is because the first anode active material layer contains nanocarbon to provide a denser carbon- containing layer containing a porous carbon structure so that lithium is delivered uniformly. On the other hand, the porous carbon structure layer of Comparative Example 2 has a large particle size in the anode, and the interface with the solid electrolyte is relatively nonuniform, which restricts the movement of lithium. Therefore, the high rate-characteristics of the solid secondary battery of Comparative Example 2 is lower in comparison to the solid secondary battery of Example 1.

Evaluation Example 7: Analysis of porosity, particle size, density, and pore volume of anode

The porosity, particle size, density, and pore volume of the anodes of Example 1, Example 2, and Comparative Example 1-5 were measured and shown in Table 2 below.

In Table 2 below, the first layer represents the first anode active material layer, the second layer represents the carbon- containing layer, C of the first layer denotes each carbon based anode active material, and C of the second layer denotes a porous carbon structure. The density of the anode refers to the total density of the first and second layers formed on the anode current collector.

In Table 2 below, porosity was calculated by using Equation 1 below, and a volume of interparticle pores was calculated by using Equation 2 below

Equation 1

$$\text{porosity} = [1-(D/T)]\times 100$$

in Equation 1, D denotes a density of a layer to be measured, and a true density refers to the sum of true densities of all components constituting the layer to be measured.

volume (vol%) of interparticle pores = porosity (vol%)-volume (vol%) of intraparticle pores.  Equation 2

In Table 2 below, the pore volume, the porosity, and the pore size all refer to average values.

Table 2

| Class | Porosity (vol%) | | | Particle size | | Density ($g/cm^3$) | | | Carbon-containing layer (second layer) | | | |
|---|---|---|---|---|---|---|---|---|---|---|---|---|
| | First layer | Second layer | first layer and second layer | Anode active material of first layer | Carbon of second layer | First layer | Second layer | Anode Density ($g/cm^3$) | Size of intraparticle pores | Volume (vol%) of intraparticle pores | Size of interparticle pores | Volume (vol%) of interparticle pores |
| Example 1 | 35.4 | 50.3 | 46.5 | C: 38 nm<br>Ag: 60 nm | C: 1 μm<br>Ag: 60 nm | 1.3 | 1 | 1.08 | 110 nm | 29 | 74 nm | 21.3 |
| Example 2 | 35.4 | 53.1 | 47.8 | C: 38 nm<br>Ag: 60 nm | C: 1 μm<br>Ag: X | 1.3 | 0.75 | 0.89 | 110 nm | 30 | 77 nm | 23.1 |
| Comparative Example 1 | 35.4 | - | 35.4 | C: 38 nm<br>Ag: 60 nm | - | 1.3 | - | 1.3 | - | - | - | - |
| Comparative Example 2 | - | 50.3 | 50.3 | - | C: 1 μm<br>Ag: 60 nm | - | 1 | 1 | 110 nm | 29 | 74 nm | 21.3 |

(continued)

| Class | Porosity (vol%) | | | Particle size | | Density (g/cm$^3$) | | | Carbon-containing layer (second layer) | | | |
|---|---|---|---|---|---|---|---|---|---|---|---|---|
| | First layer | Second layer | first layer and second layer | Anode active material of first layer | Carbon of second layer | First layer | Second layer | Anode Density (g/cm$^3$) | Size of intraparticle pores | Volume (vol%) of intraparticle pores | Size of interparticle pores | Volume (vol%) of interparticle pores |
| Comparative Example 3 | 36.9 | - | 36.9 | C:38 nm<br>Ag: X | - | 1.01 | - | 1.01 | - | - | - | - |
| Comparative Example 4 | 35.4 | 36.9 | 36.3 | C: 38 nm<br>Ag: 60 nm | C: 38 nm | 1.3 | 1.01 | 1.08 | - | - | - | - |
| Comparative Example 5 | 35.4 | - | 35.4 | C: 38 nm<br>Ag: 60 nm | - | 1.3 | - | 1.3 | - | - | - | - |

In Table 2, the density of the anode of Example 1 represents the total density of the first anode active material layer and the carbon-containing layer, and the density of the anode of Comparative Example 1 represents the density of a AgC layer. In Example 1, a thickness of the carbon- containing layer is 22 μm, a thickness of the first anode active material layer is 7.5 μm, and a thickness ratio of the carbon- containing layer to the first anode active material layer is 2.93:1. In Comparative Example 1, a thickness of the AgC layer is 7.5 μm.

In Table 2, the intraparticle pore volume is the mass of carbon per unit area of electrode and the total pore volume (V particle pore) obtained through BET measurement, which is the pore volume of carbon in the unit area of electrode divided by the electrode volume (V particle pore / V electrode).

As shown in Table 2, the electrode density of the anode of Example 1 is reduced in comparison to the anode of Comparative Example 1, and such a result is likely attributable to the forming of interparticle pores in the carbon- containing layer.

Evaluation Example 8

For the anodes of Example 1 and Example 2, an average pore size in the first anode active material layer (first layer) and the carbon- containing layer (second layer) was investigated. The average pore size, minimum pore size, and maximum pore size in each layer were evaluated by SEM. Evaluation results are shown in Table 3 below.

Table 3

| Classif ication | First anode active material layer (first layer)<br>Average pore size (min-max) | Carbon-containing layer (second layer)<br>Average pore size (min-max) |
|---|---|---|
| Examp le 1 | 52 nm (10 nm-400 nm) | 74 nm (10 nm-1.0 μm) |
| Examp le 2 | 52 nm (10 nm-400 nm) | 77 nm (10 nm-1.6 μm) |

The average pore size of the second layer in Table 3 corresponds to the size of the interparticle pores in the second layer in Table 2 above.

While one or more embodiments have been described with reference to the drawings and Examples, the description is merely illustrative, and it will be understood by those of ordinary skill in the art that various modifications and other equivalent embodiments are possible therefrom. Therefore, the protection scope of the present application should be defined by the appended claims.

When an anode-solid electrolyte sub-assembly for a solid secondary battery according to an embodiment is used, since lithium is stored in pores of a porous carbon structure of a carbon- containing layer, during charging, a change in volume may be decreased, internal stress may not be changed. Furthermore, a first anode active material layer containing a nanosized first anode active material may be positioned between the carbon- containing layer and a solid electrolyte to assist lithium in uniformly moving at an electrolyte/anode interface and to suppress the growth of lithium dendrites, thereby providing a solid secondary battery with improved high-rate, energy density, and lifespan characteristics.

It should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the figures, it will be understood by those of ordinary skill in the art that various changes in form and details may be made therein without departing from the scope as defined by the following claims.

## Claims

**1.** An anode-solid electrolyte sub-assembly comprising:

an anode; and
a solid electrolyte,
wherein the anode comprises

an anode current collector,
a first anode active material layer disposed adjacent to the solid electrolyte and comprising a first anode active material, and
a carbon-containing layer disposed between the first anode active material layer and the anode current collector and containing a porous carbon structure,

wherein a porosity of the carbon- containing layer is greater than a porosity of the first anode active material layer, and

wherein an average pore size of the porous carbon structure in the carbon-containing layer is greater than an average pore size of the first anode active material in the first anode active material layer or an average pore size of the carbon-containing layer is greater than an average pore size of the first anode active material layer.

**2.** The anode-solid electrolyte sub-assembly of claim 1, wherein the porosity of the carbon-containing layer is 1 % to 81 %, and
the porosity of the first anode active material layer is 1 % to 40 %,
andan interparticle porosity of the carbon- containing layer is 1 % to 40 %, and
an intraparticle porosity of the carbon -containing layer is 1 % to 80 %.

**3.** The anode-solid electrolyte sub-assembly of claim 1 or 2, wherein an average particle size of the porous carbon structure in the carbon-containing layer is greater than an average particle size of the first anode active material in the first anode active material layer, and an average particle size of the porous carbon structure is 0.5 micrometer to 10 micrometers, and
an average particle size of the first anode active material is 10 nanometers to 200 nanometers.

**4.** The anode-solid electrolyte sub-assembly of any preceding claim, wherein a density of the first anode active material layer is greater than a density of the carbon-containing layer, and
the density of the carbon- containing layer is 0.3 grams per cubic centimeter to 1.5 grams per cubic centimeter.

**5.** The anode-solid electrolyte sub-assembly of any preceding claim, wherein an average internal pore size of the porous carbon structure in the carbon-containing layer is 10 nanometers to 200 nanometers, and
an average interparticle pore size of the porous carbon structure is 100 nanometers to 1 micrometer.

**6.** The anode-solid electrolyte sub-assembly of any preceding claim, wherein the carbon-containing layer further comprises at least one selected of a first metal anode active material, or a first metalloid anode active material, and the first metal or first metalloid anode active material comprises gold, platinum, palladium, silicon, silver, aluminum, bismuth, tin, zinc, or a combination thereof, and optionally wherein a weight ratio of a weight of the porous carbon structure of the carbon-containing layer to a weight of the at least one of the first metal anode active material or the first metalloid anode active material is 1:1 to 5:1.

**7.** The anode-solid electrolyte sub-assembly as claimed in any preceding claim, wherein a thickness ratio of a thickness of the first anode active material layer to a thickness of the carbon-containing layer is 1:1 to 1:20.

**8.** The anode-solid electrolyte sub-assembly of any preceding claim, wherein a specific surface area of the porous carbon structure is 10 square meters per gram to 1,000 square meters per gram,

a bulk density of the porous carbon structure is 1.8 grams per cubic centimeter to 2.3 grams per cubic centimeter, and
a pore diameter distribution of the porous carbon structure is 50 nanometers to 280 nanometers.

**9.** The anode-solid electrolyte sub-assembly of any preceding claim, further comprising a lithium-precipitation layer disposed between the first anode active material layer and the solid electrolyte, between the anode current collector and the carbon-containing layer, or a combination thereof.

**10.** The anode-solid electrolyte sub-assembly of any preceding claim, wherein the first anode active material layer comprises at least one of a carbon-containing anode active material, a second metal anode active material, or a second metalloid anode active material,

wherein the carbon-containing anode active material comprises amorphous carbon, crystalline carbon, porous carbon, or a combination thereof, and
the second metal or second metalloid anode active material comprises gold, platinum, palladium, silicon, silver, aluminum, bismuth, tin, zinc, or a combination thereof.

**11.** The anode-solid electrolyte sub-assembly of any preceding claim, wherein the first anode active material layer comprises a carbon-based anode active material and a metal, and
the carbon-containing layer comprises the porous carbon structure.

**12.** The anode-solid electrolyte sub-assembly of any preceding claim, wherein the carbon- containing layer comprises hard carbon in the form of secondary particles that are aggregates of primary particles, and have an average primary particle diameter (D50) of 500 nanometers to 100 micrometers.

**13.** A solid secondary battery comprising:

a cathode;
the anode-solid electrolyte sub-assembly of any preceding claim,
wherein the solid electrolyte of the anode-solid electrolyte sub-assembly is disposed between the cathode and the anode, and optionally wherein a volume of the battery at a state of charge of 100% is within 10 % of a volume of the battery at a state of charge of 0%.

**14.** The solid secondary battery of claim 13, wherein the cathode comprises a cathode current collector,

at least one of the cathode current collector and the anode current collector comprises a base film and a metal layer disposed on a surface of the base film,
the base film comprises a polymer, wherein the polymer comprises polyethylene terephthalate, polyethylene, polypropylene, polybutylene terephthalate, polyimide, or a combination thereof, and
the metal layer comprises indium, copper, magnesium, stainless steel, titanium, iron, cobalt, nickel, zinc, aluminum germanium, lithium, or an alloy thereof.

**15.** A method of manufacturing an anode-solid electrolyte sub-assembly, the method comprising:

coating an anode current collector with a composition comprising a porous carbon structure and optionally a first metal anode active material or a first metalloid anode active material to provide a layer on the anode current collector;
drying the layer to form a carbon-containing layer comprising a porous carbon structure and provide a stack comprising the anode current collector and the carbon-containing layer;
coating the stack with a composition for forming a first anode active material layer, the composition comprising a carbon-based anode active material and at least one of a second metal anode active material or a second metalloid anode active material to provide a coating on the stack;
drying the coating on the stack to provide a first anode active material layer disposed on the stack;
preparing a solid electrolyte; and
disposing the solid electrolyte on the first anode active material layer to provide an anode-solid electrolyte sub-assembly.

FIG. 1A

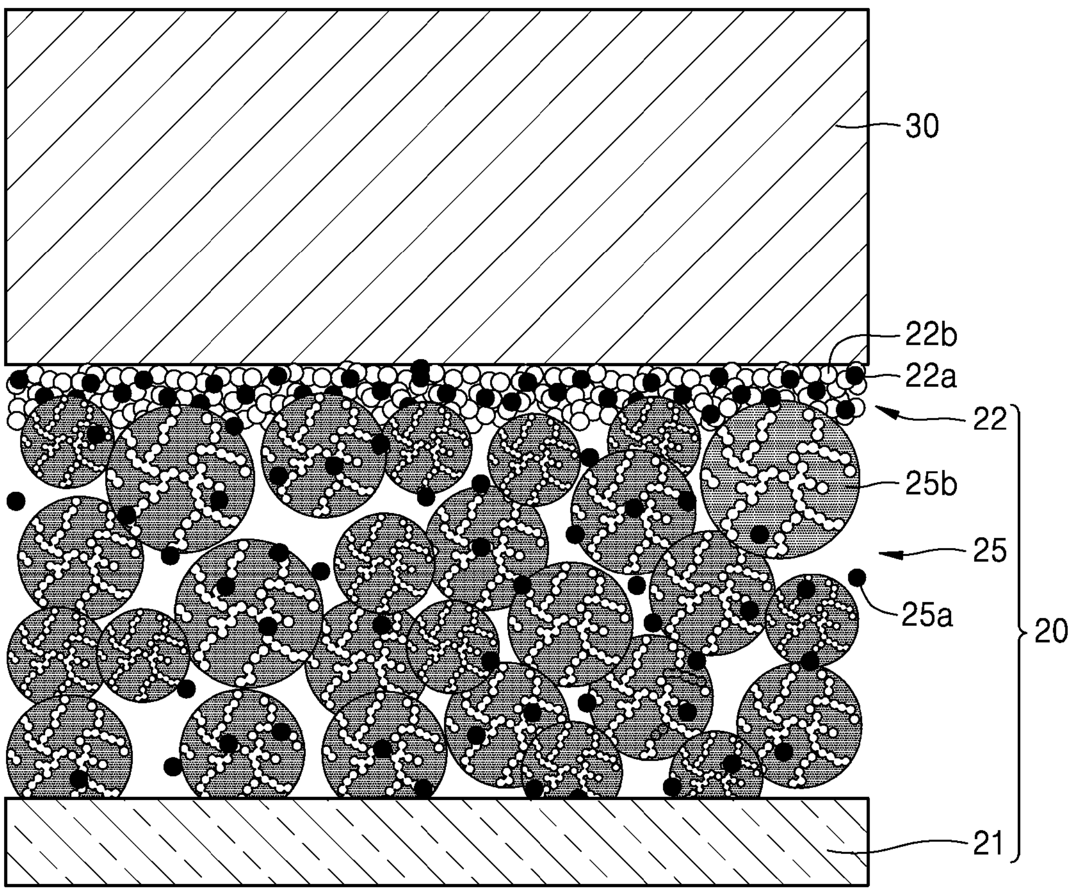

FIG. 1B

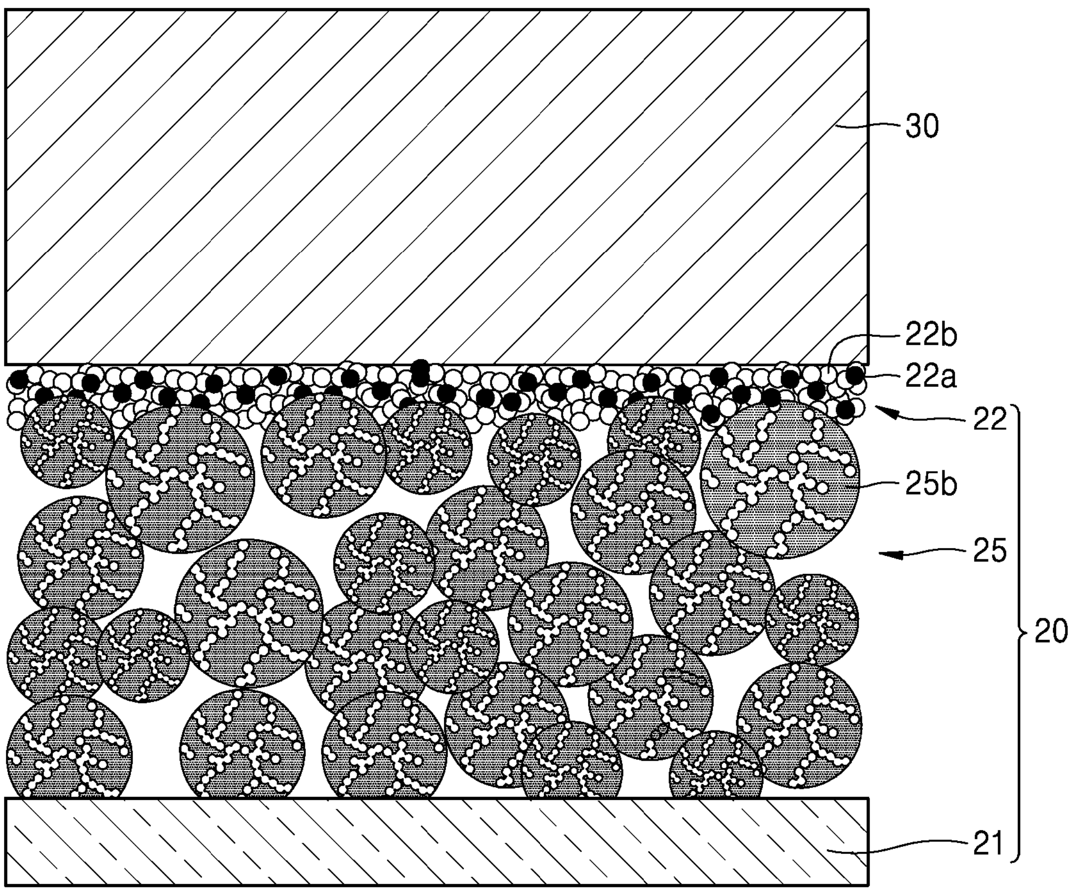

FIG. 2

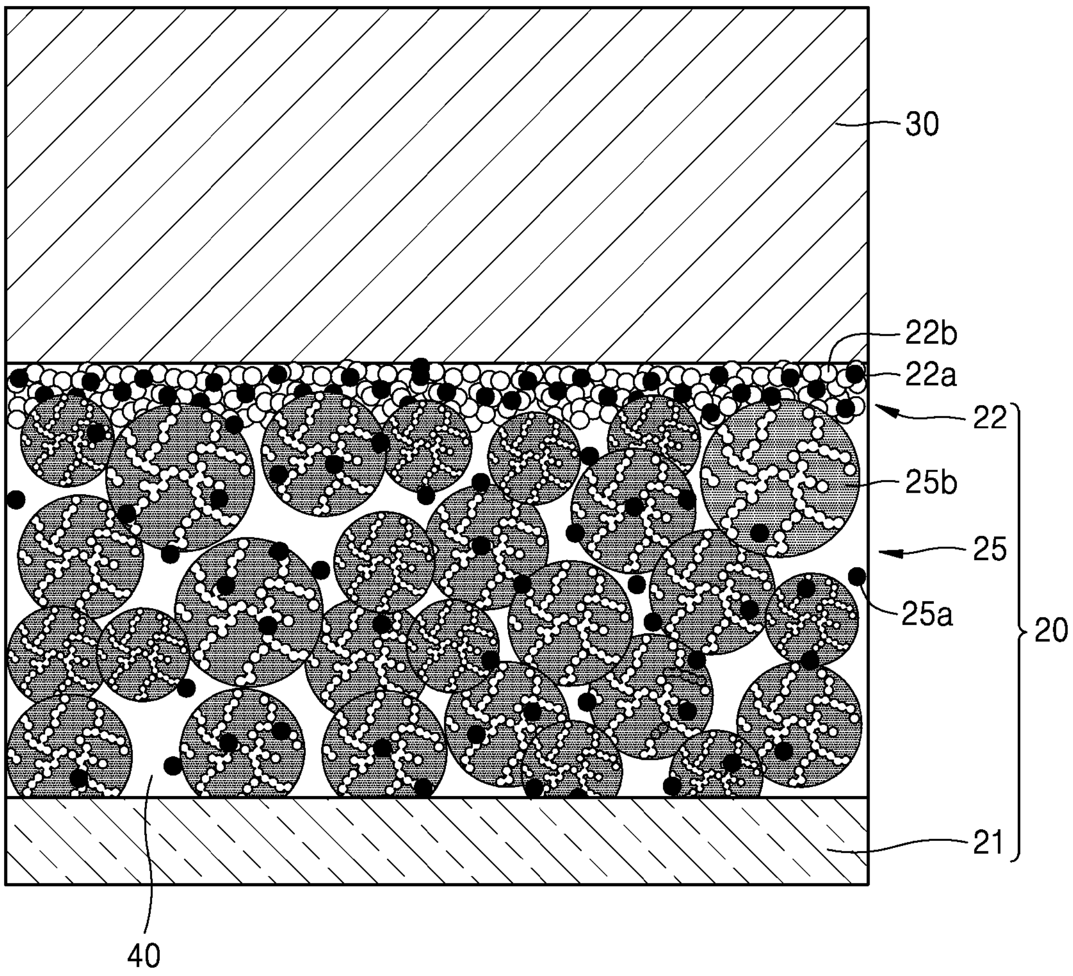

FIG. 3A

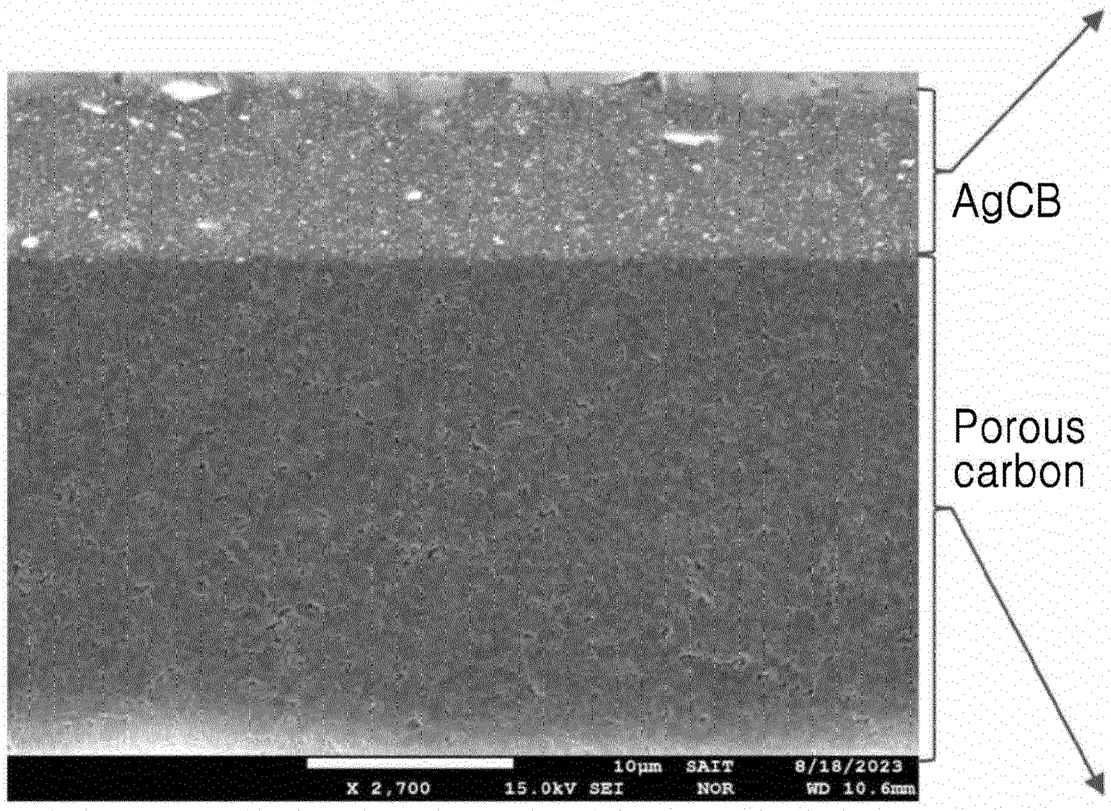
AgCB
Porous carbon
10µm SAIT 8/18/2023
X 2,700 15.0kV SEI NOR WD 10.6mm

FIG. 3B

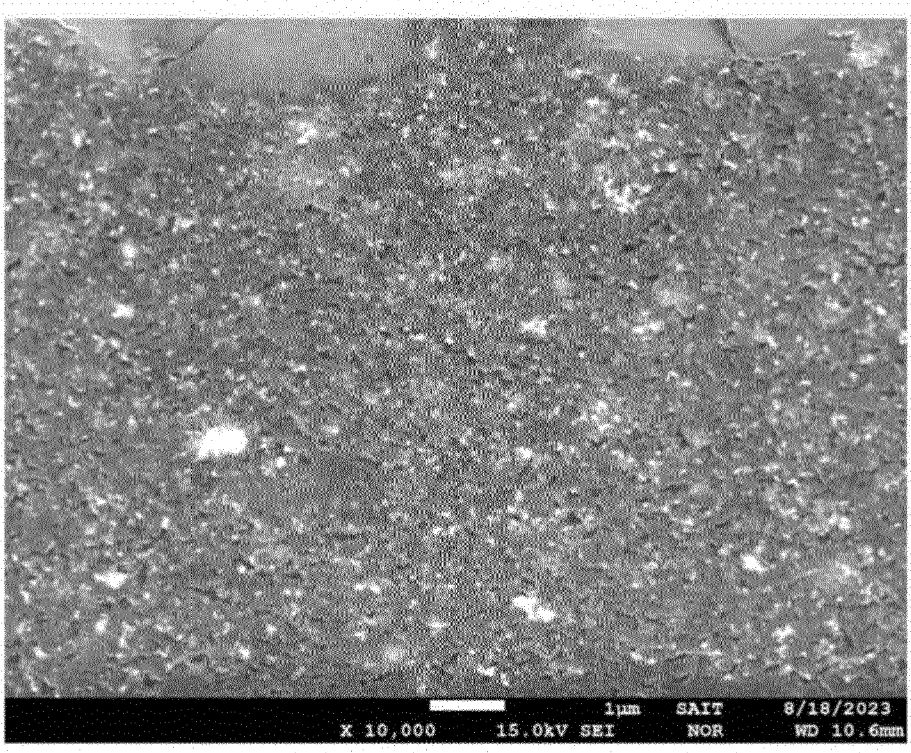

FIG. 3C

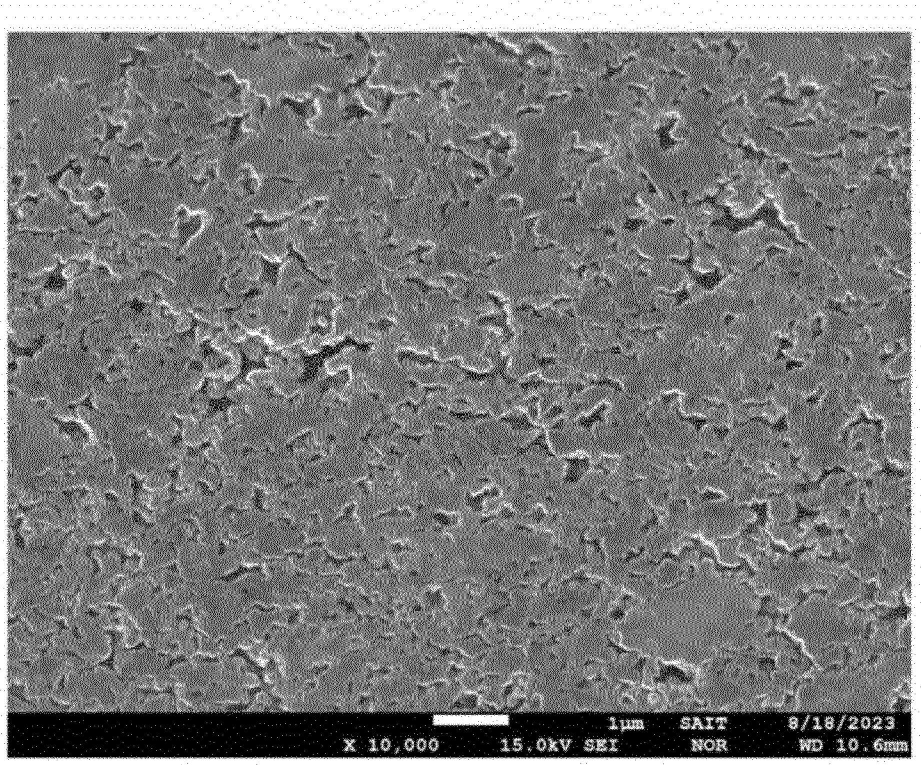

FIG. 3D

C K series

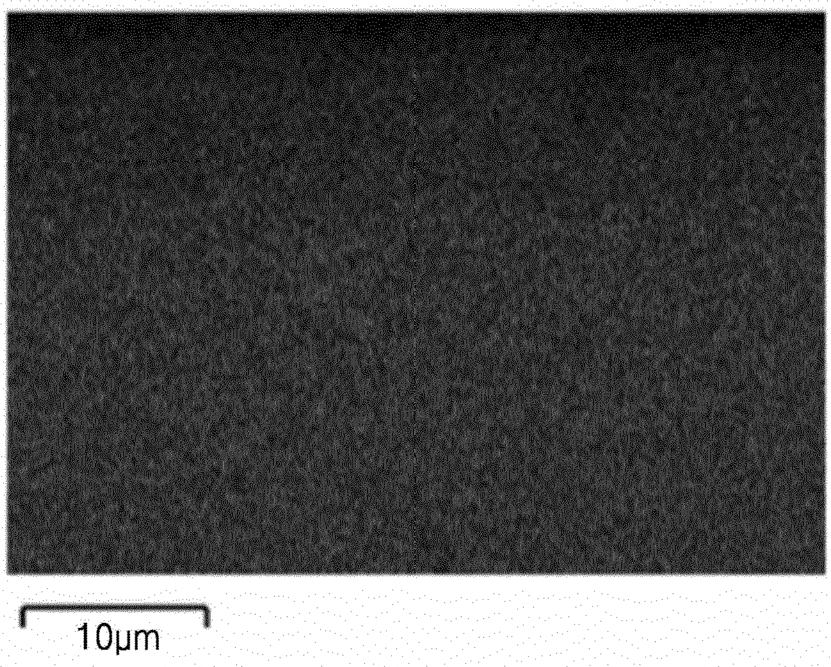

FIG. 3E

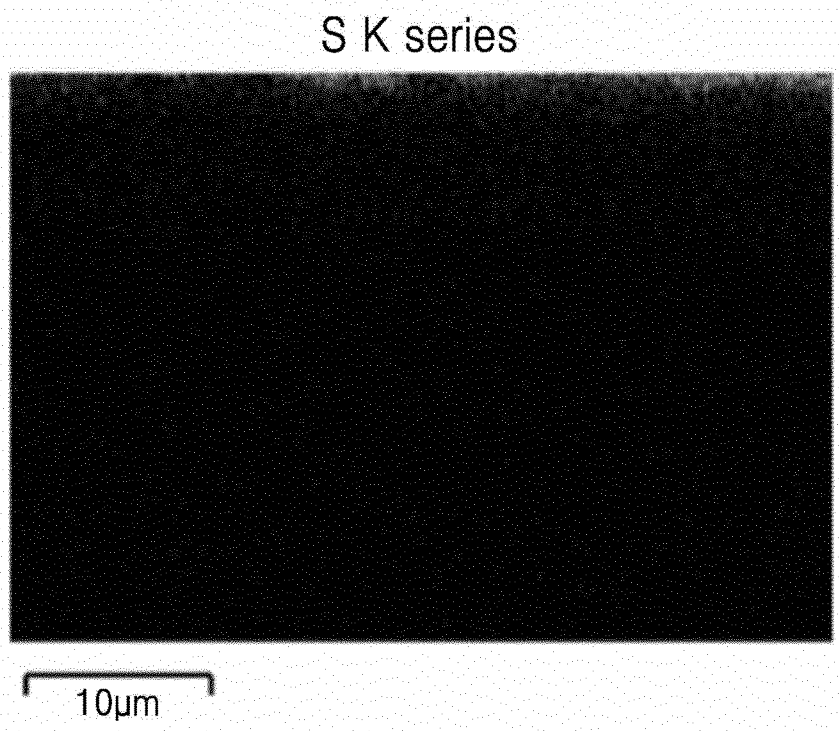

FIG. 3F

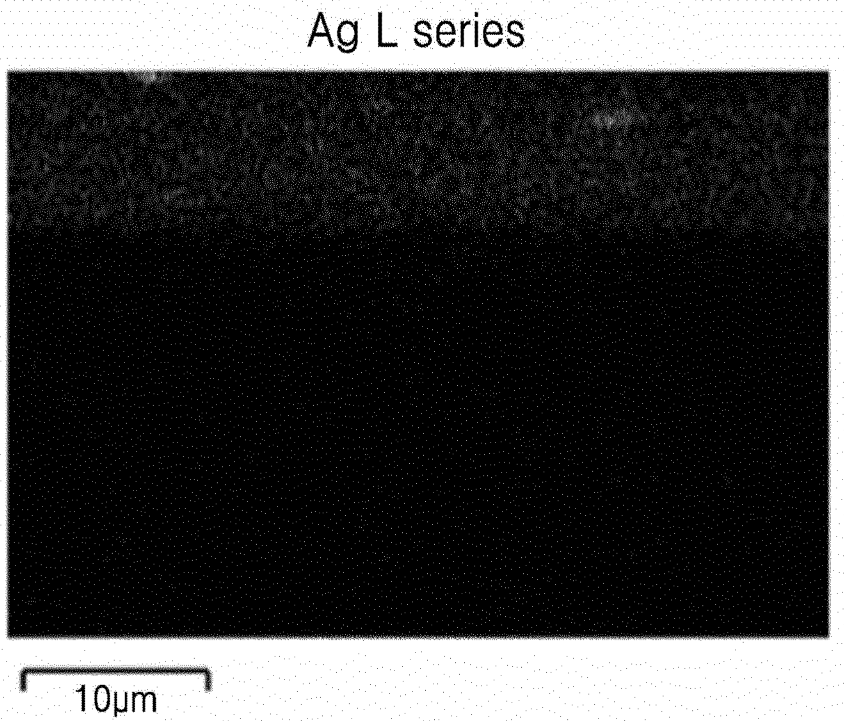

FIG. 3G

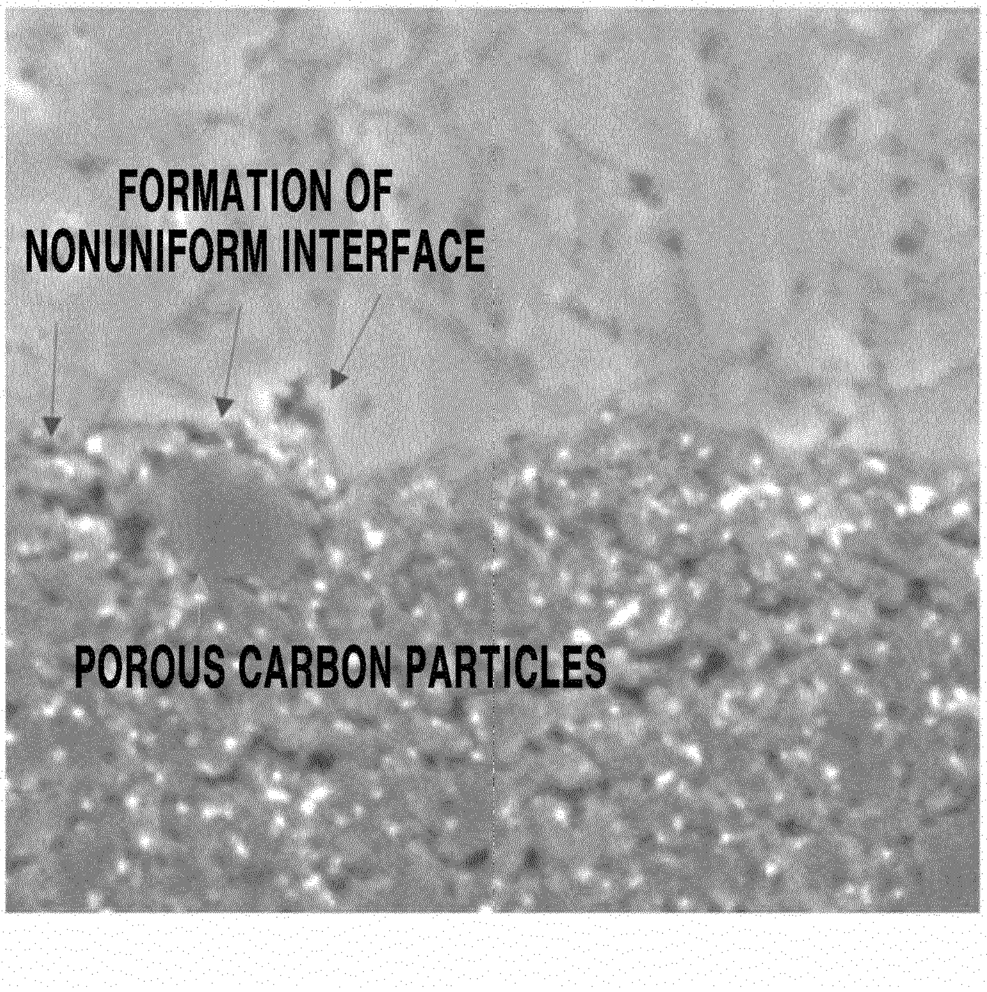
FORMATION OF
NONUNIFORM INTERFACE
POROUS CARBON PARTICLES

FIG. 4A

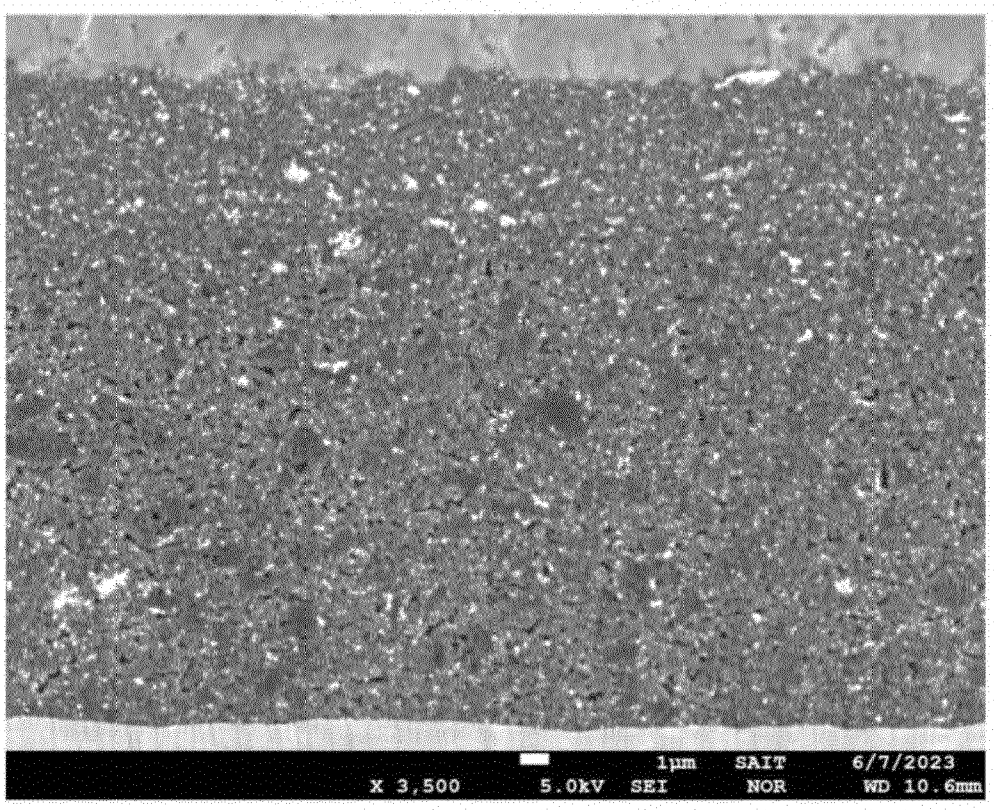

FIG. 4B

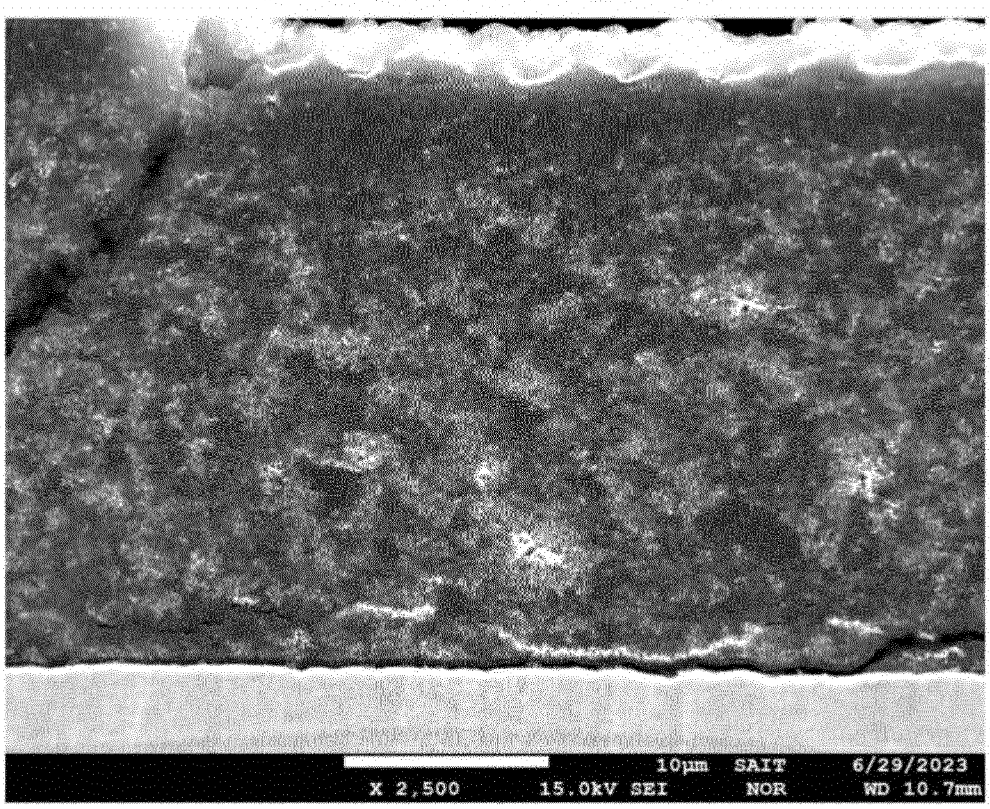

FIG. 5A

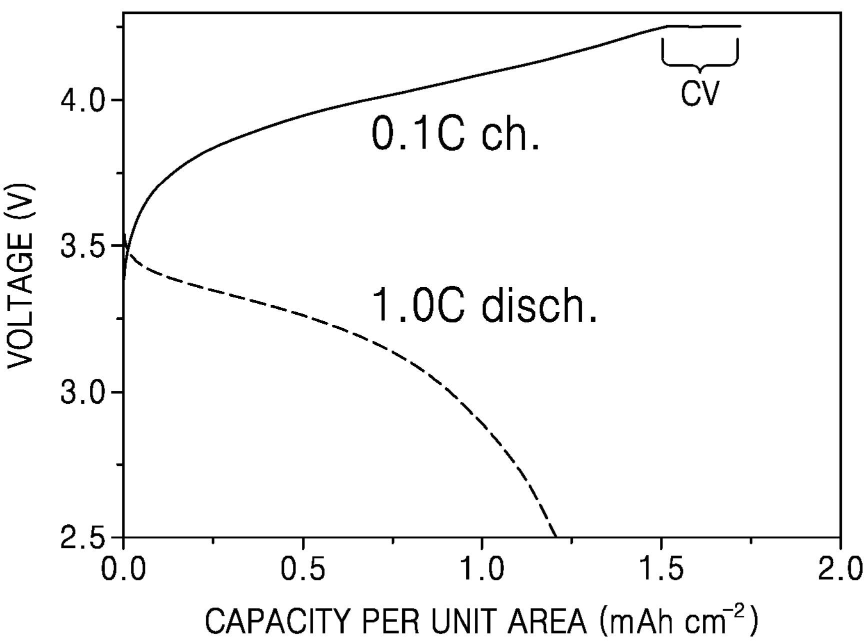

4.0
3.5
3.0
2.5
VOLTAGE (V)
0.0
0.5
1.0
1.5
2.0
CAPACITY PER UNIT AREA (mAh cm$^{-2}$)
CV
0.1C ch.
1.0C disch.

FIG. 5B

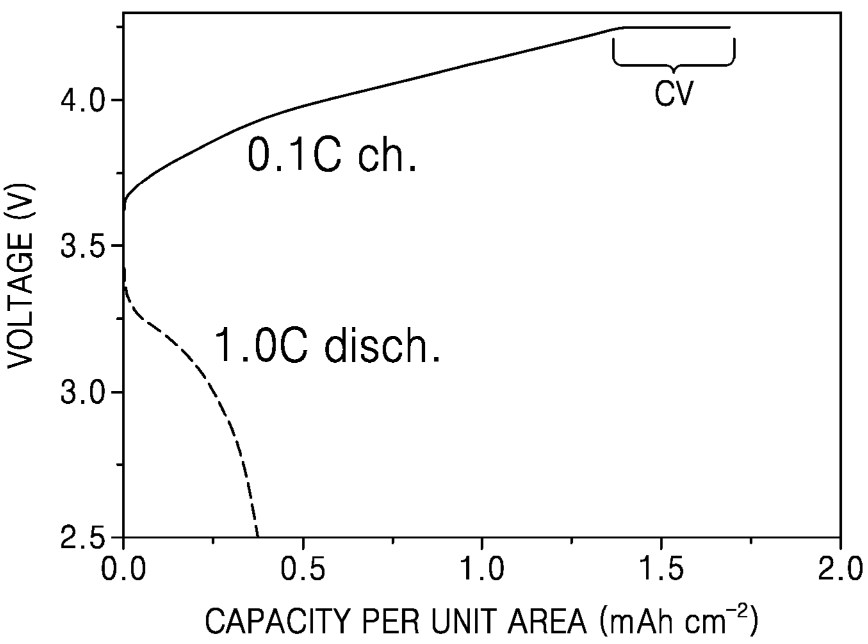

VOLTAGE (V)
4.0
3.5
3.0
2.5
0.0
0.5
1.0
1.5
2.0
CAPACITY PER UNIT AREA (mAh cm$^{-2}$)
CV
0.1C ch.
1.0C disch.

# FIG. 6A

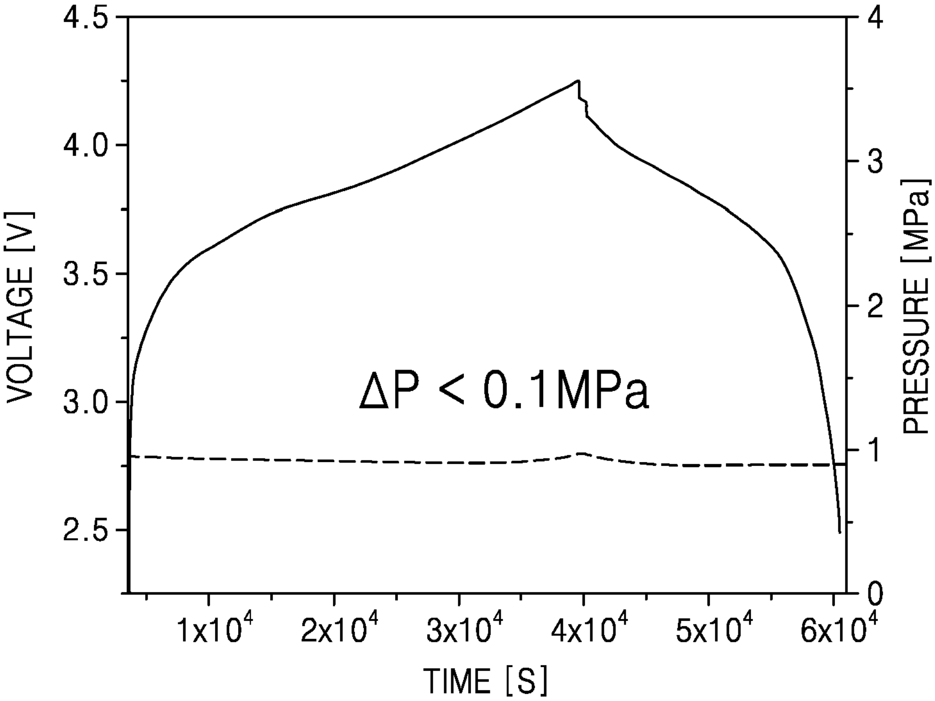
4.5
4.0
3.5
3.0
2.5
VOLTAGE [V]
4
3
2
1
0
PRESSURE [MPa]
ΔP < 0.1MPa
1x10^4
2x10^4
3x10^4
4x10^4
5x10^4
6x10^4
TIME [S]

FIG. 6B

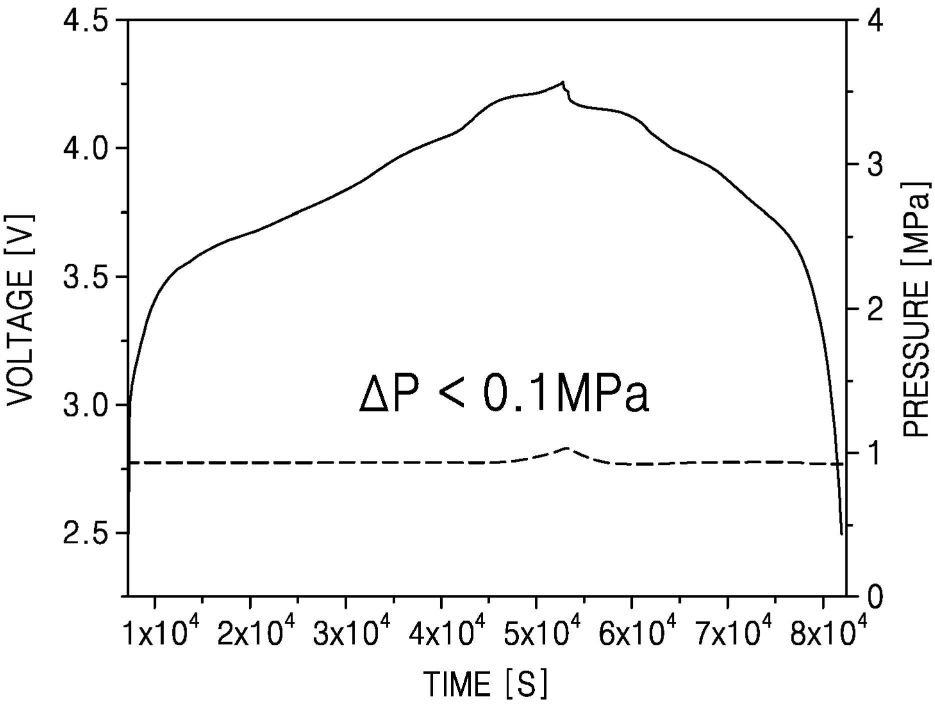
4.5
4.0
3.5
3.0
2.5
VOLTAGE [V]
4
3
2
1
0
PRESSURE [MPa]
ΔP < 0.1MPa
1x10^4 2x10^4 3x10^4 4x10^4 5x10^4 6x10^4 7x10^4 8x10^4
TIME [S]

FIG. 6C

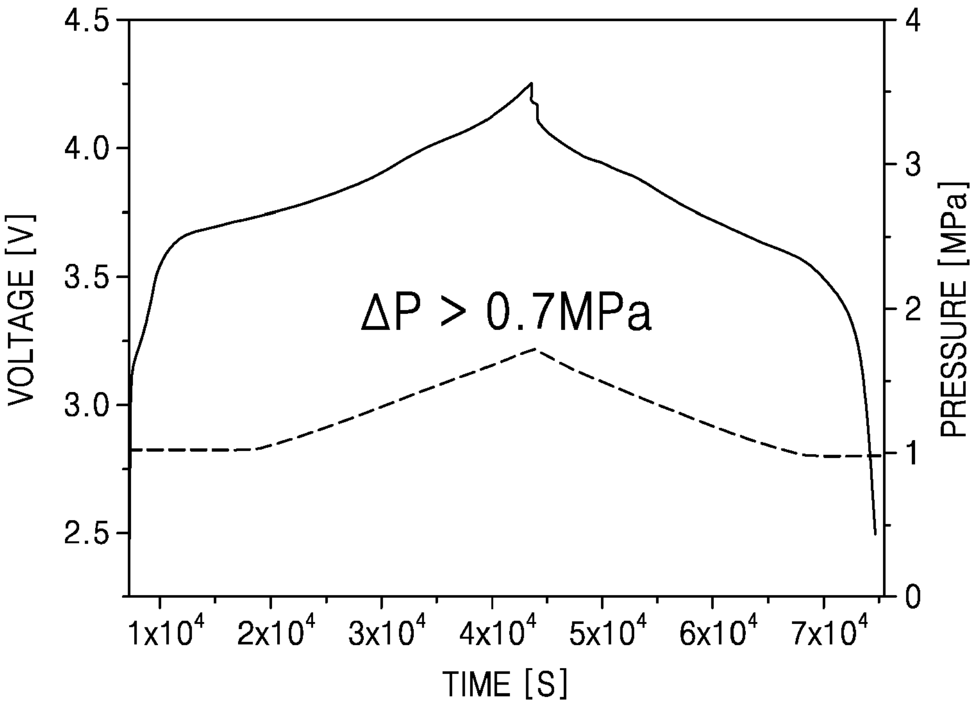
4.5
4.0
3.5
3.0
2.5
VOLTAGE [V]
4
3
2
1
0
PRESSURE [MPa]
ΔP > 0.7MPa
1x10^4
2x10^4
3x10^4
4x10^4
5x10^4
6x10^4
7x10^4
TIME [S]

FIG. 6D

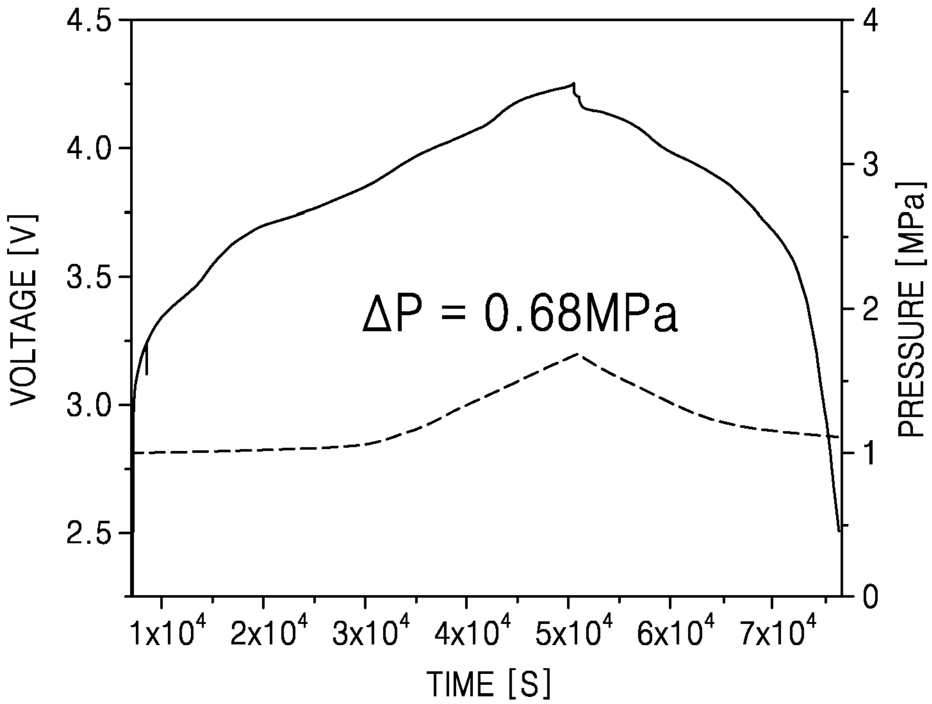
4.5
4.0
3.5
3.0
2.5
VOLTAGE [V]
4
3
2
1
0
PRESSURE [MPa]
ΔP = 0.68MPa
1x10^4 2x10^4 3x10^4 4x10^4 5x10^4 6x10^4 7x10^4
TIME [S]

# FIG. 6E

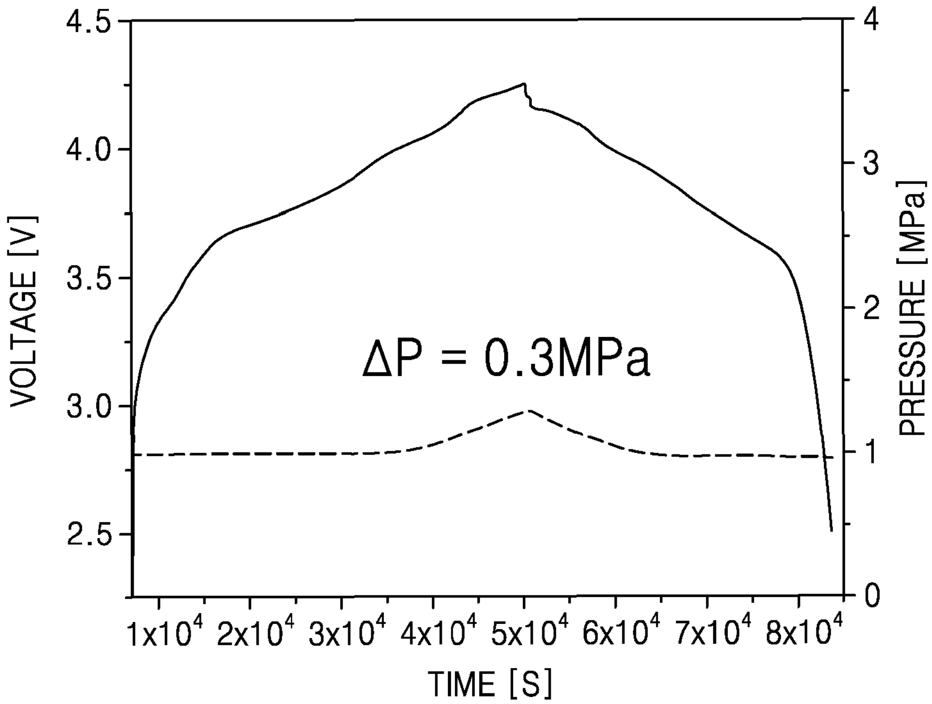
4.5
4.0
3.5
3.0
2.5
VOLTAGE [V]
4
3
2
1
0
PRESSURE [MPa]
ΔP = 0.3MPa
1x10^4 2x10^4 3x10^4 4x10^4 5x10^4 6x10^4 7x10^4 8x10^4
TIME [S]

# FIG. 6F

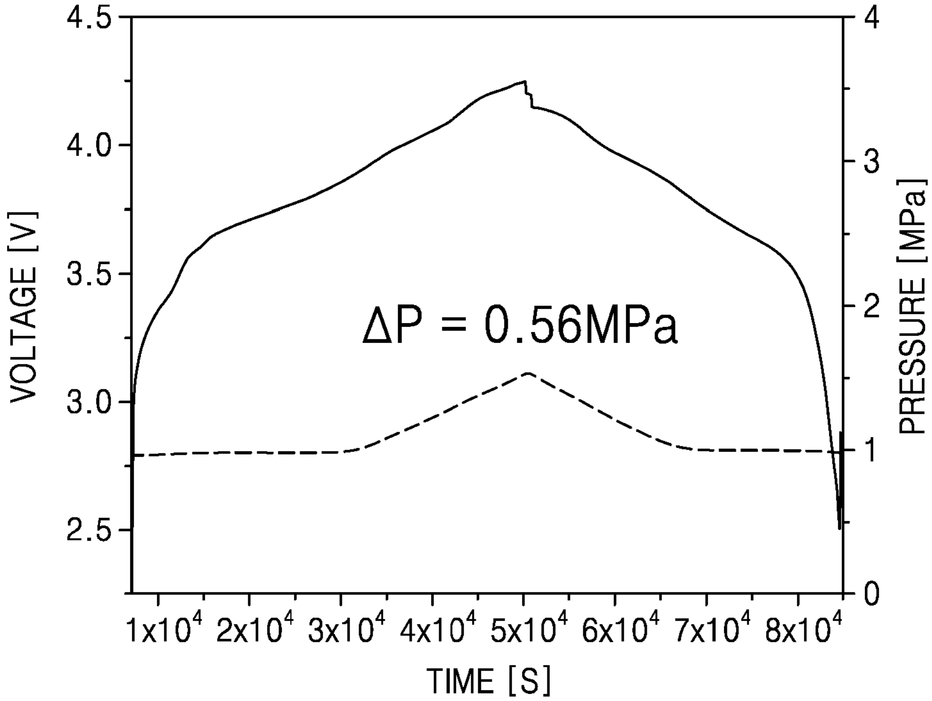
4.5
4.0
3.5
3.0
2.5
VOLTAGE [V]
4
3
2
1
0
PRESSURE [MPa]
ΔP = 0.56MPa
1x10⁴ 2x10⁴ 3x10⁴ 4x10⁴ 5x10⁴ 6x10⁴ 7x10⁴ 8x10⁴
TIME [S]

FIG. 7

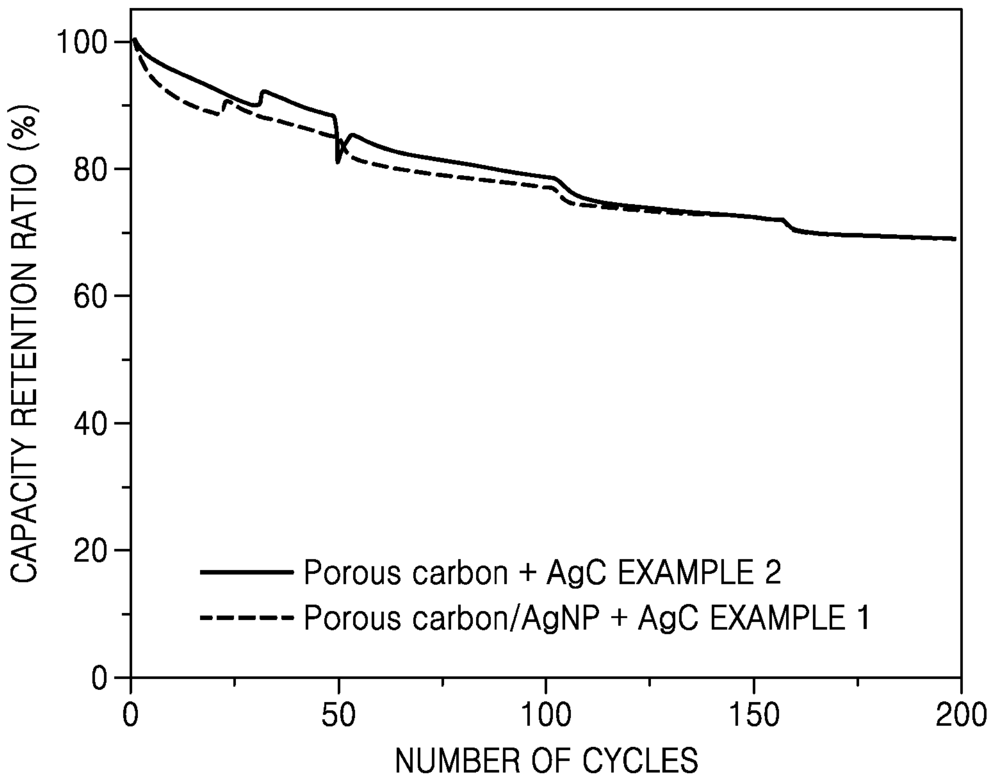
100
80
60
40
20
0
CAPACITY RETENTION RATIO (%)
0
50
100
150
200
NUMBER OF CYCLES
Porous carbon + AgC EXAMPLE 2
Porous carbon/AgNP + AgC EXAMPLE 1

FIG. 8A

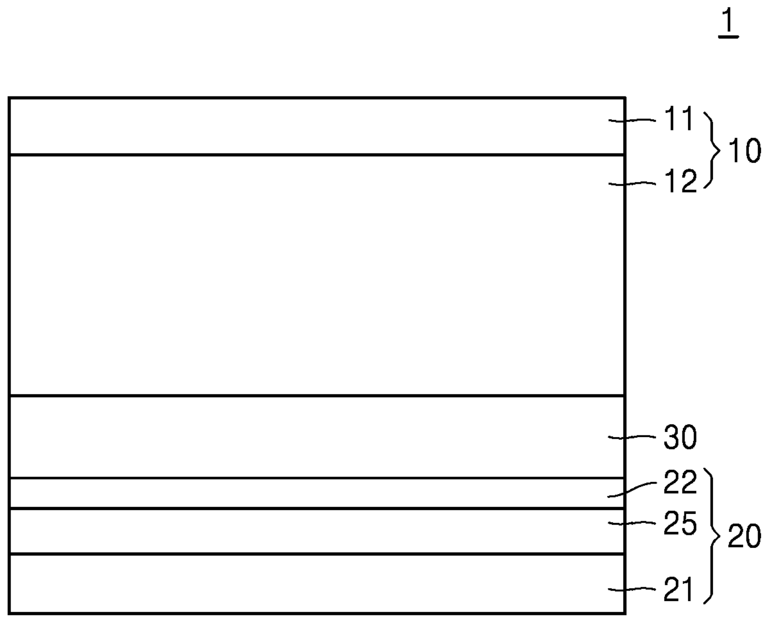

FIG. 8B

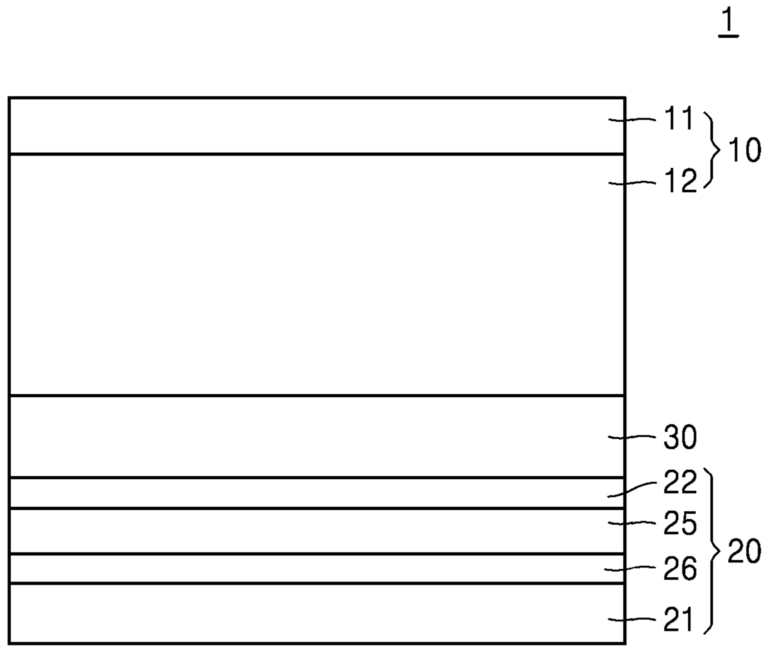

FIG. 9A

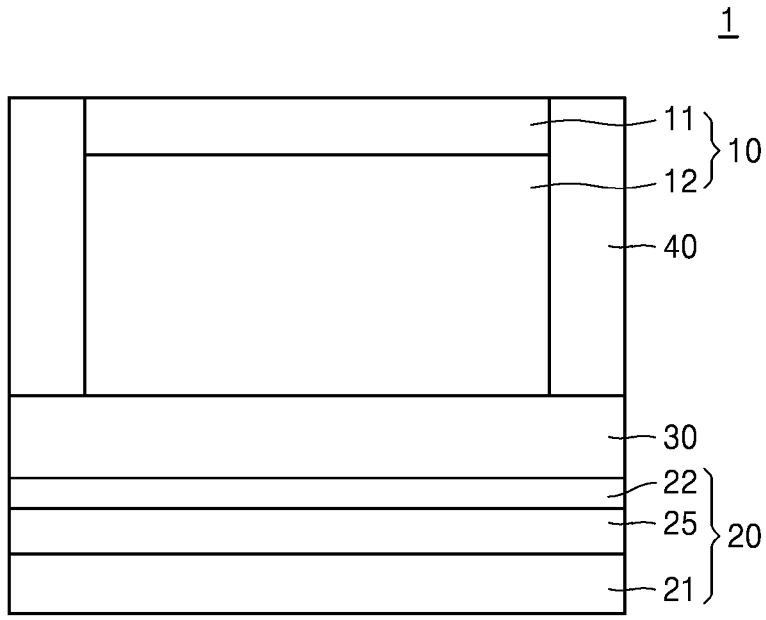

FIG. 9B

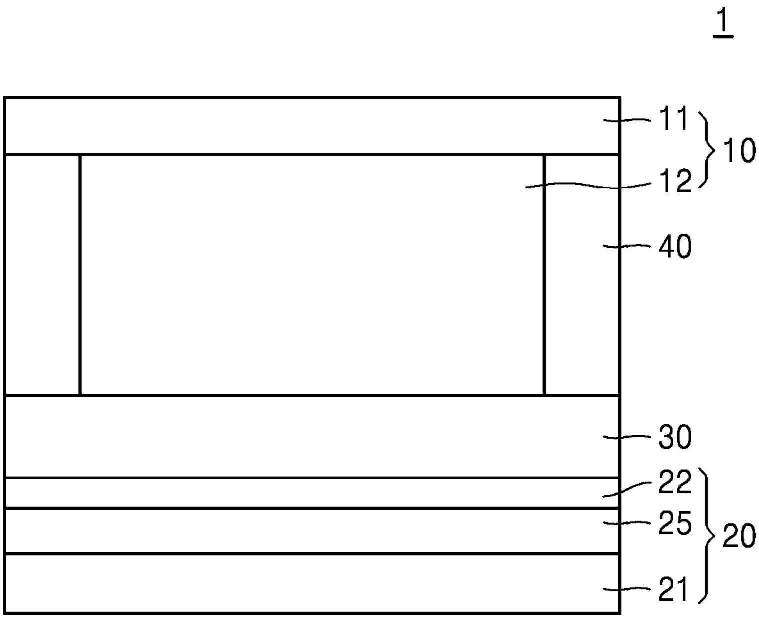

FIG. 10

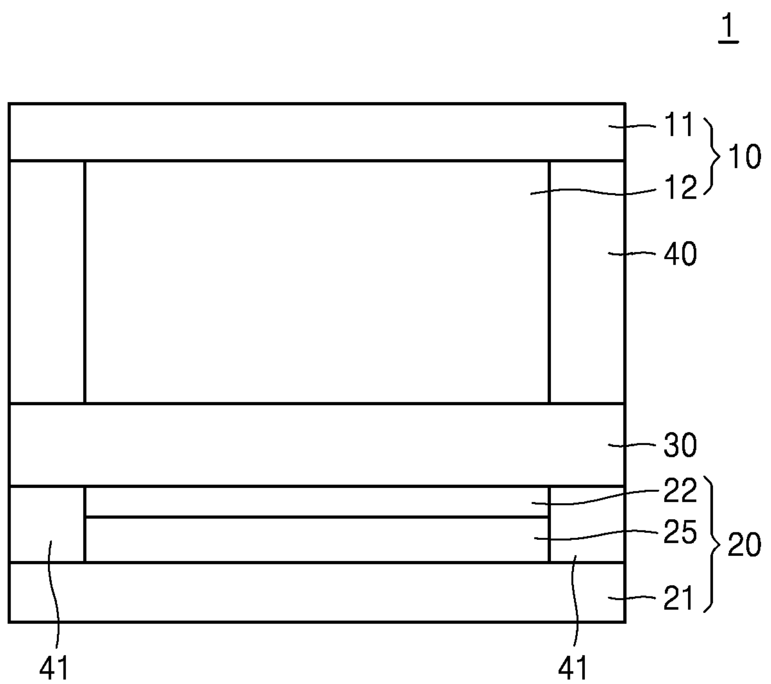

FIG. 11A

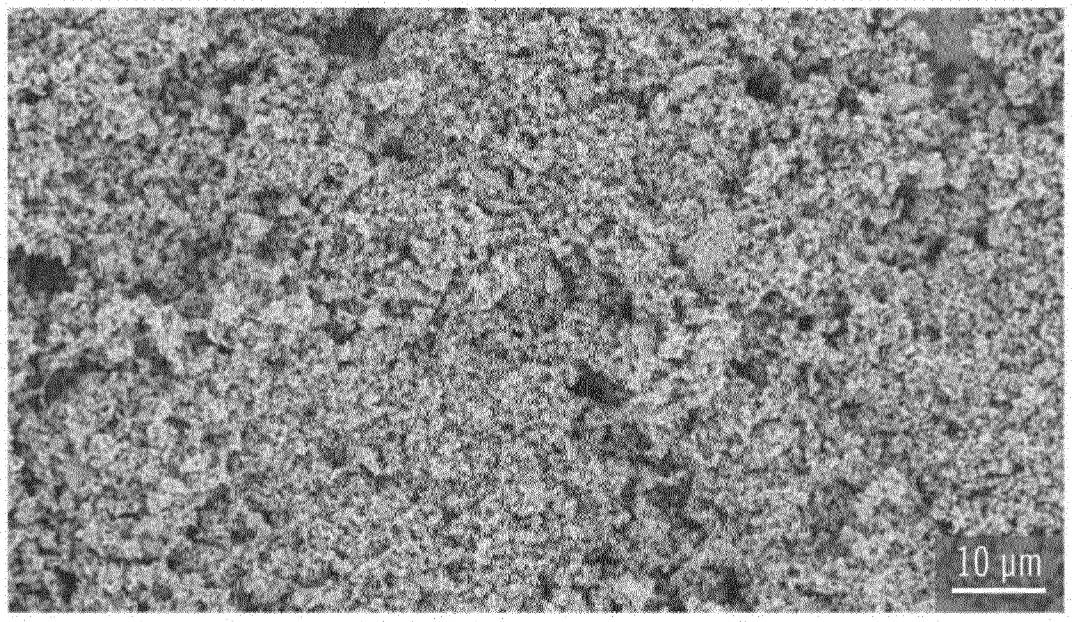

FIG. 11B

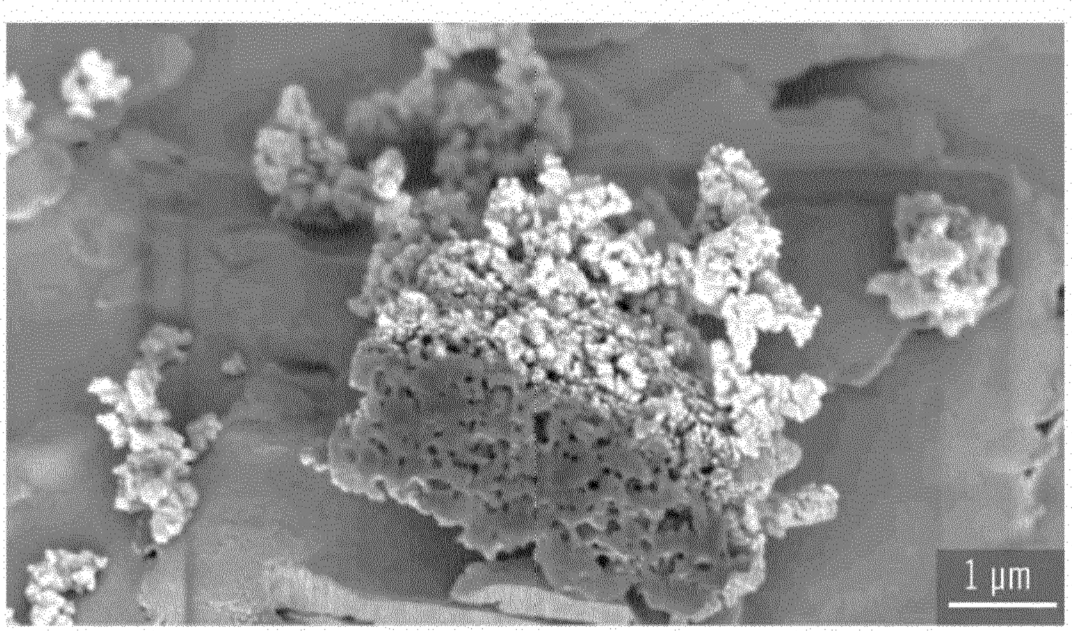

FIG. 12A

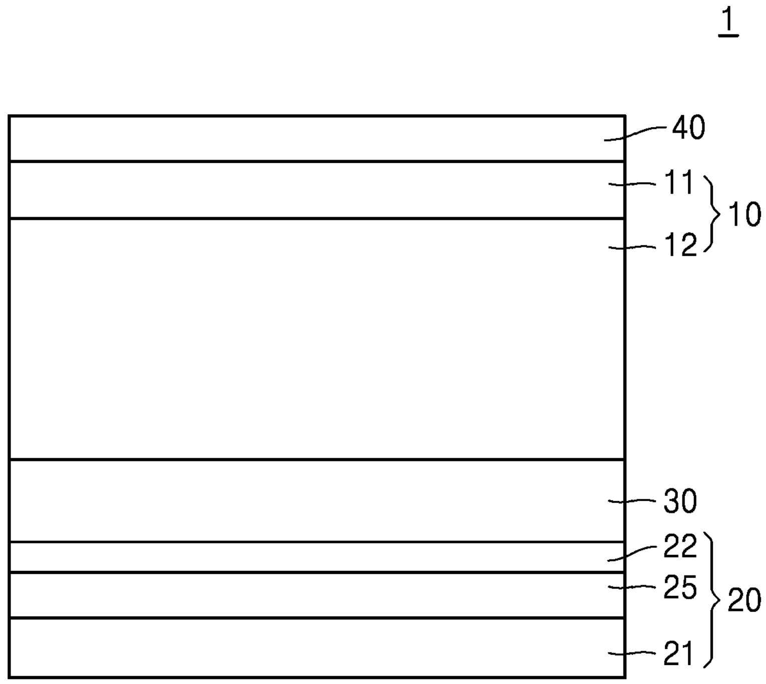

FIG. 12B

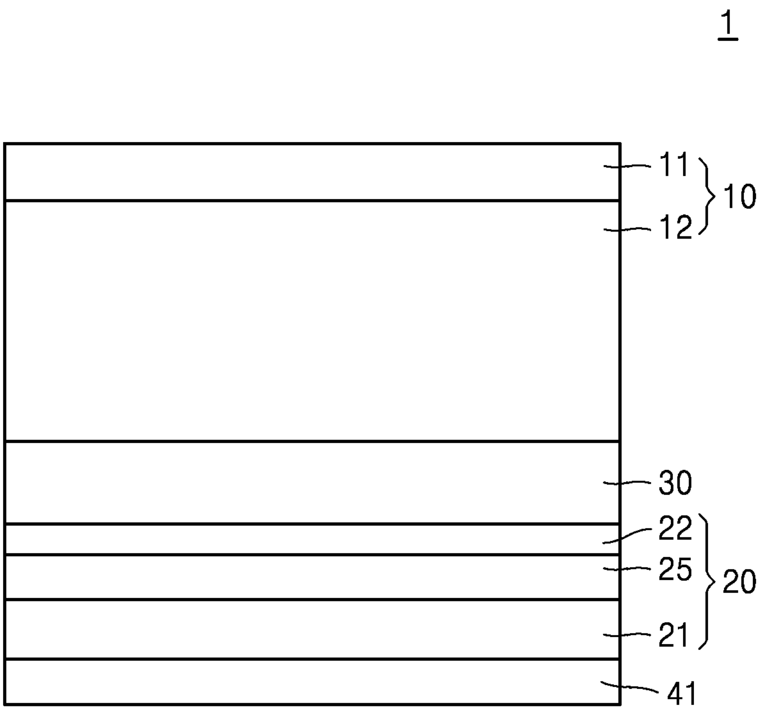

FIG. 12C

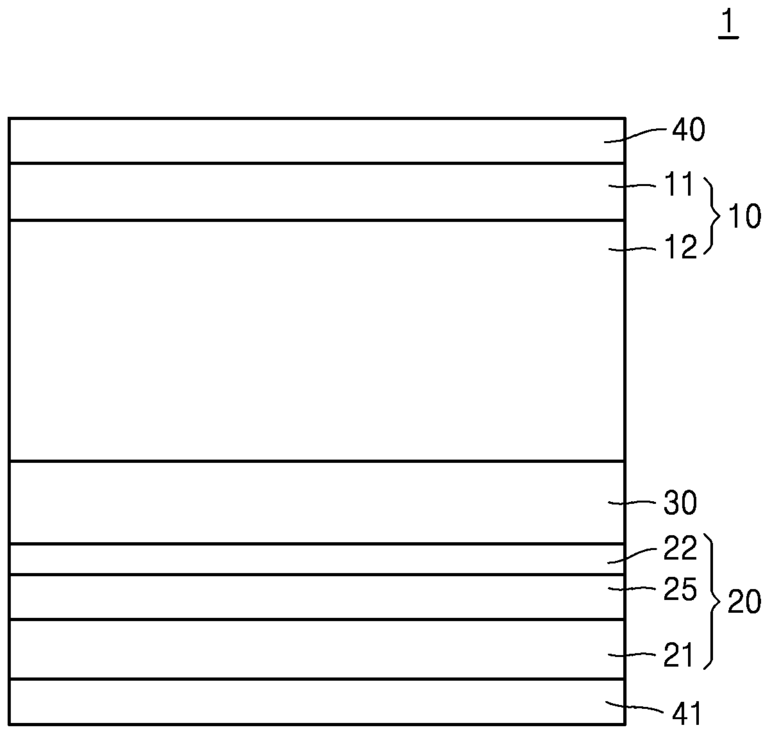

Europäisches Patentamt
European Patent Office
Office européen des brevets

# EUROPEAN SEARCH REPORT

Application Number
EP 24 19 7862

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/257606 A1 (KIM JUSIK [KR] ET AL) 19 August 2021 (2021-08-19)<br>* paragraph [0079] - paragraph [0083] *<br>* paragraph [0151] - paragraph [0157] *<br>* paragraph [0160] - paragraph [0161] *<br>* paragraph [0170] - paragraph [0174] *<br>----- | 1-15 | INV.<br>H01M4/133<br>H01M4/134<br>H01M4/587<br>H01M10/0525<br>H01M10/0562 |
| A | US 2022/223837 A1 (KIM JINKYU [KR] ET AL) 14 July 2022 (2022-07-14)<br>* examples 1-5 *<br>* claims 1-20 *<br>----- | 1-15 | |
| A | WO 2023/018162 A1 (SAMSUNG SDI CO LTD [KR]) 16 February 2023 (2023-02-16)<br>* examples 1-6 *<br>* claims 1-18 *<br>----- | 1-15 | |
| | | | TECHNICAL FIELDS SEARCHED (IPC) |
| | | | H01M |

The present search report has been drawn up for all claims

1

| Place of search | Date of completion of the search | Examiner |
|---|---|---|
| Munich | 1 February 2025 | Kuhn, Tanja |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# ANNEX TO THE EUROPEAN SEARCH REPORT ON EUROPEAN PATENT APPLICATION NO.

EP 24 19 7862

This annex lists the patent family members relating to the patent documents cited in the above-mentioned European search report. The members are as contained in the European Patent Office EDP file on
The European Patent Office is in no way liable for these particulars which are merely given for the purpose of information.

01-02-2025

| Patent document cited in search report | Publication date | Patent family member(s) | Publication date |
|---|---|---|---|
| US 2021257606 A1 | 19-08-2021 | EP 3869584 A1 | 25-08-2021 |
| | | US 2021257606 A1 | 19-08-2021 |
| US 2022223837 A1 | 14-07-2022 | EP 3985757 A1 | 20-04-2022 |
| | | JP 7301926 B2 | 03-07-2023 |
| | | JP 2022065651 A | 27-04-2022 |
| | | KR 20220050300 A | 25-04-2022 |
| | | US 2022223837 A1 | 14-07-2022 |
| | | US 2024396020 A1 | 28-11-2024 |
| WO 2023018162 A1 | 16-02-2023 | CN 118176597 A | 11-06-2024 |
| | | EP 4386881 A1 | 19-06-2024 |
| | | JP 2024531215 A | 29-08-2024 |
| | | KR 20230023210 A | 17-02-2023 |
| | | US 2024105943 A1 | 28-03-2024 |
| | | WO 2023018162 A1 | 16-02-2023 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 102510548
- KR 102484569